# EUROPEAN PATENT APPLICATION

(11) **EP 4 209 125 A1**
(43) Date of publication of application: **12.07.2023**
(21) Application number: 21893524.5
(22) Date of filing: 06.09.2021
(51) Int. Cl.: A01G 13/02, A01G 13/00

(54) **METHOD FOR USING PLANT MATERIAL TO SIMULTANEOUSLY CONTROL WEEDS AND PLANT TARGET PLANT**

(30) Priority: 04.09.2020 CN 202010919376
(71) Applicant: Zhejiang University, Hangzhou, Zhejiang 310058 (CN)
(72) Inventor: ZHU, Jinwen, Zhejiang 310058 (CN)
(74) Representative: AWA Sweden AB
(86) International application number: PCT/CN2021/116802
(87) International publication number: WO 2022/105373

(57) **Abstract**

A method for using a plant material to simultaneously control weeds and plant a target plant, comprising the following steps: a plant material having a thickness of 0.1 ~ 12 cm is covered on a carrier to form a plant material layer, in the covering period, a period near to crop planting, and after planting, the water content of the plant material is controlled, a target plant is planted on the surface of the plant material layer or in the plant material layer, thus allowing seedlings and/or seeds of a target plant such as rice to survive on straw such as oilseed rape, and then the root system penetrates the straw layer downwards to enter a carrier such as soil, and the plant grows healthily. The present method can achieve a good weed control efficacy and a higher target plant survival rate. Relative to the conventional method of planting target plants in soil, the present invention is a major innovation in crop cultivation methods.

## Description

### Technical field

The invention relates to a method for planting crops, in particular to a method for simultaneously controlling weeds and planting target plants by utilizing plant materials.

### Background

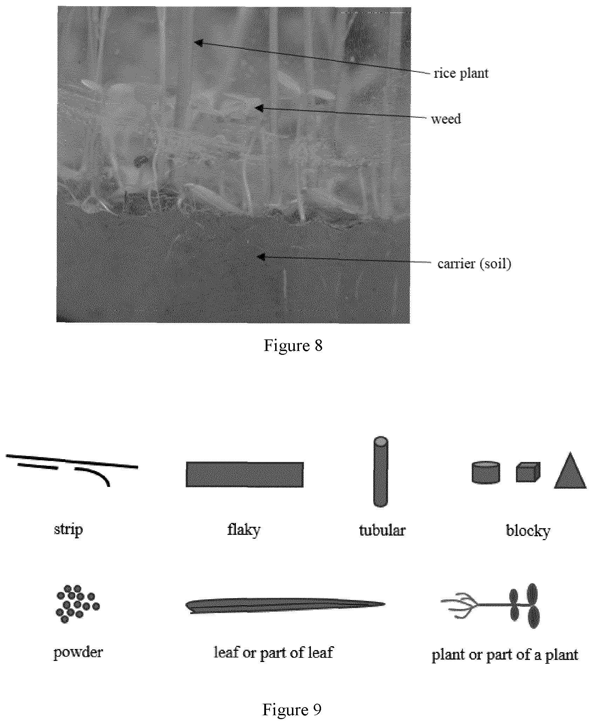

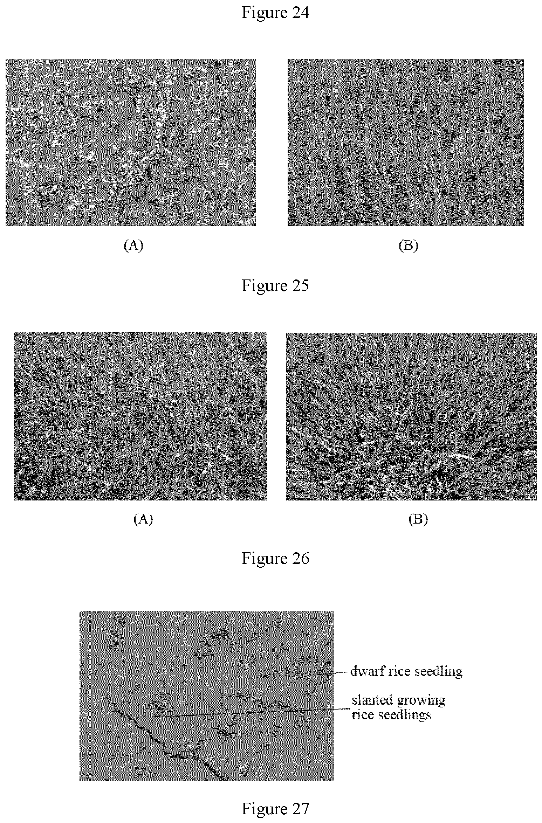

The conventional planting methods for such as crops are planting after soil ploughing or zero tillage planting. Weeds grow along with cultivated plants and compete with plants for sunshine, water, and fertilizer, and are one of the main harmful organisms that affect the growth of cultivated plants. There are more than 1,400 kinds of weeds, and there are more than 200 kinds of weeds in paddy fields. Among them, barnyardgrass, difformed galingale, sheathed monochoria, eared redstem, chinese sprangletop, and climbing seedbox are particularly harmful (Figure 8, Figure 25A). After long-term evolution, weeds have formed biological characteristics adapted to crop fields, including polymorphism of morphological structure, polymorphism of life history, diversity of nutritional patterns, strong adaptability, stress resistance, plasticity, mimesis, strong (growth) potential, heterozygosity, diversity of reproduction, multi-fruiting, and seed shattering. For example, the amount of seeds in a single eared redstem can be as high as 800,000. Therefore, weeds are highly adaptable and competitive. From 2015 to 2017, the average area of weeds infesting in China was about 0.096 billion hectare, and the control area was about 0.105 billion hectare. Despite the adoption of various prevention and control measures, the harm of weeds on farmland in China continued to increase, and the area of weeds infesting in 2017 increased by 16.3% compared with that in 2007. Food losses caused by weeds are very serious, according to the statistics of the relevant departments of world food production, about one-tenth of the world's crop output is lost due to the harm of weeds in farmland every year. In recent years, the annual food loss caused by weeds infesting in my country has exceeded 3 million tons, and the economic loss caused by invasive alien plants has reached more than 15 billion US dollars. Weeds and invasive alien plants have seriously threatened the safety of agricultural production in China.

At present, the control of weeds in farmland in China mainly relies on herbicides, and the efficacy of chemical weed control is getting worse and worse. Although the Ministry of Agriculture is implementing the "Double Reduction of Pestcides and Fertilizers", it is difficult to reduce the amount of herbicides. In 2015, the amount of herbicides used increased by about 20% compared with that in 2010, reaching 107,000 tons (in pure volume) (Fang Shu, Mei Han. General situation of pesticide market in China in 2010 and its prospect in 2011[J]. China Plant Protection, 2011, 32(3):37-39; Fang Shu. Analysis of the general situation of pesticide production and use in my country in 2015[J]. Pestcide market news, 2016(21)). At present, the main reason why weeds are difficult to control is their herbicide resistance. As of May 2018, 254 species of weeds in the world have developed resistance to 163 herbicides (Heap, I. The International Survey of Herbicide Resistant Weeds. Online. Internet. (2018/05/30) URL: http://www.weedscience.org), the problem of weed resistance has aroused widespread concern and concern all over the world. Weed resistance in China has increased rapidly in the past 10 years. So far, 30 species of weeds have developed resistance to 48 herbicides in 11 categories. Among them, the vicious barnyardgrass in paddy fields has developed resistance to 14 commonly used herbicides (Zhu J, Wang J, Ditommaso A, et al. Weed research status, challenges, and opportunities in China [J]. Crop Protection, 2018. DOI: 10.1016/j.cropro. 2018.02.001). The amount of chemical fertilizer used is very large. In 2016, the amount of nitrogen and phosphate fertilizer used was as high as 23.105 million tons and 8.3 million tons (in pure volume). Although the huge amount of chemical fertilizer application has ensured the continuous high yield of grain, its utilization rate is very low. Serious waste of chemical fertilizers not only increases production costs, but also exacerbates environmental degradation.

China has a wide variety of plants, and is rich in straw and other plant resources. It is the world's largest straw country, and the total amount of crop straw that can be collected is as high as 900 million tons. However, the treatment of straws of such as crops is a long-term problem. The current treatment method is mainly incineration, which not only causes serious waste of straw resources, but also seriously pollutes the environment. The utilization rate of other plant resources also needs to be improved.

In order to improve the utilization rate of plant resources, the conventional method puts the straw in the field back into the soil, which effectively utilizes the straw resources, but has little control efficacy on the weeds in the field.

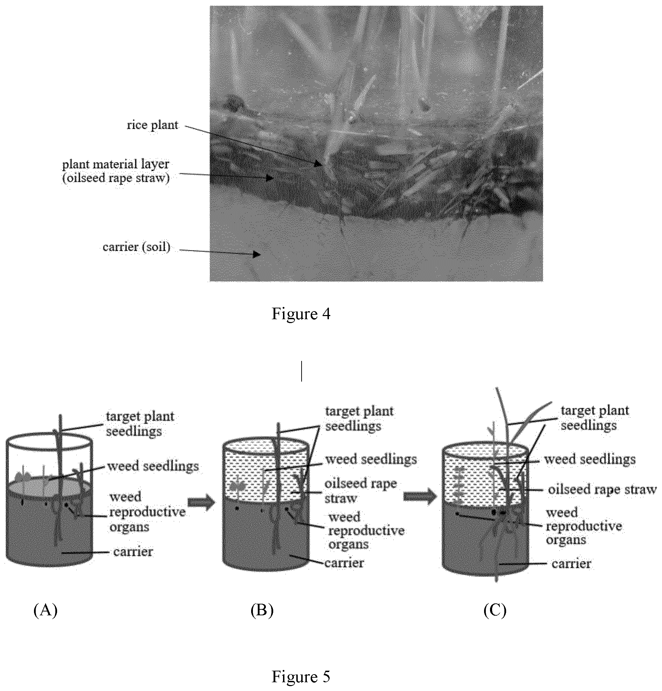

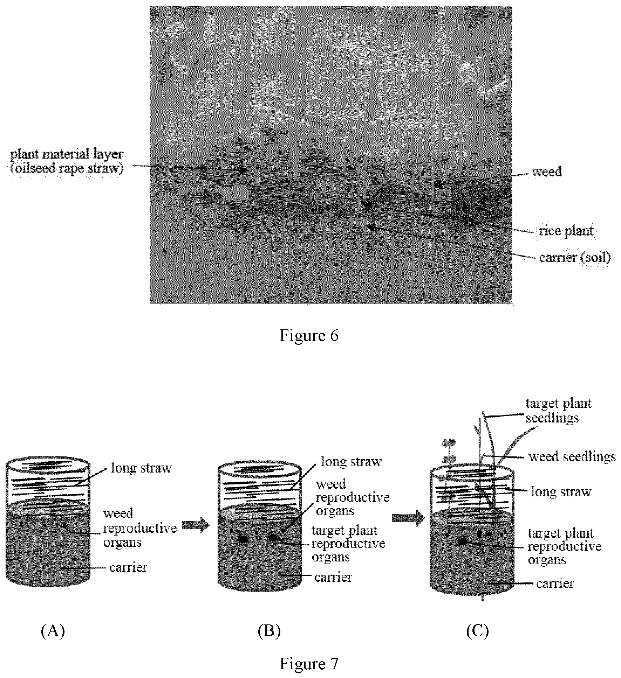

In order to effectively solve the problem of harmful weeds, the Chinese patent CN106342612A previously applied by the inventor disclosed a method for controlling weeds in paddy fields by mulching oilseed rape straw (application number: CN201610733699.1), covering sun-dried and sheared oilseed rape straw or oilseed rape pods and their mixtures after rice has been planted for a certain period of time can play a role in controlling weeds, but there are obvious limitations (Figure 5, Figure 6). First, because the rice is first planted and then covered with oilseed rape straw, the straw layer will easily overwhelm the direct seeded weaker rice seedlings, and the straw layer will have a shading effect on the late-emerging and dwarf rice seedlings, which will inhibit the emergence and growth of rice (Figure 5, Figure 6). For transplanting rice, the roots of rice are not embedded in the soil at the initial stage of transplanting, the rice seedlings themselves are not stable, and they are easily overwhelmed when the straw is broadcasted. Second, early after direct seeding of rice in order to avoid drowning rice seedlings, the field cannot be irrigated, which led to less coverage of straw water absorption, loose, light weight, not tight, and thus the suppression of weeds and shading effect is limited, weeds control efficacy is not ideal, as shown on the results of comparative example 1 in Table 1, 3mm thickness of oilseed rape straw control efficacy of weeds is only 68%; thirdly, the operation is cumbersome, and the straw turning under the sun to make it dry requires a large site and more labor. In the transplanting field, a small amount of straw is required every time and to be gradually broadcasted between rows, and then evenly dispersed in the field, with low labor efficiency and high labor cost. See Table 10. According to the practice calculation, for planting direct seeded rice by technology in the prior art, the labor cost is CNY 1619 per 666.7m² (the straw is bundled and transported, sunned for several days, crushed and bagged, stored and transported back to the rice field. There are about 3 more labors than the invention, according to CNY 180 per labor, the total increase cost is CNY 540). The existing technology is difficult to popularize and apply.

Another conventional method is that when the harvester harvests the previous crop, the straw is cut and covered on the ground, and then the seed of the subsequent crop is planted in the soil below the straw with the seeder. The method is shown in Fig.7. This technology has the advantages of straw returning to the field and no-tillage direct seeding, which does improve labor productivity. However, because the straw is too long (usually more than 8 cm), and there shall be no water layer in order to facilitate the emergence of crop seeds, the gap after straw mulching is large, allowing weeds to grow from the gaps, and leading to very poor weed control efficacy.

As people pay more and more attention to the safety of agricultural products and ecological security, environmentally friendly weed control methods are developed in the practice of weed control, such as biological control, physical control and other weed control methods. However, these methods all have some defects or limitations, therefore cannot meet the needs of large-scale weed control in agricultural production.

In agricultural production, the target plants are planted in the soil in conventional planting technology, and the weed control efficacy of the existing technology is not ideal, and the planting survival rate of target plants such as rice is not high, especially the labor cost is high. The technology in the prior art cannot achieve three effects at the same time: low-cost, controlling weeds and ensuring the survival rate of target plants.

The "control of weeds" in the present invention refers to controlling the harmful effect of weeds to the growth of target plants according to the following standard: 10 days after taking measures to control weeds, and 15 days after planting of the target plants to before harvesting, the weed density is lower than 200 plant/m², weed density reduction ≥ 50% and less than 80%, or weed fresh biomass reduction ≥ 50% and less than 80%. "Guaranteed survival rate of target plants" refers to the survival rate of target plants ≥ 10%. The survival rate is calculated as: the survival rate of plants = the number of surviving plants/the total number of planted plants* 100%.

### Summary of Disclosure

In view of the deficiencies of the prior art, the present invention provides a method for simultaneously controlling weeds and planting target plants by utilizing plant materials. This method changes the conventional method, makes full use of plant resources such as crop straw, and plants the target plants on the surface of the plant material layer or in the plant material layer. Weeds are controlled when they are the most vulnerable, and the water content of the plant material layer, and the water content during each specific period (covering period, the period of planting crops, and after planting) is accurately controlled, especially there is the synergistic effect of different planting methods for different target plants. At the same time, the method achieves low cost, controls weeds and ensures the survival rate of planting target plants, which solved the problem of existing technology. Specifically, taking the planting of rice as an example, the present invention can achieve a very good results that the weed density reduction can reach up to 99.1% at 30 days after planting, and the rice survival rate at 10 days after planting can reach 100% (see Example 41). Moreover, another unexpected effect brought about by the method of the present invention is that the operation is simple and convenient. After the previous crop is harvested, the straw is directly pulverized, and the straw are scattered in the field on-site, and then the next target plant can be planted after irrigating for an appropriate time. The agricultural time is greatly saved, farming time and labor are saved. When the technology of the present invention is used to plant direct seeded rice, the labor cost per 666.7 m² is saved by 540 yuan compared with the prior art. The effect of increasing crop production and income is very significant. It cleverly solves the technical problems in production, provides an almost perfect solution for the planting of green and organic agricultural products, and represents the future development direction of green planting technology.

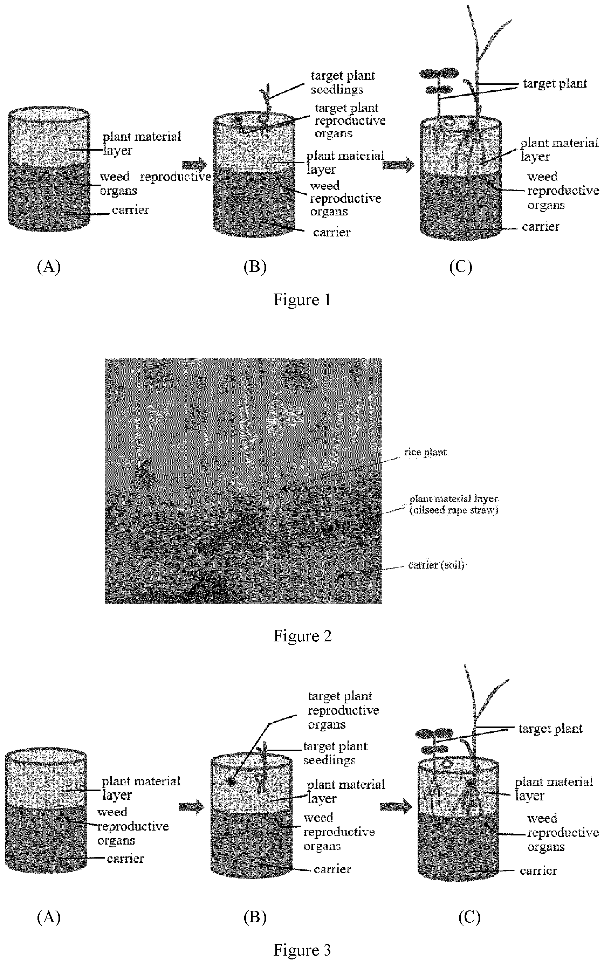

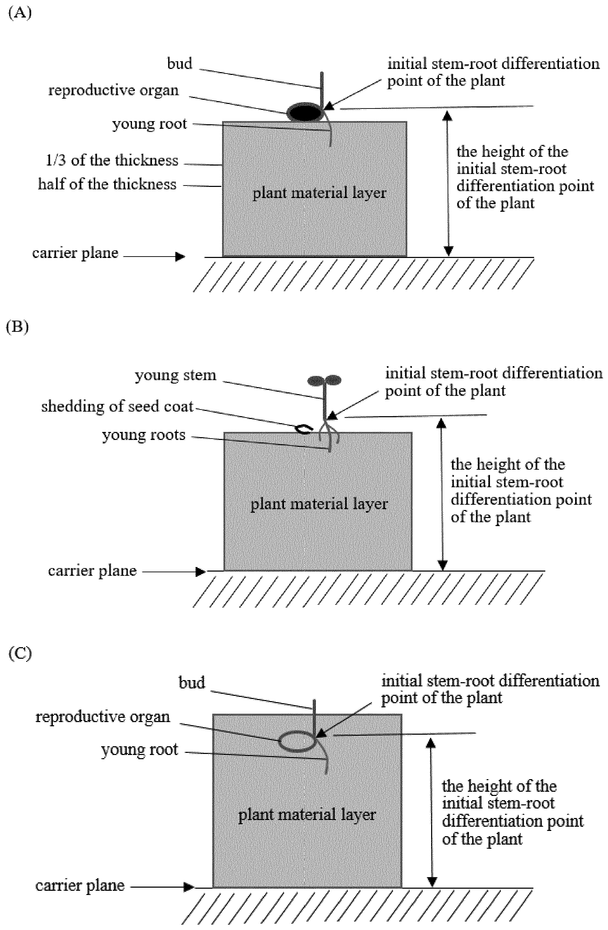

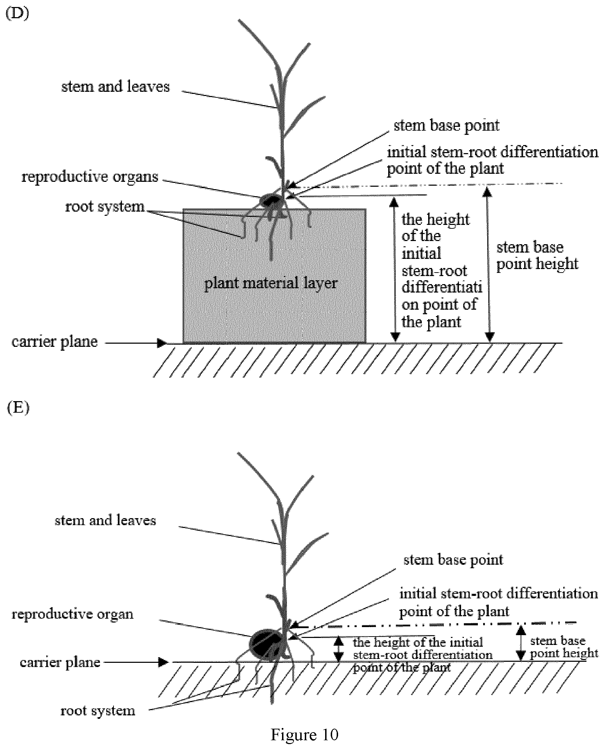

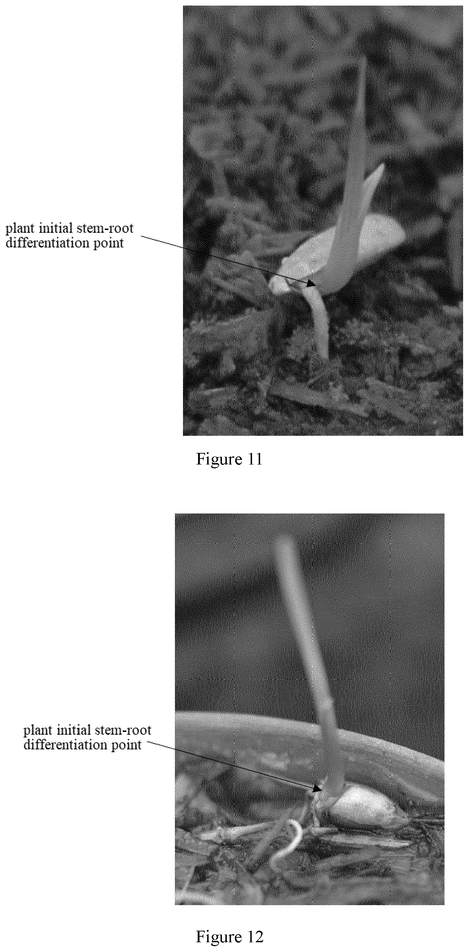

In the present invention, the definitions of the terms are as follows:
**Target plant:** refers to a plant or plant tissue that is intended to be cultivated or cultured, such as rice.
**Planting:** Intentionally cultivate target plants by sowing reproductive organs or transplanting seedlings (as shown in Figure 1 to Figure 8).
**The target plant can survive:** the survival rate of the planted target plant is greater than or equal to 10% and less than 50%, and the survival rate is calculated by: the survival rate of the plant = the number of surviving plants/the total number of planted plants* 100%.
**The target plant basically survives:** the survival rate of the planted target plant is greater than or equal to 50% and less than 75%.
**High survival rate of target plants:** the survival rate of planted target plants is ≥75%.
**Depth of water level:** refers to the depth of the water above the plant material layer after the plant material is submerged in water, excluding the thickness of the plant material layer.
**Reproductive organ:** Any part of the plant body that can be used to propagate an individual, including, but not limited to, at least one of the roots, stems, leaves, flowers, fruits, seeds of the plant, or mixtures thereof.
**Young seedling:** the young plant just emerged from the reproductive organ, before the second true leaf of monocotyledonous plants, or before the second pair of true leaves of dicotyledonous plants (as shown in Figure 11 to Figure 16).
**Seedling:** refers to the growth stage of a plant after emergence and before flowering or fruiting.
**Direct seeding:** the method of growing plants directly with reproductive organs, without going through the process of seedling cultivation (see Figure 24B).
**Transplanting:** a planting method wherein first planting plants with reproductive organs to grow seedlings, and then cultivating seedlings.
**Throwing planting:** The reproductive organs or seedlings of the target plant are thrown into the air under the action of a certain force, and then fall to the surface of a certain material or fall into it under the action of gravity, such as throwing seedlings in paddy fields. The certain force may be applied by a human or a machine (e.g., a rice thrower), and a certain material refers to a substance that can make the reproductive organs or seedlings survive, such as plant material or soil.
**Seedling placing:** a planting method where the target plant's seedlings are placed on the surface or layer surface of a certain material, such as rice seedling placing in field, the certain material refers to a substance that can allow reproductive organs or seedlings to survive, such as plant material or soil.
**migration-planting:** methods of planting plants other than direct seeding, including but not limited to transplanting, seedling placing, and throwing seedlings.
**Carrier:** a substance that can carry other substances, and the carrier can be any one of soil, sand, stones, substrates, and containers, or a combination of any two or more of it. The containers are such as flower pots and pots.
**Carrier surface:** after a certain number of carriers are piled up, the part in contact with the air formed by the uppermost parts of the carrier adjacent to each other.
**In carrier:** the portion of the carrier below the carrier surface.
**Aquatic plants:** plants that can grow in water, usually in an environment containing water layers, such as rice *(Oryza sativa* L.)
**Dryland plants:** plants other than aquatic plants that usually grow in environments without water layers, such as wheat, oilseed rape, corn, soybeans, etc.
**Plant material:** material derived from plants (the types of plants are not limited, the parts are not limited), and can be selected from at least one or a mixture of any of the roots, stems, leaves, flowers, and fruits of any plant, including but not limited to oilseed rape straw, rice straw, wheat straw, chinese milk vetch stems and leaves or mixtures thereof, etc. The shape of the plant material is not limited (see Figure 9).
**Plant carbon-nitrogen ratio:** the mass ratio of carbon and nitrogen elements in plants, that is, the mass of carbon divided by the mass of nitrogen, which can be expressed as C/N.
**Plant material infiltration:** a state in which the interstices between the plant material fragments are substantially filled with water, but there is no water layer on the surface of the plant material layer (see Figure 24B).
**Saturated water content of plant material:** the percentage of water content when the plant material absorbs water to saturation at 25°C.
**Detection method for saturated water content of plant material:** crush the plant material to be tested to an average length of about 1 cm on the longest side. Take a representative 100 g of plant material and put it into a nylon mesh bag. Under the condition of 25°C, the nylon mesh bag is completely immersed in water for 48 hours; the nylon mesh bag is taken out from water, and when no water drips within 1 minute, weigh the total weight (T) of the plant material; then put the plant material into an oven at 80°C for 72 hours, and weigh the dry weight (S); calculate the saturated water content (P) of the plant material according to the formula P=(T-S)/T^{∗}100%; repeat 3 times to calculate the average value.
**Placing:** place the plant material on the carrier.
**Covering/Mulching:** the plant material is placed on the carrier to form a plant material layer, and the thickness of the plant material layer is 0.1 cm to 12 cm (see Figure 24B).
**Broadcast:** small objects are dispersed in the air under some force, and then fall onto the carrier.
**Surface of the plant material layer:** the part that is in contact with the air formed by the uppermost parts of the plant material adjacent to each other after a certain amount of plant material is placed on the carrier.
**In the plant material layer:** after a certain amount of plant material is placed on the carrier, a plant material layer of a certain thickness is formed, "in the plant material layer" refers to the part between the surface of the plant material layer and the carrier, including the interface between the plant material layer and the carrier; from the surface of the plant material layer to the carrier, the part with upper half of the thickness of the plant material layer is the upper half of the plant material layer (see Figure 10A); the part with upper one third of the thickness of the plant material layer is the upper 1/3 of the plant material layer. (see Figure 10A).
**Detection method of plant material layer thickness:** randomly select n survey points in the area to be tested, where n is a positive integer greater than or equal to 30. If necessary, drain the water on the carrier before testing until 90% or more of the carrier surface is not flooded with water. The plant material within a diameter of 4 cm was carefully removed at each survey point to form a circular hole until the carrier under the plant material layer was exposed, and the position of the lower surface of the plant material layer was determined. Place a plastic ruler with a length, width and height of about 200*30*2mm flat above the round hole, and use a ruler with a millimeter scale to measure the vertical distance from the lower surface of the flat ruler to the lower surface of the plant material layer. Calculate the average value of the n measured values as the thickness value of the plant material layer to be tested.
**Size of plant material:** The length of the longest side of the plant material, which refers to the maximum distance between two endpoints in any direction of the plant material fragment (see Figure 27).
**Average size of plant material:** the average size of 100 or more pieces of plant material fragment randomly taken.
**Plant material residue layer:** a layer of visible material left over from the plant material layer after a certain period of time.
**Plant material residue layer thickness:** the vertical distance between the upper and lower surfaces of the plant material residue layer.
**Detection method of plant material residue layer thickness:** In the area to be tested, randomly select n survey points, where n is a positive integer greater than or equal to 30. If necessary, drain the water on the carrier before testing until 90% or more of the carrier surface is not flooded with water. At each survey point, carefully remove the plant material residue within a diameter of 4 cm to form a circular hole until the carrier under the plant material residue layer is exposed, and determine the position of the lower surface of the plant material residue layer. Place a plastic ruler with a length, width and height of about 200*30*2mm flat above the round hole, and use a ruler with a millimeter scale to measure the vertical distance from the lower surface of the flat ruler to the lower surface of the plant material layer. Calculate the average value of the n measured values as the thickness value of the residual layer of plant material to be tested.
**Complete decomposition:** decomposition is the process of decomposing and destroying a large area of plant tissue and gradually disappearing of the original shape. Complete decomposition is defined as the mass of visible tangible matter of plant material remaining after rot is less than 10% of the initial mass.
**Plant nutrition:** natural or synthetic substances that can provide nutrients required for plant growth, such as substances that can provide nitrogen, phosphorus, potassium and trace elements, specifically, such as urea, compound fertilizers.
**Composting:** composting plant material by heat.
**The initial stem-root differentiation point of the plant:** the boundary between the stem and the root system on the seedling in the early stage of plant germination, from which upside is the stem and downside is the root system (as shown in Figure 10 to Figure 17). Figures 10 to 17 respectively show the effects of the method of the present invention used to plant target plants such as rice, wheat, oilseed rape, corn, cucumber, and soybean.
**The height of the initial stem-root differentiation point of the plant:** the vertical distance from the initial stem-root differentiation point of the plant to the plane of the carrier except for the plant material, expressed as HP.

If the soil surface is covered with plant material, and then the target plant is cultivated in the plant material layer, HP refers to the vertical distance from the initial stem-root differentiation point to the soil surface (as shown in panel A, B, C, and D in Figure 10).

### Detection method for the height of the initial stem-root differentiation point of plants:

Randomly select n representative plants of normal growth to be tested, where n is a positive integer greater than or equal to 30. Determine the position of the initial stem-root differentiation point, and use a ruler with a millimeter scale to measure the vertical distance between the initial stem-root differentiation point of each plant and the carrier plane other than the plant material layer. Calculate the average value of the n measured values as the value of the height of the initial stem-root differentiation point of the plant to be tested. When measuring the height of the initial stem-root differentiation point of weeds in the farmland, randomly select the normal growing weeds. When various species of weeds present, select n plants of various species of weeds in total, and preferably the number of each species of weeds is comparable (as shown in panel A, B, C, and D in Figure 10).

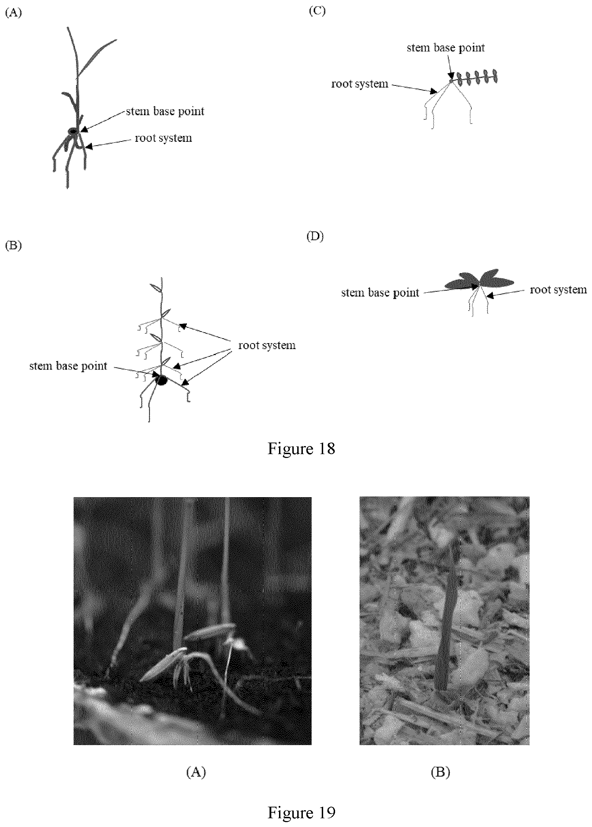

**Stem base point:** Stem base point is divided into three categories, for a plant with roots concentrating at the base of the stem (such as *Lindernia procumbens(Krock.)* Philcox), stem base point refers to the most bottom position on the stem without root system, visible to the naked eye, below which is root tissue or stem with root system (panel A in Figure 18); for a plant with roots on two or more parts of the stem or a basal creeping plant or liana plant (for example, *Leptochloa chinensis* (L.) Nees, alligator weed *Alternanthera philoxeroides*), stem base point refers to the most bottom position of the stem that does not have roots on the most bottom position of the plant (panel B,C in Figure 18); for a plant without obvious stems (for example, *Marsilea quadrifolia* L.), stem base point refers to the position of the highest rooting point on the plant body (panel D in Figure 18).

**Stem base point height:** the vertical distance between the stem base point of the plant and the carrier plane other than the plant material layer. If the farmland is covered with plant material on the soil surface, and then the target plant is cultivated on the plant material layer, the stem base point height of the target plant refers to the vertical distance between the stem base point of the target plant and the soil surface (as shown in panel D in Figure 10). The stem base point height of weeds in farmland refers to the vertical distance between the weed stem base point and the soil surface.

**Detection method of stem base point height:** randomly select n representative plants of normal growth to be tested, n is a positive integer greater than or equal to 30. Determine the position of the stem base point, and use a ruler with a millimeter scale to measure the vertical distance between the stem base point of each plant and the plane of the carrier below the plant material. Calculate the average value of n measured values as the stem base point height value of the plant to be tested. When measuring the stem base point height of weeds in the farmland, randomly select normal growing weeds. When multiple species of weeds present, select n plants of various species of weeds in total, and preferably the number of each species of weeds is comparable.

**The relative position of the stem base point and the plant material residue layer:** the relative position of the stem base point of the normal growing plant and the vertical space of the plant material residue layer.

**Detection method of relative position between stem base point and plant material residue layer:** randomly select n representative plants of normal growth to be tested, n is a positive integer greater than or equal to 30. Determine the position of the upper and lower surfaces of the plant material residue layer, and use a ruler with a millimeter scale to measure the vertical distance between the upper and lower surfaces of the plant material residue layer, which is the thickness of the plant material residue layer (H). Determine the position of the stem base point of the plant to be tested, and use a ruler with a millimeter scale to measure the vertical distance (X) between the stem base point and the upper surface of the plant material residue layer. When the stem base point is higher than the upper surface, it is recorded as a positive value; when the stem base point is lower than the upper surface, it is recorded as a negative value. When the stem base point is lower than the lower surface of the plant material residue layer, it is recorded as less than -H, and it is not necessary to measure the specific value. Calculate the average value of the n measured values as the relative position value of the stem base point of the plant to be tested and the plant material residue layer. When X is greater than 0, it means that the stem base point is higher than the plant material residue layer; when X is less than 0, if the absolute value of X is less than H, it means that the stem base point is located in the plant material residue layer; if the absolute value of X is less than 1/ 3H, it means that the stem base point is located at upper 1/3 of the plant material residue layer; if the absolute value of X is greater than H, it means that the stem base point is located below the plant material residue layer.

**Weeds:** plants other than the intentionally cultivated target plant. For example, in a paddy field, plants other than rice were weeds (Fig. 8, Panel A of Fig. 25, Panel A of Fig. 26).

**Weed density:** the number of weeds per unit area, usually refers to the number of weeds per square meter, the unit is "plant/m²".

**Detection method of weed density:** when the area to be detected is 120 hectares or less, the detection is performed n days after the target plant is planted and before harvest, n is a positive integer greater than or equal to 10. Take 20 or more survey points in the area to be detected, each survey point has an area of 0.25 m², which is determined by a square sampling frame with a side length of 50 cm formed by iron wire with a diameter of 2 mm or more. When selecting the survey points, when the number of fields in the area to be tested reaches 10 or higher, select 10 representative fields in different positions, and take 2 survey points on the diagonal line of each field; when the number of fields in the area to be detected is between 5 and 10, select 5 representative fields at different positions, and take 4 survey points on the double diagonal line of each field; when the number of fields in the area to be detected is less than 5, a considerable number of survey points are taken on the double diagonal line of each field. In addition, the survey point is 1 m or more away from the ridge or boundary. If necessary, the water in the field shall be drained before investigation until 90% or more of the area is not flooded by water. During the investigation, place the sampling frame horizontally at a height higher than the field plants, and then place the sampling frame vertically downward to the ground while keeping the sampling frame horizontal. During this process, if the sampling frame touches a plant, place the aboveground part of a plant into the frame wherein the base of the plant falls within the vertical projection range of the sampling frame, and move the aboveground part of a plant out the frame wherein the base of the plant falls outside the vertical projection range of the sampling frame. The number of surviving weeds in the sampling frame is investigated. When counting the number of weeds, the 10cm or higher tillers of Gramineae and Cyperaceae weeds grow out from the 5 cm radius circle from the base of the main stem of a weed and within 10 cm from the ground is recorded as an independent plant; the 10 cm or higher branch of broadleaf weeds grow out from the 3 cm radius circle from the base of the main stem of a weed and within 5 cm from the ground is recorded as an independent plant. Weeds (such as *Lemna minor* L.) whose plants are completely floating on the water surface under normal growth conditions are not counted. Calculate the average number of weeds in the 20 survey points and convert it into the number of weeds per square meter as the weed density value in the area to be detected. When the area to be tested exceeds 20 hectares, each 20 hectares must be detected separately.

**Weed density reduction:** when measures are taken to control weeds, reduction percentage of weeds in the treated area compared with the untreated control, and the untreated control refers to not taking any weeding measures.

**Detection method of weed density reduction:** 10 days after taking measures to control weeds, and from n days after the target plant is planted to before harvest, n is a positive integer greater than or equal to 10. When there is no repetition in the experimental area, 10 or more survey points are taken on the double diagonal lines of the control area and the treatment area, respectively, and the area of each survey point is equal to 0.25m², a square sampling frame with a side length of 50cm is formed by an iron wire with a diameter of equal to or higher than 2 mm is used to determine the area; when replicates were set in the experimental area, 3 or more survey points were taken on the double diagonal line of each replicated experimental area of the control and treatment group, respectively, and the total number of survey points of control and treatment group is 10 or more, respectively, and the area of each survey point was equal to 0.25m². In addition, the survey point is 1 m or more away from the ridge or boundary. If necessary, the water in the field shall be drained before investigation until 90% or more of the area is not flooded by water. During the investigation, place the sampling frame horizontally at a height higher than the field plants, and then place the sampling frame vertically downward to the ground while keeping the sampling frame horizontal. During this process, if the sampling frame touches a plant, place the aboveground part of a plant into the frame wherein the base of the plant falls within the vertical projection range of the sampling frame, and move the aboveground part of a plant out the frame wherein the base of the plant falls outside the vertical projection range of the sampling frame. The number of surviving weeds in the sampling frame is investigated. When counting the number of weeds, the 10cm or higher tillers of Gramineae and Cyperaceae weeds grow out from the 5cm radius circle from the base of the main stem of a weed and within 10 cm from the ground is recorded as an independent plant; the 10 cm or higher branch of broadleaf weeds grow out from the 3cm radius circle from the base of the main stem of a weed and within 5cm from the ground is recorded as an independent plant. Weeds (such as *Lemna minor* L.) whose plants are completely floating on the water surface under normal growth conditions are not counted. Calculate the average number of weeds in 10 or more survey points, and then calculate according to the following formula: Weed density reduction = (average number of weeds in control group - average number of weeds in treatment group)/average number of weeds in control group * 100%.

**Weed fresh biomass reduction:** when measures are taken to control weeds, the reduction percentage of weeds fresh weight in the treated area compared with the untreated control group. The untreated control means that no weeding measures are taken.

**Detection method of weed fresh biomass reduction:** 10 days after taking measures to control weeds, and from n days after the target plant is planted to before harvest, n is a positive integer greater than or equal to 10. When there is no repetition in the experimental area, 10 or more survey points are taken on the double diagonal lines of the control area and the treatment area, respectively, and the area of each survey point is equal to 0.25 m², a square sampling frame with a side length of 50 cm is formed by an iron wire with a diameter of equal to or more than 2 mm is used to determine the area; when replicates were set in the experimental area, 3 or more survey points were taken on the double diagonal line of each replicated experimental area of the control and treatment group, respectively, and the total number of survey points of control and treatment group is equal to or greater than 10, and the area of each survey point was equal to 0.25 m². In addition, the survey point is equal to or greater than 1 m away from the ridge or boundary. If necessary, the water in the field should be drained before investigation until 90% or more of the area is not flooded by water, and 95% or more of the weed stems and leaves are free of water droplets. During the investigation, place the sampling frame horizontally at a height higher than the field plants, and then place the sampling frame vertically downward to the ground while keeping the sampling frame horizontal. During this process, if the sampling frame touches a plant, place the aboveground part of a plant into the frame wherein the base of the plant falls within the vertical projection range of the sampling frame, and move the aboveground part of a plant out the frame wherein the base of the plant falls outside the vertical projection range of the sampling frame. Use scissors to cut the aboveground parts of the weeds in the sampling frame, put them into plastic bags and seal the bags, and place them in a cool and dry place to avoid the loss of water in the samples as much as possible. Be sure to avoid the impact of soil and other debris on the weeds on the fresh weight of the weeds. If necessary, the clipped weed samples can be washed with water, and then the water on the weeds can be drained with absorbent paper. Within 2 hours after sampling, use a weighing tool with an accuracy of 0.01 or higher g to weigh the fresh weight of weeds, and keep two decimal places when recording the value. Calculate the average fresh weight of weeds in 10 or more survey points, and then calculate according to the following formula: weed fresh biomass reduction = (average fresh weight of weeds in control area - average fresh weight of weeds in treatment area)/average fresh weight of weeds in control area* 100%.

**Control weeds:** Control the harmful effect of weeds to the growth of target plants. Its quantitative indicators are: 10 days after taking measures to control weeds, and 15 days after planting the target plant to before harvesting, the weed density is less than 200 plants/m², the weed density reduction is ≥50% and less than 80%, or the weed fresh biomass reduction is ≥50% and less than 80%.

**Effective weed control:** It means that the harmful effect of weeds is effectively controlled, so that it basically does not affect the normal growth of target plants or the harmful effect is relatively light. Its quantitative indicators are: 10 days after taking measures to control weeds, and 15 days after planting the target plant to before harvesting, the weed density is less than 100 plants/m², or the weed density reduction is ≥80% and less than 95%, or the weed fresh biomass reduction is ≥80% and less than 95%.

**Complete weed control:** means that the harmful effect of weeds is completely controlled so that the harmful effects to the target plants is minimal. The quantitative indicators are: 10 days after taking measures to control weeds, and 15 days after planting the target plant to before harvesting, the weed density is lower than 25 plants/m², or the weed density reduction is ≥95%, or the weed fresh biomass reduction≥95%.

In order to solve the aforementioned technical defects, the present invention adopts the following technical solutions:

The present invention provides a method for simultaneously controlling weeds and planting target plants using plant materials. The method includes:
a. placing plant materials on carrier to form a plant material layer;
b. planting the target plant on the surface of the plant material layer and/or in the plant material layer.

The present invention provides a method for simultaneously controlling weeds and planting target plants by utilizing plant materials, comprising the following steps:
planting the target plants while controlling weeds by controlling the covering thickness and water content of the plant material layer.

In a preferred embodiment, the method comprises the steps of:
a. placing the plant material on the carrier, wherein the period from covering the plant material layer to planting the target plant is the covering period, during which the size, covering thickness and water content of the plant material layers are controlled;
b. then planting the target plant on the surface of the plant material layer and/or in the plant material layer so that the target plant is planted on the surface of the plant material layer and/or in the plant material layer,
   wherein, in order to obtain the required weed control efficacy, the plant material layer is uniformly covered on the carrier at a covering thickness of 0.1-12 cm; in order to provide the conditions required for the growth of the target plant, the water content of the plant material is equal to or greater than 10% of its saturated water content.

In the covering period of the plant material layer, the growth of weeds is controlled by controlling the covering thickness, covering time, water content, etc., and then the target plants are planted on the surface of the plant material layer and/or in the plant material layer, and the synergistic effect of effectively controlling weeds while cultivating the target plant is achieved through the mutual synergy of the conditions such as covering thickness, covering time, and water content.

The present invention provides a method for simultaneously controlling weeds and planting target plants by utilizing plant materials, comprising the following steps:
a. covering the carrier with plant material with a thickness of 0.1-12 cm to form a plant material layer; preferably, the carrier is covered with plant material with a thickness of 0.3-8 cm; preferably, the covering thickness is 0.3-5 cm; preferably, the covering thickness is 0.6-3 cm; preferably, the covering thickness is 0.6-1.2 cm; preferably, the covering thickness is 0.6-1 cm; preferably, plant material with a thickness of 0.1-12 cm is uniformly covered on the carrier;
   controlling the water content of the plant material during covering period, immediately before planting, and after planting:
   b. during the covering period, which is from covering the plant material layer to planting the target plant, controlling the water content of the plant material to 1% or more of its saturated water content; preferably, the water content of the plant material is controlled to 50% of its saturated water content; preferably, the water content of the plant material is controlled to 100% of its saturated water content; preferably, plant material is infiltrated; more preferably, the plant material is soaked in water;
   c. planting the target plant on the surface of the plant material layer and/or in the plant material layer;
      controlling water immediately before planting, which is the period within 1 day before planting the target plant, during which, the water content of the plant material is adjusted to 30% or more of its saturated water content; preferably the water content of the plant material is adjusted to 100% or more of its saturated water content; more preferably, the water content of the plant material is adjusted to achieve plant material infiltration; more preferably, the plant material is adjusted to having a water level not greater than 5 cm depth .
   d. control water after planting:
      1) when the target plant is an aquatic plant and the planting method is direct seeding, if the target plant is planted on the surface of the plant material layer, the water content of the plant material after planting is maintained at 70% of its saturated water content to that the plant material is infiltrated; if the target plant is planted in the plant material layer, the water content of the plant material after planting is maintained to 40% to 100% of its saturated water content;
      2) when the target plant is a dryland plant and the planting method is direct seeding, if the target plant is planted on the surface of the plant material layer, the plant material after planting is maintained at 40% to 100% of its saturated water content; if the target plant is planted in the plant material layer, the water content of the plant material after planting is maintained to 30% to 90% of its saturated water content;
      3) when the target plant is an aquatic plant and the planting method is migration-planting, if the target plant is planted on the surface of the plant material layer, the water content of the plant material after planting is maintained to 70% of its saturated water content to having a water level not greater than 5 cm depth; if the target plant is planted in the plant material layer, the water content of the plant material is maintained to from 50% of its saturated water content to having a water level not greater than 5 cm depth;
      4) when the target plant is a dryland plant and the planting method is migration-planting, if the target plant is planted on the surface of the plant material layer, the water content of the plant material is maintained at 50% of its saturated water content to having a water level not greater than 2 cm depth; if the target plant is planted in the plant material layer, the water content of the plant material after planting is maintained to from 60% of its saturated water content to having a water level not greater than 2 cm depth;
         preferably, in the plant material layer refers to the upper half of the plant material layer; more preferably, in the plant material layer refers to the upper 1/3 layer of the plant material;

Preferably, the control of weeds refers to the control of the harmful effects of weeds to the growth of target plants according to the following standard: 10 days after taking a certain method to control weeds, and 15 days after the target plant is planted to before harvest, the weed density is less than 200 plants/m², the weed density reduction is ≥50% and less than 80%, or the weed fresh biomass reduction is ≥ 50% and less than 80%; more preferably, the control of weeds achieves effective weed control, and the effective weed control means that the harmful effects of weeds is effectively controlled, so that the normal growth of the target plant is not substantially affected or the harmful effects is relatively light according to the following standard: 10 days after taking a certain method to control weeds, and 15 days after the target plant is planted to before harvesting, the weed density is less than 100 plants/m², or the weed density reduction is ≥80% and less than 95%, or the weed fresh biomass reduction is ≥ 80% and less than 95%; more preferably, the control of weeds achieves complete weed control, which means that the harmful effects of weeds is completely controlled, so that the harmful effects to the target plant is very small according to the following standard: 10 days after taking a certain method to control weeds, and 15 days after the target plant is planted to before harvest, the weed density is less than 25 plants/m², or the weed density reduction is ≥95%, or the weed fresh biomass reduction is ≥ 95%.

Preferably, the survival rate of the planted target plants is ≥10% and less than 50%; more preferably, the survival rate of the planted target plants is ≥50% and less than 75%; more preferably, the survival rate of the planted target plants is ≥75%.

Preferably, when the target plant is planted with a reproductive organ, before the plant material is completely decomposed, the initial stem-root differentiation point of the target plant is visible to the naked eye in the plant material layer or higher than the plant material layer; after the seedling of the target plant emerges, the stem base point is in or above the plant material layer;
preferably, when the target plant is planted by seedling placings, throwing seedlings, or transplanting seedlings, before the plant material is completely decomposed, the stem base point of the target plant is visible to the naked eye in the plant material layer or higher than the plant material layer;
preferably, when planting the target plant, the target plant is visible to the naked eye on the surface of the plant material layer or in the plant material layer, and the reproductive organs of the weeds are located under the plant material layer;
preferably, after planting the target plant, if weeds emerge, before the plant material is completely decomposed, it is visible to the naked eye that the initial stem-root differentiation point of 95% of the weeds is located under the plant material layer;
preferably, after planting the target plant, when the covering thickness of the plant material reaches 0.9 cm, when weeds emerge, it is visible to the naked eye that the initial stem-root differentiation point of 95% of the target plants is 0.5 cm or more higher than the initial stem-root differentiation point of the weeds, and or within 25 days after the target plant is planted, the stem base point of 95% of the target plants is higher than the stem base point of weeds by 0.8 cm or more;
preferably, when the covering thickness of the plant material reaches 0.9 cm, and when the uniform covering of the plant material is completed, it is visible to the naked eye that 95% of the carrier area is covered by the plant material, and the carrier (such as soil) cannot be seen.

Further, the mode of planting the target plant, including but not limited to artificial sowing reproductive organs, artificial transplanting seedlings, artificially throwing planting seedlings, artificially seedling placing, sowing reproductive organs by machine, transplanting seedlings by machine, throwing planting seedlings by machine, seedling placing by machine.

Further, in the process of planting the target plant, the step of applying plant nutrition is also included, the applying can provide the substances required for the growth of the target plant, the mode of applying is at least one selected from the group consisting of: applying under the plant material layer, applying in the middle of the plant material layer, mixing with the plant material layer, applying on the top of the plant material layer, and mixing with the reproductive organs of the target plant, mixing with the root system of the reproductive organs of the target plant.

Further, the time of plant nutrient application includes but is not limited to before planting the target plant, after planting the target plant or while planting the target plant.

Further, the plant nutrient application time is 1 to 15 days after planting the target plant; preferably, 1 to 10 days after planting the target plant; preferably, 3 to 7 days after planting the target plant.

Further, the types of plant nutrition include but are not limited to urea, P₂O₅, K₂O, compound fertilizer, organic fertilizer, human excrement, manure, various composts, plant ash, and mixed fertilizer.

Further, the plant material is derived from any plant, preferably any at least one of the following plants:
rice *(Oryza sativa* L.), wheat *(Triticum aestivum*L*.*), barley *(Hordeum vulgare* L.), maize (*Zea mays* L.), soybean *(Glycine max* (L.)Merr.), sweet potato *(Dioscorea esculenta* (Lour.) Burkill), potato *(Solanum tuberosum* L.), cotton *(Gossypium hirsutum* L.), flax *(Linum usitatissimum* L.), oilseed rape *(Brassica napus* L.), peanut *(Solanum melongena* L.), chili *(Capsicum annuum* L.), pumpkin *(Cucurbita moschata* (Duch. exLam.) Duch. ex Poiret), winter melon (*Benincasa hispida* (Thunb.) Cogn.), sugar cane *(Saccharum officinarum* L.), chinese milk vetch (*Astragalus sinicus* L.), sunflower *(Helianthus annuus* L.), green manure crop (hairy vetch).

Further, the plant material is turned into pieces and covered on the carrier, the size of the plant material is not greater than 300 cm; preferably, the size of the plant material is not greater than 200 cm; preferably, the size of the plant material is not greater than 10 cm; more preferably, the size of the plant material is not greater than 3 cm.

Further, the plant material is turned into pieces and covered on the carrier, the average size of the plant material is not greater than 300 cm; preferably, the average size of the plant material is not greater than 200 cm; preferably, the average size of the plant material is not greater than 10 cm; more preferably, the average size of the plant material is not greater than 3 cm.

Further, the covering period is 0-12 months; preferably, the covering period is 0-6 months; preferably, the covering period is 0-3 months; preferably, the covering period is 0~30 days; more preferably, the covering period is 0~10 days.

Further, the present invention utilizes the plant material to simultaneously realize the method for controlling weeds and planting the target plant and the method for controlling water content after planting can be specifically as follows:
1) When the target plant is an aquatic plant and the planting method is direct seeding, if the target plant is planted on the surface of the plant material layer, the time maintaining the water content of the plant material at from 70% of its saturated water content to that the plant material is infiltrated after planting is 5 to 15 days; if the target plant is planted in the plant material layer, the time for maintaining the water content of the plant material at 40% to 100% of its saturated water content is 5 to 15 days after planting;
2) when the target plant is a dryland plant and the planting method is direct seeding, if the target plant is planted on the surface of the plant material layer, the water content of the plant material is maintained at 40% to 100% of its saturated water content after planting, after the target plant root penetrates down the plant material layer, maintaining the water content of the plant material at 10% to 80% of its saturated water content, preferably for 5 to 15 days; if the target plant is planted in the plant material layer, the water content of the plant material is maintained at 30% to 90% of its saturated water content after planting, after the target plant root system penetrates down the plant material layer, maintaining the water content of the plant material at 10% to 70% of its saturated water content;
3) when the target plant is an aquatic plant and the planting method is migration-planting, if the target plant is planted on the surface of the plant material layer, maintaining the water content of the plant material after planting to from 70% of its saturated water content to having a water level not greater than 5 cm depth, after 4 to 8 days, maintaining the water content of the plant material at from 30% of its saturated water content to having a water level not greater than 8 cm depth; if the target plant is planted in the plant material layer, maintaining the water content of the plant material at from 50% of its saturated water content to having a water level not greater than 5 cm depth, after 4 to 8 days, maintaining the water content of the plant material at from 20% of its saturated water content to having a water level not greater than 6 cm depth;
4) when the target plant is a dryland plant and the planting method is migration-planting, if the target plant is planted on the surface of the plant material layer, the water content of the plant material is maintained at from 50% of its saturated water content to having a water level not greater than 2 cm depth, after 4 to 8 days, maintaining the water content of the plant material at 10% to 90% of its saturated water content; if the target plant is planted in the plant material layer, maintaining the water content of the plant material at from 60% of its saturated water content to having a water level not greater than 2 cm depth, after 4 to 8 days, the water content of the plant material is maintained at 10% to 80% of its saturated water content.

For different plant materials, the present invention also provides different preferred solutions to better realize the technical effect of the present invention:
Further, if the plant material is derived from any at least one of maize, soybean, sweet potato, potato, cotton, flax, oilseed rape, peanut, chili, pumpkin, winter melon, sugar cane, and sunflower, the plant material is turned into pieces and covers the carrier, and the size of the plant material is not greater than 2 cm; preferably, the size of the plant material is not greater than 1 cm.

Further, if the plant material is derived from any at least one of maize, soybean, sweet potato, potato, cotton, flax, oilseed rape, peanut, chili, pumpkin, winter melon, sugar cane, and sunflower, the plant material is turned into pieces and covers the carrier, and the average size of the plant material is not greater than 2 cm; preferably, the average size of the plant material is not greater than 1 cm.

Further, if the plant material is derived from any at least one of rice, wheat, barley, chinese milk vetch, and green manure crop, covering the carrier with the plant material that has been turned into pieces, and the size of the plant material is not greater than 10 cm; preferably, the size of the plant material is not greater than 5 cm; more preferably, the size of the plant material is not greater than 2 cm.

Further, if the plant material is derived from any at least one of rice, wheat, barley, chinese milk vetch, and green manure crop, covering the carrier with the plant material that has been turned into pieces, and the average size of the plant material is not greater than 10 cm; preferably, the average size of the plant material is not greater than 5 cm; more preferably, the average size of the plant material is not greater than 2 cm.

Further, if the plant material is derived from any at least one of maize, soybean, sweet potato, potato, cotton, flax, oilseed rape, peanut, chili, pumpkin, winter melon, sugar cane, and sunflower, the covering thickness is 0.2-8 cm; preferably, the covering thickness is 0.4-4 cm; preferably, the covering thickness is 0.5-3 cm; preferably, the covering thickness is 0.6-2 cm; preferably, the covering thickness is 0.6-1.5 cm; preferably, the covering thickness is 0.6-0.9 cm.

Further, if the plant material is derived from any at least one of rice, wheat, barley, chinese milk vetch, and green manure crop, the covering thickness is 0.2-8 cm; preferably, the covering thickness is 0.3-4 cm; preferably, the covering thickness is 0.6-3 cm; preferably, the covering thickness is 0.8-2 cm; preferably, the covering thickness is 0.8-1.5 cm.

Further, if the plant material is derived from any at least one of rice, wheat, barley, chinese milk vetch, and green manure crop, the average size of the plant material is not greater than 1 cm, the covering thickness is 0.2-8 cm; preferably, the covering thickness is 0.3-4 cm; preferably, the covering thickness is 0.5-3 cm; preferably, the covering thickness is 0.6-2 cm; preferably, the covering thickness is 0.6-1.0 cm.

According to different planted target plants and different planting methods, the present invention also provides different preferred solutions to better realize the technical effect of the present invention:
Further, when the target plant is an aquatic plant and the planting method is direct seeding, the carrier is evenly covered with plant material with a thickness of 0.3-12 cm, the plant material is derived from at least one of oilseed rape, rice, wheat, maize, and soybean, and the average size of the plant material is not greater than 3 cm; during the covering period, the plant material is soaked in water, immediately before planting the target plant, the water content of the plant material is adjusted to achieve plant material infiltration; if the target plant is planted on the surface of the plant material layer, after planting, the time for maintaining the plant material at from 70% of its saturated water content to that the plant material is infiltrated is 5-15 days; if the target plant is planted in the plant material layer, the time for maintaining the water content of the plant material at 40%-100% of its saturated water content is 5-15 days after planting;
Preferably, the covering thickness of the plant material is 0.6-2.5 cm, if the target plant is planted on the surface of the plant material layer, after planting, the time for maintaining the plant material at from 100% of its saturated water content to that the plant material is infiltrated is 5~10 days; if the target plant is planted in the plant material layer, after planting, the time for maintaining the water content of the plant material at 80%~100% of its saturated water content is 5~10 days, and the method can achieve complete weed control and the survival rate of the target plants is ≥75%;
preferably, the covering thickness of the plant material is 0.6-1.2 cm, and if the target plant is planted on the surface of the plant material layer, after planting, the time for maintaining the plant material at 100% of its saturated water content to that the plant material is infiltrated is 5~10 days; if the target plant is planted in the plant material layer, after planting, the time for maintaining the water content of the plant material at 80% to 100% of its saturated water content is 5~10 days, and the method can achieve complete weed control and the survival rate of the target plants is ≥80%.

Further, when the target plant is a dryland plant and the planting method is direct seeding, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material after planting is maintained at 40% to 100% of its saturated water content, after the target plant root penetrates down the plant material layer, maintaining the water content of the plant material at 10%-080% of its saturated water content, preferably for 5-15 days; if the target plant is planted in the plant material layer, the water content of the plant material after planting is maintained at 30%-90% of its saturated water content, after the target plant root system penetrates down the plant material layer, maintaining the water content of the plant material at 10%-70% of its saturated water content;
Preferably, the covering thickness of the plant material is 0.6-2.5 cm, if the target plant is planted on the surface of the plant material layer, the water content of the plant material after planting is maintained at 70%-100% of its saturated water content; after the target plant root penetrates down the plant material layer, maintaining the water content of the plant material at 30%-80% of its saturated water content, preferably for 5-15 days; if the target plant is planted in the plant material layer, the water content of the plant material after planting is maintained at 30%~90% of its saturated water content, after the target plant root system penetrates down the plant material layer, the water content of the plant material is maintained at 20%-70% of its saturated water content, and the method can achieve complete weed control and the survival rate of the planted target plants is ≥75%;
Preferably, the covering thickness of the plant material is 0.6-1.2 cm, if the target plant is planted on the surface of the plant material layer, the water content of the plant material after planting is maintained at 70%-100% of its saturated water content, after the target plant root penetrates down the plant material layer, maintaining the water content of the plant material at 30%-80% of its saturated water content, preferably for 5-15 days; if the target plant is planted in the plant material layer, the water content of the plant material after planting is maintained at 30%~90% of its saturated water content, after the target plant root system penetrates down the plant material layer, the water content of the plant material is maintained at 20%-70% of its saturated water content, and the method can achieve complete weed control and the survival rate of the planted target plants is ≥80%;
Further, when the target plant is an aquatic plant and the planting method is migration-planting, the plant material is derived from at least one of oilseed rape, rice, wheat, maize, and soybean, and the average size of the plant material is not greater than 3 cm, uniformly covering the carrier by plant material with a thickness of 0.3-12 cm; during the covering period, the plant material is soaked in water, immediately before planting the target plant, the water content of the plant material is adjusted to achieve the infiltration of the plant material; if the target plant is planted on the surface of the plant material layer, the water content of the plant material after planting maintains at from 70% of its saturated water content to having a water level not greater than 5 cm depth, after 4~8 days, maintaining the water content of the plant material at 30% of its saturated water content to having a water level not greater than 8 cm depth; if the target plant is planted in the plant material layer, the water content of the plant material is maintained at 50% of its saturated water content to having a water level not greater than 5 cm depth, and after 4~8 days, the water content of the plant material is maintained at 20% of its saturated water content to having a water level not greater than 6 cm depth;
Preferably, the covering thickness of the plant material is 0.6-2.5 cm, if the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level of 1-4 cm depth, after 4-8 days, the water content of the plant material is maintained at having a water level of 2-5 cm depth; the method can achieve complete weed control and the survival rate of the planted target plants is ≥75%;
Preferably, the covering thickness of the plant material is 0.6-1.2 cm. If the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level not greater than 1-3 cm depth, after 4-8 days, the water content of the plant material is maintained at having a water level of 2-5 cm depth; the method can achieve complete weed control and the survival rate of the planted target plants is ≥80%;
Further, when the target plant is a dryland plant and the planting method is migration-planting, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material is maintained at from 100% of its saturated water content to having a water level not greater than 2 cm depth, after 4-8 days, maintaining the water content of the plant material at 30%-90% of its saturated water content; if the target plant is planted in the plant material layer, maintaining the water content of the plant material at 50%-100% of its saturated water content, after 4-8 days, maintaining the water content of the plant material at 30%-80% of its saturated water content;
preferably, the covering thickness of the plant material is 0.6-2.5 cm, if the target plant is planted on the surface of the plant material layer, the water content of the plant material is maintained at from 100% of its saturated water content to having a water level not greater than 2 cm depth, after 4 to 8 days, maintaining the water content of the plant material at 30% to 90% of its saturated water content; if the target plant is planted in the plant material layer, maintaining the water content of the plant material at 50% to 100% of its saturated water content, after 4 to 8 days, the water content of the plant material is maintained at 30% to 80% of its saturated water content, and the method can achieve complete weed control and the survival rate of the planted target plants is ≥75%;
preferably, the covering thickness of the plant material is 0.6-1.2 cm, if the target plant is planted on the surface of the plant material layer, the water content of the plant material is maintained at from 100% of its saturated water content to having a water level not greater than 2 cm depth, after 4 to 8 days, maintaining the water content of the plant material at 30% to 90% of its saturated water content; if the target plant is planted in the plant material layer, maintaining the water content of the plant material at 50% to 100% of its saturated water content, after 4 to 8 days, the water content of the plant material is maintained at 30% to 80% of its saturated water content, and the method can achieve complete weed control and the survival rate of the planted target plants is ≥80%.
Further, when the target plant is rice and the planting method is direct seeding, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the time for maintaining the water content of the plant material after planting at from 100% of its saturated water content to that the plant material is infiltrated is 5-8 days; if the target plant is planted in the plant material layer, the time for maintaining the water content of the plant material after planting at 70% to 100% of its saturated water content is 5-8 days;
Preferably, the covering thickness of the plant material is 0.6-2.5 cm, and if the target plant is planted on the surface of the plant material layer, the time for maintaining the water content of the plant material after planting at 100% of its saturated water content to that the plant material is infiltrated is 5-8 days; if the target plant is planted in the plant material layer, the time for maintaining the water content of the plant material after planting at 80% to 100% of its saturated water content is 5-8 days, and the method can achieve complete weed control and the survival rate of planted target plants is ≥75%.

Preferably, the covering thickness of the plant material is 0.6-1.2 cm, and if the target plant is planted on the surface of the plant material layer, the time for maintaining the water content of the plant material after planting at 100% of its saturated water content to that the plant material is infiltrated is 5-8 days; if the target plant is planted in the plant material layer, the time for maintaining the water content of the plant material after planting at 80% to 100% of its saturated water content is 5-8 days, and the method can achieve complete weed control and the survival rate of planted target plants is ≥90%.
Further, when the target plant is rice and the planting method is migration-planting, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material after planting maintains at from 70% of its saturated water content to having a water level not greater than 5 cm depth, after 4 to 8 days, maintaining the water content of the plant material at from 30% of its saturated water content to having a water level not greater than 8 cm depth; if the target plant is planted in the plant material layer, maintain the water content of the plant material at from 50% of its saturated water content to having a water level not greater than 5 cm depth, after 4 to 8 days, maintaining the water content of the plant material at from 20% of its saturated water content to having a water level not greater than 6 cm depth;
preferably, the covering thickness of the plant material is 0.6-2.5 cm, if the target plant is planted on the surface of the plant material layer, the water content of the plant material after planting is having a water level of 1-4 cm depth, after 4-8 days, the water content of the plant material is maintained at having a water level not greater than 2-5 cm depth; if the target plant is planted in the plant material layer, the water content of the plant material is maintained at having a water level of 1-4cm depth, after 4-8 days, the water content of the plant material is maintained at having a water level not greater than 2-5 cm depth; the method can achieve complete weed control and the survival rate of the planted target plants is ≥75%;
preferably, the covering thickness of the plant material is 0.6-1.2 cm, if the target plant is planted on the surface of the plant material layer, the water content of the plant material after planting is having a water level of 1-4 cm depth, after 4-8 days, the water content of the plant material is maintained at having a water level not greater than 2-5 cm depth; if the target plant is planted in the plant material layer, the water content of the plant material is maintained at having a water level not greater than 1~3 cm depth, after 4 to 8 days, the water content of the plant material is maintained at having a water level not greater than 2-5 cm depth, and the method can achieve complete weed control and the survival rate of the planted target plants is ≥90%.

Further, the time period within 1 day before planting the target plant is the period immediately before planting the target plant, during which the water content of the plant material is adjusted to be suitable for the growth of the target plant.

Further, if the target plant is planted in the plant material layer, the carrier is covered with the plant material in two times, in the first time the carrier is covered with 30% or more of the total amount of the plant material; preferably, in the first time the carrier is covered with 50% or more of the total amount of plant material; preferably, in the first time the carrier is covered with 70% or more of the total amount of plant material; preferably, in the first time the carrier is covered with 80% or more of the total amount of plant material; preferably, in the first time the carrier is covered with 90% or more of the total amount of plant material.

Further, the target plant of the present invention is selected from at least one of crops, fruit trees, commercial crops, flowers, nursery stocks, forest trees, lawns, and chinese traditional medicinal crops; it is preferably one or any two or more of: rice *(Oryza sativa* L.), wheat *(Triticum aestivumL*.), barley *(Hordeum vulgare* L.), maize (*Zea mays* L.), soybean *(Glycine max* (L.)Merr.), sweet potato *(Dioscorea esculenta* (Lour.) Burkill), cotton *(Gossypium* L.), flax *(Linum usitatissimum* L.), oilseed rape *(Brassica rapa* var. *oleifera* de Candolle), peanut (*Arachis hypogaea* L.), Chinese cabbage *(Brassica rapa* var. *chinensis* (Linnaeus) Kitamura), radish *(Raphanus sativus* L.), mustard *(Brassica juncea* var. *tumida*Tsen& Lee), kale *(Brassica oleracea* var. *capitata* Linnaeus), broccoli *(Brassica oleracea* var. *botrytis* Linnaeus), tomato *(Lycopersicon esculentum* Miller), eggplant *(Solanum melongena* L.), chili *(Capsicum annuum* L.), pumpkin *(Cucurbita moschata* (Duch. Ex Lam.) Duch. ex Poiret), winter melon (*Benincasa hispida* (Thunb.) Cogn.), grape *(Vitis vinifera* L.), pear *(Pyrus* L.), tangerine *(Citrus reticulata* Blanco), apple *(Malus pumila* Mill.), peach (*Amygdalus persica* L.), rose *(Rosa rugosa* Thunb.), butterfly orchid (*Phalaenopsis aphrodite* H.G. Reichenbach), orchid *(Cymbidium Sw.),* osmanthus *(Osmanthus fragrans* (Thunb.) Loureiro), camphor *(Cinnamomum camphora* (L.) Presl), pine *(Pinus* L.), cedar (*Cunninghamia lanceolata* (Lamb.) Hook.), Manila lawn (*Zoysia matrella* (L.) Merr.), honeysuckle (*Lonicera japonica* Thunb.), rhizoma Corydalis *(Corydalis yanhusuo* W. T. Wang), unibract fritillary bulb (*Fritillaria cirrhosa* D. Don).

Further, the weeds of the present invention are selected from at least one of Gramineae weeds, Cyperaceae weeds and broadleaf weeds; preferably, the Gramineae weeds include crab grass (*Digitaria sanguinalis* (L.) Scop.), green foxtail *(Setaria viridis* (L.) Beauv.), goosegrass *(Eleusine indica* (L.) Gaertn.), chinese sprangletop (*Leptochloa chinensis* (L.) Nees), barnyardgrass (*Echinochloa crus-galli* (L.) P. Beauv.), beardless barnyardgrass (*Echinochloa crus-galli* var. *mitis* (Pursh) Petermann), alkali barnyardgrass (*Echinochloa crus-galli* var. *zelayensis* (Kunth) Hitchcock), longawn barnyardgrass (*Echinochloa caudata* Roshev.), junglerice (*Echinochloa colona* (Linnaeus) Link), water barnyardgrass (*Echinochloa oryzoides* (Ard.) Flritsch.), japanese barnyardgrass (*Echinochloa crus-galli* var. *austrojaponensis* Ohwi);
preferably, the Cyperaceae weeds are selected from any one or more of the group consisting of: Nut-grass *(Cyperus rotundus* L.), difformed galingale (*Cyperus difformis* L.), miliumlike fimbristylis *(Fimbristylis littoralis* Grandich), Rice galingale *(Cyperus iria* L.), common bulrush *(Schoenoplectus triqueter* (Linnaeus) Palla), flatstalk bulrush *(Bolboschoenus planiculmis* (F. Schmidt) T. V. Egorova), Rush-like Bulrush *(Schoenoplectus tabernaemontani* (C. C. Gmelin) Palla), cow's hair-felt spikesedge *(Eleocharis yokoscensis* (Franchet & Savatier) Tang & F. T. Wang) , wallich bulrush *(Schoenoplectus wallichi i* (Nees) T. Koyama).

Preferably, the broadleaf weeds are selected from any one or more of the group consisting of: copperleaf (*Acalypha australis* L.), redroot amaranth (*Amaranthus retroflexus* L.), lambsquarters *(Chenopodium album* L.), common day flower (*Commelina communis* L.), eared redstem (*Ammannia auriculata* Willdenow), manyflower ammannia (*Ammannia multiflora* Roxb.), valley redstem (*Ammannia coccinea* Rottboll), common ammannia (*Ammannia baccifera* L.), climbing seedbox (*Ludwigia prostrata* Roxb.), creeping waterprimrose (*Ludwigia adscendens* (L.) Hara), indian rotala (*Rotala indica* (Willd.) Koehne), roundleaf rotala (*Rotala rotundifolia* (Buch.-Ham. ex Roxb.) Koehne), procumbent false-pimperne (*Lindernia procumbens* (Krock.) Borbas), sheathed monochoria (*Monochoria vaginalis* (Burm. F.) Presl ex Kunth), pygmy arrowhead (*Sagittaria pygmaea* Miq.), yerbadetajo (*Eclipta prostrata* (L.) L.), korsakow monochoria (*Monochoria korsakowii* Regel et Maack), japanese mazus *(Mazus pumilus* (N. L. Burman) Steenis), triquetrous murdannia (*Murdannia triquetra* (Wall. ex C. B. Clarke) Bruckn.), distinct pondweed *(Potamogeton distinctus* A. Bennett), pepperwort (*Marsilea quadrifolia* L. Sp.), oldworld arrowhead (*Sagittaria trifolia* L.).

The present invention provides that the planting place of the target plant is selected from any one or more of farmland, woodland, park, greenbelt, non-arable land, airport, wharf, bus station, train station, residential area, stadium, farm, on building, container, water body, and aerial place.

Different from the prior art, the method of the present invention for simultaneously controlling weeds and planting target plants is to place plant material first and then plant the target plants, which is more beneficial to controlling weeds than the prior art. One of the characteristics of weeds is the accumulation of huge numbers of weed seeds that have fallen into the soil over the years, the so-called weed "seed bank" in the soil, once there is bare soil and suitable temperature, water and light conditions, weed seeds will germinate and grow, and most weeds emerge first and then, and the emergence can last for a long time, making it extremely difficult to control. Through precisely controls the water content of the plant material layer at each specific period (covering period, immediately before planting the target plant, after planting), especially the synergistic effect of different planting methods for different target plants, the present invention achieves low cost, weed control and survival rate of planting target plants at the same time, solves the problems of the prior art. First, the present invention covers the ground surface with plant material (preferably the straw and other wastes of the previous target plant) to shade the ground when the target plant is harvested or after harvesting, or immediately after soil preparation, avoids weed seeds from being exposed to light to relieve from dormancy to the greatest extent, reduces the number of weeds emerging, and inhibits photosynthesis of weeds that have sprouted. Second, the present invention covers the plant material on the weeds when they are most vulnerable in the early stage of emergence, and has a better efficacy of suppressing the weeds. And because the target plant has not been planted when plant material covering is performed, the above operation does not cause any safety problem for the subsequent planting of the target plant. In the prior art, the preferred time for straw mulching is 4-6 days after direct seeding of rice. At such time, the vicious weed barnyardgrass has emerged and has a height of 2 cm or more, which can easily get out of control (Figure 5, Figure 6). The present invention is completely different from the routine operation mode of the prior art, and significantly improves the weed control efficacy and the survival rate of the target plant.

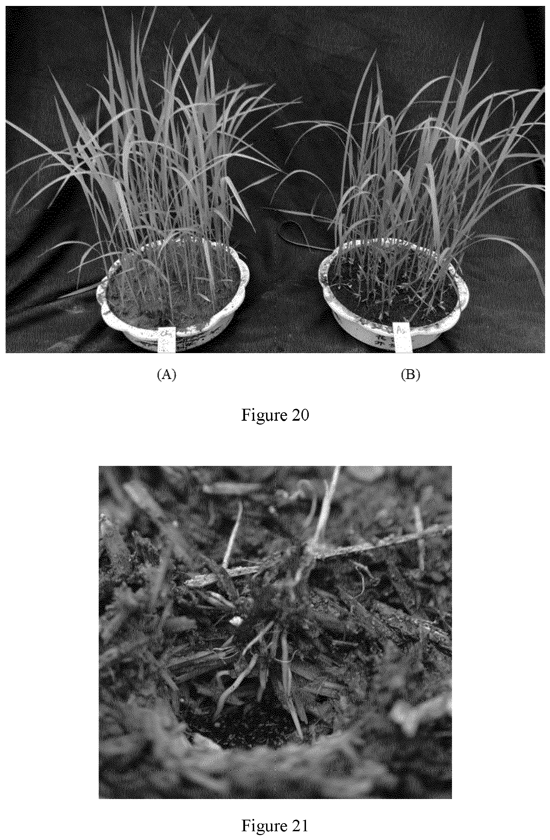

The invention skillfully utilizes the overall synergistic effect of plant material and water content in each specific period (covering period, immediately before planting the target plant, and after planting) to further improve the weed control efficacy, and avoids adverse effects on target plants. In the present invention, the covering plant material is not necessary to dry, and water must be added during the covering period, so that the plant material can absorb water to the greatest extent and be in a state of infiltration or flooding. The weight of dry oilseed rape straw after absorbing water can reach nearly 6 times the original weight (Table 4, Figure 24B), the gravitational suppression effect of the plant material on weeds after absorbing water is greatly improved, and it is more difficult for weeds to push up the plant material covering layer. Moreover, the plant material after water absorption is more compact, with smaller gaps, better shading effect, and better inhibition of weed germination and growth. In addition, weed seeds need oxygen when they germinate. At this time, flooding reduces the oxygen concentration around the weed seeds, thereby inhibiting their emergence (Figure 20, panel B in Figure 25, and panel B in Figure 26), and the weeds are either dead or not harmful by continuing the covering period for a period of time. On the other hand, for the target plant, the appropriate water content of the plant material layer is precisely controlled during and after planting the target plant to adapt to the growth of the target plant and avoid adverse effects. However, in the prior art, plant materials must be dried and sheared before they can be used for mulching, and the initial period after mulching is also the critical period for weed germination. In order to ensure the safety of the target plants, there can be no water layer, so it hardly has the above advantages (Figure 5, Figure 6). Therefore, the present invention breaks through the technical prejudice of the prior art that the plant material must be dried and must be mulched after direct seeding planting. The present invention has following remarkable technical effect:
The invention exploits and utilizes the comprehensive effect of steric hindrance of the target plant above and the weed below to control weeds. For example, in the case of planting the target plant after the plant material covering in the field, the target plant of the present invention is planted in the plant material layer, and the weed seeds are in the carrier (soil) below the plant material, resulting in a synergistic effect, one is that the target plant is an object pressing on the "head" of the weed, and its gravity is the resistance that the weed needs to overcome to grow upward; second, the stems and leaves of the target plants not only play a role in shading, but also the far-red light in the sunlight that is not absorbed by the upper target plants can inhibit the germination of weed seeds. The third is the huge and dense root group after the target plant grows, which forms another barrier to prevent the later germinating weeds from growing upward, and has the effect of gravity suppression and light blocking (Figure 2). Fourth, the root system of the target plant quickly penetrates down the plant material layer and enters the soil. For example, a rice plant has root systems of 5 or more roots at 6 days after sowing (Figure 19A, Figure 2). These roots act like nails to hold the layer of plant material firmly to the soil surface and make the layer of plant material more compact (Figure 2, Figure 21), therefore, the resistance to the upward growth of weeds far exceeds the weight of the plant material itself. With the rapid growth of target plants such as rice, their weight increases rapidly, the stems and leaves have a greater shading effect, and the "nails" are more and deeper, and the comprehensive inhibition of weeds is increasing. On the other hand, for the target plants, it was unexpectedly found that rice seeds planted on the surface of the plant material developed more root systems than those planted on the soil surface (Figure 19A), and it was also found that rice roots can penetrate down a certain thickness of plant material layer to reach the carrier layer (such as soil) below, and can grow normally even without supplementing plant nutrients (Figure 2, Figure 4). Further experiments confirmed for the first time that more than 20 target plant seeds can survive and grow normally after being planted on the surface of different types of plant material layers. Therefore, controlling a certain thickness of the plant material layer can properly control the weeds below and miraculously allow the target plants above to grow, cleverly achieving two extremely meaningful purposes at the same time. Usually weed seeds are mostly located in the soil surface, however, in the conventional planting method, the target plant seeds and weed seeds are basically at the same level in the soil, and even corn, soybean and other seeds are sown 3 to 6 cm below the soil, and under the weed seeds which located in the surface layer, therefore, the above-mentioned advantages do not exist in the prior art.

An outstanding advantage of the present invention is that it pioneers and utilizes the combined effect of the steric hindrance of the target plants above and the weeds below to control weeds. For example, in the case of planting the target plant after covering the plant material in the field, the target plant of the present invention is planted in the plant material layer, and the weed seeds are in the carrier (soil) below the plant material. The combined effect is that the target plant is an object pressing on the "top" of the weed, and its gravity is the resistance that the weed needs to overcome to grow upward; second, the stems and leaves of the target plants not only play a role in shading, but also the far-red light in the sunlight that is not absorbed by the upper target plants can inhibit the germination of weed seeds. The third is the huge and dense root group after the target plant grows, which forms another barrier to prevent the later germinating weeds from growing upward, and has the effect of gravity suppression and light blocking (Figure 2). Fourth, the root system of the target plant quickly penetrates down the plant material layer and enters the soil. For example, a rice plant has a root system of 5 or more roots at 6 days after sowing (Figure 19A, Figure 2). These roots act like nails to hold the layer of plant material firmly to the soil surface and make the layer of plant material more compact (Figure 2, Figure 21), therefore, the resistance to the upward growth of weeds far exceeds the weight of the plant material itself. With the rapid growth of target plants such as rice, their weight increases rapidly, the stems and leaves have a greater shading effect, and the "nails" are more and deeper, and the comprehensive inhibition of weeds is increasing. On the other hand, for the target plants, it was unexpectedly found that rice seeds planted on the surface of the plant material developed more root systems than those planted on the soil surface (Figure 19A), and it was also found that rice roots can penetrate down a certain thickness of plant material layer to reach the carrier layer (such as soil) below, and can grow normally even without supplementing plant nutrients (Figure 2, Figure 4). Further experiments confirmed for the first time that more than 20 target plant seeds can survive and grow normally after being planted on the surface of different types of plant material layers. Therefore, controlling a certain thickness of the plant material layer can properly control the weeds below and miraculously allow the target plants above to grow, cleverly achieving two extremely meaningful purposes at the same time. Usually weed seeds are mostly located in the soil surface, however, in the conventional planting method, the target plant seeds and weed seeds are basically at the same level in the soil, and even corn, soybean and other seeds are sown 3 to 6 cm below the soil, and under the weed seeds which located in the surface layer, therefore, the above-mentioned advantages do not exist in the prior art.

An outstanding advantage of the present invention is that it simplifies farming operations, saves time, saves a lot of labor costs, and reduces huge energy consumption. The present invention can avoid certain steps such as drying of plant materials when ploughing and planting. On the other hand, after the target plants are harvested, fresh straw and other plant materials can be used for covering on the ground on-site without tillage, and the target plants can be planted after adding water, which is a major technological innovation in light plant cultivation. Heavy and time-consuming crop cultivation operations are greatly simplified, greatly reducing the labor and material resources for removing straw, ploughing land, soil preparation, straw drying, bagging and transportation in the prior art, and saves a lot of time and makes the most of the precious plant growing season. It also greatly reduces the energy consumption of the existing technology in removing straw, ploughing land, soil preparation, straw drying and transportation. Machinery (such as a harvester) can be used to complete harvesting and plant material crushing and broadcasting in one step, and the efficiency is further greatly improved, representing the future development direction of the deep integration of green planting technology and mechanization (Table 10).

An outstanding advantage of the present invention is the technical support provided for conducting disaster-resistant weed control. For a long time, my country's farmland weed control has mainly relied on pesticides, and the development of new herbicides is very difficult. In recent years, herbicide-resistant weeds have developed rapidly, and it is difficult to find effective prevention and control measures that can be applied in a large area. In some places, food losses are serious. The invention can effectively prevent and control herbicide-resistant weeds, and delay the weeds from developing herbicide-resistance.

One of the outstanding advantages of the present invention is that it can greatly reduce using of pesticide and fertilizer, improve the quality of agricultural products, recycle plant materials, and improve the ecological environment. At present, due to the increasing number of herbicide-resistant weeds and their distribution more and more widely, some farmers have no choice but to increase the dosage of herbicides, and the increase of selection pressure promotes the development of herbicide resistance faster, such a vicious circle causes the reduction of herbicides very difficult. The invention has ideal weed control efficacy, can greatly reduce the use of herbicides or even eliminate the use of herbicides, and reduce the pollution of chemical pesticides. In addition, after decomposing the plant materials of the invention, the soil fertility can be improved, the soil bulk density can be reduced, the soil organic matter content can be increased, and the chemical fertilizer dosage can be gradually reduced. Therefore, significantly improving the quality of agricultural products and improving the ecological environment will have a profound impact on the development of sustainable agriculture in my country.

An outstanding advantage of the present invention is that it has ideal weed control efficacy (Fig. 20, Fig. 25B, Fig. 26B), significantly improves the survival rate of target plants, increases the yield of such as agricultural products, and significantly increases income. The weed-controlling efficacy of the invention is obviously better than that of the prior art, and avoids the adverse effects on the target plants when the plant material is broadcasted and water is added, thereby increasing the yield of the target plants and greatly increasing the income.

An outstanding advantage of the present invention is that the plant material is placed first and then the target plant is planted, which is more beneficial for weed control than the prior art. One of the characteristics of weeds is the accumulation of huge numbers of weed seeds that have fallen into the soil over the years, the so-called weed "seed bank" in the soil, once there is bare soil and suitable temperature, water and light conditions, weed seeds will germinate and grow, and most weeds emerge first and then, and the emergence can last for a long time, making it extremely difficult to control. First, the present invention can cover the ground surface with plant material (preferably the straw and other wastes of the previous target plant) to shade the ground when the target plant is harvested or after harvesting, or immediately after soil preparation, avoid weed seeds from being exposed to light to relieve from dormancy to the greatest extent, reduce the number of weeds emerging, and inhibit photosynthesis of weeds that have sprouted. Second, the present invention can cover the plant material on the weeds when they are most vulnerable in the early stage of emergence, and has a better efficacy of suppressing the weeds. And because the target plant has not been planted when plant material covering is performed, the above operation does not cause any safety problem for the subsequent planting of the target plant. In the prior art, the preferred time for straw mulching is 4-6 days after direct seeding of rice. At such time, the vicious weed barnyard grass has emerged and has a height of 2 cm or more, which can easily get out of control (Figure 5 to Figure 7). The present invention is completely different from the routine operation mode of the prior art, and significantly improves the weed control efficacy and the survival rate of the target plant.

An outstanding advantage of the present invention is that the synergistic weed control efficacy of plant material and water is cleverly utilized to further improve the weed control efficacy while avoiding adverse effects on target plants. In the present invention, the covering plant material is not necessary to dry, and water must be added during the covering period, so that the plant material can absorb water to the greatest extent and be in a state of infiltration or flooding. The weight of dry oilseed rape straw after absorbing water can reach nearly 6 times the original weight (Table 4, Figure 24B), the gravitational suppression efficacy of the plant material on weeds after absorbing water is greatly improved, and it is more difficult for weeds to push up the plant material covering layer. Moreover, the plant material after water absorption is more compact, with smaller gaps, better shading effect, and better inhibition of weed germination and growth. In addition, weed seeds need oxygen when they germinate. At this time, flooding reduces the oxygen concentration around the weed seeds, thereby inhibiting their emergence (Figure 20, Figure 25B, Figure 26B), and the weeds are either dead or not harmful by continuing the covering period for a period of time. On the other hand, for the target plant, the appropriate water content of the plant material layer is precisely controlled during and after planting the target plant to adapt to the growth of the target plant and avoid adverse effects. However, in the prior art, plant materials must be dried and sheared before they can be covered, and the initial period after covering is also the critical period for weed germination. In order to ensure the safety of the target plants, there can be no water layer, so it hardly has the above advantages (Figure 5, Figure 6). Therefore, the present invention breaks through the technical prejudice that the prior art plant material must be sun-dried.

### Brief Description of the Drawings

Figure 1 is a schematic diagram of different ways of using plant material to grow target plants and/or control weeds. Plant material is placed on the surface of the carrier (such as soil) (A), the target plant reproductive organs and seedlings are planted on the surface of the plant material (B), the target plant grows well after a certain period of time, and the efficacy of weed control is ideal (C)
Figure 2 is a physical picture of the target plant reproductive organs planted on the surface of the plant material layer.
Figure 3 is a schematic diagram of target plant reproductive organs and seedlings planted in the plant material layer. Plant material is placed on the surface of the carrier (such as soil) (A), and the target plant reproductive organs and seedlings are planted in the middle of the plant material layer (B). After a certain period of time, the target plant grows well and the weed control efficacy is ideal (C).
Figure 4 is a physical picture of the target plant reproductive organs planted in the plant material layer.
Figure 5 is a schematic diagram of a method for controlling weeds in paddy fields by mulching with oilseed rape straw in the prior art. After the target plants and weeds emerged (A), the crushed dry oilseed rape straw or the mixture with oilseed rape pods was broadcasted (B). After a certain period of time, the growth of the target plants was affected to a certain extent, and the weed control efficacy was limited (C).
Figure 6 is a physical diagram of the method for controlling weeds in paddy fields by mulching oilseed rape straws in the prior art (mulching oilseed rape straws after planting rice on the carrier).
Figure 7 is a schematic diagram of the prior art straw mulching in the field for direct seeding after being cut by a machine. The straw is cut into long stem segments by the machine and then used to cover the field (A). The seed of the target plant is directly seeded on the soil layer by the seeder (B). After a certain period of time, the growth of the target plant is affected. Because the straw is too long and there is no water layer, the weed control efficacy is not ideal (C).
Figure 8 is a photograph of many weeds growing after conventional rice direct seeding.
Figure 9 is a schematic diagram of the shapes of plant material for growing target plants and or controlling weeds.
Figure 10 is a schematic diagram of the initial stem-root differentiation point and stem base point of the target plant in different planting methods, as well as the height of the initial stem-root differentiation point and the stem base point height, wherein the target plant reproductive organs are planted on the surface of the plant material layer (A, B); the target plant reproductive organs are planted in the plant material layer (C); the target plant seedlings are planted on the surface of the plant material layer (D); conventionally, target plants of the prior art are grown on the surface of a carrier (e.g. soil) (E).
Figure 11 is the photographs of initial stem-root differentiation points of seedlings of rice seeds grown on the surface of oilseed rape straw material layer.
Figure 12 is the photographs of initial stem-root differentiation points of seedlings of wheat seeds grown on the surface of oilseed rape straw material layer.

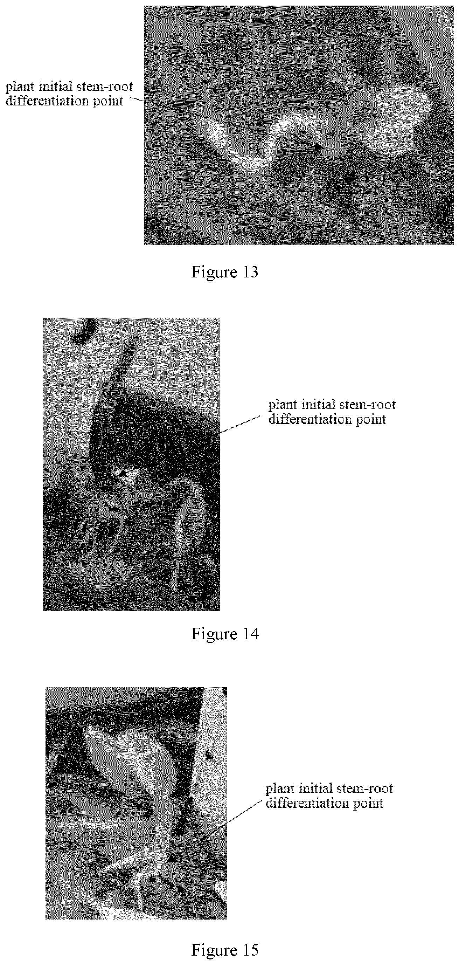

Figure 13 is the photographs of initial stem-root differentiation points of seedlings of oilseed rape seeds grown on the surface of oilseed rape straw material layer.
Figure 14 is the photographs of initial stem-root differentiation points of seedlings of maize seeds grown on the surface of wheat straw material layer
Figure 15 is the photographs of initial stem-root differentiation points of seedlings of cucumber seeds grown on the surface of wheat straw material layer.

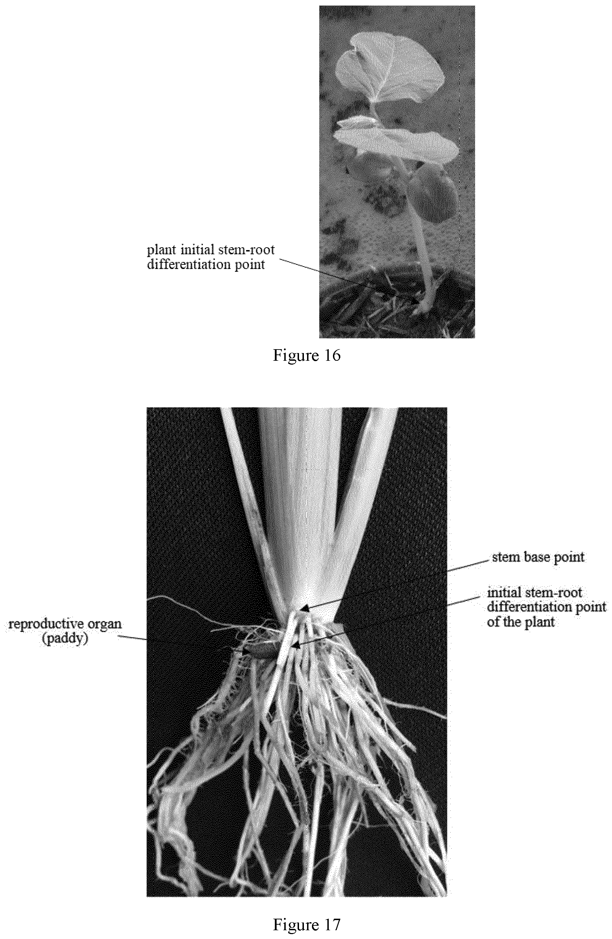

Figure 16 is the photographs of initial stem-root differentiation points of seedlings of soybean seeds grown on the surface of soybean straw material layer.
Figure 17 is the photographs of the initial stem-root differentiation point and stem base point of rice plants.
Figure 18 is a schematic diagram of plant species with different root growing patterns (Figure A represents plants with roots growing at the base of the stem; Figure B represents plant species that growing roots at two or more places on the stem; Figure C represents base creeping species or liana species; Figure D represents plant species without obvious stems).
Figure 19 is a comparison diagram of rice seedlings grown by the present invention and conventional methods. The soil surface of the present invention is covered with oilseed rape straw (straw length is about 0.2 cm, thickness is 1.08 cm), and rice was direct seeded 3 days after the covering, the rice seedlings grow for 6 days, and the rice root system is visible to the naked eye(A), compared with the prior art, when the rice seedlings were mulched with oilseed rape straw (about 1 cm in length and 1.08 cm in thickness) 3 days after direct seeding, and the rice grew for 6 days, 95% or more of the rice roots could not be seen with the naked eye (B).
Figure 20 is comparison of rice seedlings and the efficacy of controlling weeds between the present invention and conventional methods. The conventional soil direct seeding rice grows for 15 days, and there are many weeds (A). The soil surface of the present invention is covered with oilseed rape straw (the length of the straw is about 0.2 cm and the thickness is 1.08 cm), and the direct seeding rice grows for 15 days. The rice grows normally, and the efficacy of inhibiting weeds is ideal (B).
Figure 21 is growth and rooting of rice of the present invention on oilseed rape straw. The surface of the substrate was covered with oilseed rape straw (straw length was about 1 cm and thickness was 1.08 cm), and then the rice was directly seeded. After 15 days of normal growth, the rice root system had penetrated the straw downward to reach the substrate layer (the straw was artificially removed and the shoots of the rice had been cut off).

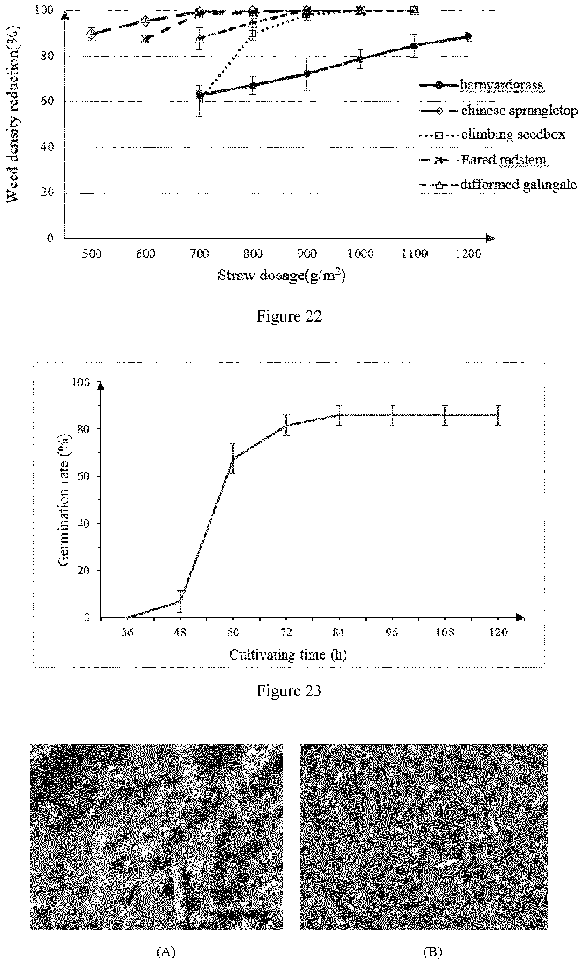

Figure 22 is schematic diagram of the control efficacy of oilseed rape straw mixture on five weeds with different amounts of covering without water layer.
Figure 23 is schematic diagram of the germination dynamics of barnyardgrass after sowing.
Figure 24 is a physical picture of the relative position in the field of the seeds in rice direct seeding of the present invention and the prior art (Figure A is the prior art, rice seeds are sown on the soil; Figure B is the present invention, the rice seeds are sown on the surface of the plant material layer).
Figure 25 is the physical picture in the field of the weed control efficacy of the present invention and the safety of rice (Figure A: rice seeds of the prior art are sown on the soil for 20 days without controlling weeds, and there are many weeds; figure B: the rice seeds of the present invention are sown on the surface of the plant material layer (the length of the maize straw is about 1 cm and the thickness is 0.84 cm) for 20 days, the harmful effects of weeds is completely controlled, and the rice grows well).
Figure 26 is a physical picture in the field of the weed control efficacy of the present invention and the safety of rice (Figure A: rice seeds of the prior art are sown on soil for 50 days without weed control, and the harmful effects of weeds is very serious; Figure B: the rice seeds of the present invention are sown on the surface of the plant material layer (the length of maize straws is about 1 cm and the thickness is 0.84 cm) for 50 days, the harmful effects of weeds is completely controlled, and the rice grows well).
Figure 27 is the photographs of the growth of rice seedlings 4 days after conventional direct seeding. The picture shows that the growth of rice seedlings 4 days after conventional direct seeding is uneven (crooked growth and dwarf rice seedlings are easily overwhelmed when plant material is applied).

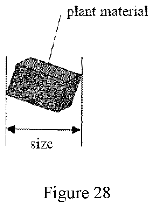

Figure 28 is schematic diagram of the dimensions of the plant material of the present invention.

### Detailed Description

The present invention will be further described below in conjunction with specific embodiments, but the protection scope of the present invention is not limited to the following embodiments. For those skilled in the art, obvious transformations and replacements belong to the protection scope of the present invention.

The invention provides a method for simultaneously controlling weeds and planting target plants by utilizing plant materials, in the present invention, plant material is placed on the surface of the carrier (such as soil) (Fig. 1A), and the target plant reproductive organs and seedlings are planted on the surface of the plant material layer or in the plant material layer (Fig. 1B). After a certain period of time, the target plants grew well and the weed control efficacy was satisfactory (Fig. 1C). Positional relationship: the lowest bottom layer: the carrier, the middle layer: the plant material layer, and the root system of the target plant reproductive organ or seedling is located on the surface of the plant material layer or in the plant material layer. The present invention emphasizes that the plant material does not need to be dried, especially after the plant material is placed, certain water content is needed, and the plant material layer requires high or higher water content before and after planting the target plant. The present invention is diametrically opposed to the operation of the prior art, in which the plant material must be sheared and dried in order not to overwhelm the target plant, which is a necessary technical means. In addition, the prior art requires a small amount of plant materials to be applied every time in order not to overwhelm the target plants. But the negative effect of this is to protect the growth of weeds to a certain extent (because some weeds will not be overwhelmed), thus affecting the efficacy of weed control. On the other hand, slow-growing or weak target plants will be affected by the gravity of the plant material layer, causing the target plants to die or their growth to be inhibited.

In a preferred embodiment, different types of weeds can be controlled requiring different thicknesses of said plant material layers. For example, under the condition of no water layer, in order to obtain 95% or more of the weed control efficacy for *Leptochloa chinensis, Ammannia auriculata, Cyperus difformis, Ludwigia prostrata* and etc., covering the mixture of oilseed rape straw and oilseed rape pod is needed, and the covering thickness is 0.72 cm (600 g/m²), 0.84 cm (700 g/m²), 0.96 cm (800 g/m²), 1.08 cm (900 g/m²), respectively (Figure 22).

Further, the target plant is planted between the day (T=0 day) the plant material layer is placed and 12 months after the plant material layer is placed; preferably, the target plant is planted between the day (T=0 day) the plant material layer is placed and 30 days after the plant material layer is placed; more preferably, the target plant is planted between 1 day (T=1 day) to 10 days after the plant material layer is placed.

Further, planting the target plant on the surface of the plant material layer and/or in the plant material layer may optionally adopt one of the following four methods, or use a mixture:
Method 1: place plant material on the carrier, precisely control the water content of the plant material, and plant the reproductive organs of the target plant on the surface of the plant material layer (see panel B of Figure 10, Figure 1, Figure 2);
Method 2: first place plant material on the carrier, precisely control the water content of the plant material, and plant the target plant seedlings on the surface of the plant material layer (see Figure 1, panel D of Figure 10);
Method 3: place plant material on the carrier, precisely control the water content of the plant material, and plant reproductive organs in the plant material layer (see Figure 3, Figure 4, panel C of Figure 10);
Method 4: place plant material on the carrier, accurately controlling the water content of the plant material, and plant the target plant seedlings in the plant material layer (Figure 3, Figure 4);

Wherein, the height of the initial stem-root differentiation point of the target plant is greater than or equal to 0.2 cm.

Further, the sowing depth of the target plant is selected according to the size of the reproductive organ of the target plant: when the longest side (D) of the reproductive organ is not greater than 0.2 cm, the sowing depth below the surface of the plant material layer is not greater than 3 cm; preferably, the sowing depth below the surface of the plant material layer is not greater than 1 cm; more preferably, the sowing depth below the surface of the plant material layer is not greater than 0.5 cm;
when the longest side of the reproductive organ is greater than 0.2 cm and not greater than 0.5 cm, the sowing depth below the surface of the plant material layer is not greater than 10 cm; preferably, the sowing depth below the surface of the plant material layer is not greater than 5 cm; more preferably, the sowing depth below the surface of the plant material layer is not greater than 3 cm;
when the longest side of the reproductive organ is greater than 0.5 cm, the sowing depth below the surface of the plant material layer is not greater than 12 cm; preferably, the sowing depth below the surface of the plant material layer is not greater than 5 cm.

The specific techniques and effects of the present invention will be described below in conjunction with specific embodiments and comparative examples.

Example 1. Plant material was cut into pieces with the longest side of 0.1-1 cm. In wet direct seeded rice fields, plant material is evenly broadcasted with a thickness of 0.7-2.0 cm at one time 0-3 days after conventional soil preparation. Then water is added to soak the plant material. One to three days after the plant material covering, 5-10 kg of urea and 40-80 kg of compound fertilizer (N+P₂O₅+K₂O≥45%) per 666.7 m² of farmland are applied, and the plant material is allowed to have its saturated water content immediately before planting the crop, and then rice seeds are sown on the surface of the plant material layer. After planting, the plant material was maintained at from 70% of its saturated water content to that the plant material was infiltrated for 7 days and then managed the field normally thereafter. The target plant grows normally and the weed control efficacy is ideal.

Example 2. The plant material was cut into pieces of 0.1-1 cm. In wet direct seeded rice fields, plant material equivalent to a dry weight of 400~900 g/m² was evenly applied at one time 0-3 days after soil preparation. Then irrigate to soak the plant material. One to three days after the plant material covering, 30-80 kg of compound fertilizer (N+P₂O₅+K₂O≥45%) per 666.7 m² of farmland are applied, and the plant material is adjusted to have its saturated water content immediately before planting the crop, and then rice was planted on the surface of the plant material layer by throwing seedlings. The water content of the plant material after planting is maintained at from 70% of its saturated water content to having a water level not greater than 5 cm depth for 5-15 days, after which it is managed normally. The target plant grows normally and the weed control efficacy is ideal.

Example 3. The plant material was cut into pieces of 0.1-1 cm. In upland direct seeded rice fields, plant material equivalent to a dry weight of 400~900 g/m² was evenly applied at one time 0-3 days after soil preparation. After the straw covering, sprinkle or irrigate several times a day to soak the straw with water. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then rice seeds are sown in the plant material layer. The water content of the plant material is maintained at 40%-100% of its saturated water content for 5-15 days after planting, and then managed normally. The target plant grows normally and the weed control efficacy is ideal.

Example 4. In areas where rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. Then irrigate and soak the straw. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then rice seeds are sown on the surface of the plant material layer. The plant material was maintained at from 70% of its saturated water content after planting to that the plant material was infiltrated for 7 days and then managed normally thereafter. The target plant grows normally and the weed control efficacy is ideal.

Example 5. In areas where rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. Then irrigate and soak the straw. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then rice seeds are sown on the surface of the plant material layer. After planting, the plant material was maintained at from 70% of its saturated water content to that the plant material was infiltrated for 7 days, and the threshed oilseed rape pods were used to mulch the paddy field after sowing. The field is normally managed thereafter. The target plant grows normally and the weed control efficacy is ideal.

Example 6. In areas where upland rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. After the straw covering, sprinkle or irrigate several times a day to soak the straw with water. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then rice seeds are sown in the plant material layer. After planting, the water content of the plant material is maintained at 40% to 100% of its saturated water content for 7 days, and the threshed oilseed rape pods are used to mulch the paddy field after sowing. The field is normally managed thereafter. The target plant grows normally and the weed control efficacy is ideal.

Example 7. In areas where rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. Then irrigate and soak the straw. 1 to 3 days after straw covering, 30-80 kg of compound fertilizer (N+P₂O₅+K₂O≥45%) per 666.7 m² of farmland are applied. The plant material was adjusted to reach its saturated water content immediately before planting the crop, and then the rice seedlings were manually transplanted into the plant material layer. After planting, the water content of the plant material is maintained at 70% of its saturated water content to having a water level not greater than 5 cm depth for 5-15 days, and the threshed oilseed rape pods are used to mulch the rice field after planting. The field is normally managed thereafter. The target plant grows normally and the weed control efficacy is ideal.

Example 8. In areas where rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. Then irrigate and soak the straw. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then the rice was transplanted on the surface of the plant material layer by seedling placings. The water content of the plant material is maintained at from 70% of its saturated water content to having a water level not greater than 5 cm depth for 5-15 days after planting. The threshed oilseed rape pods are used to mulch the rice field after planting. The field is normally managed thereafter. The target plant grows normally and the weed control efficacy is ideal.

Example 9. In areas where rice is planted after oilseed rape is harvested, when oilseed rape is harvested, fresh oilseed rape straw and the weeds in the oilseed rape field are cut into pieces of 0.1-1 cm with a machine, with which the original plot surface is evenly covered directly. Then irrigate and soak the straw. 1 to 3 days after straw covering, apply compound fertilizer (N+P₂O₅+K₂O ≥ 45%) 30-80 kg per 666.7 m² of farmland, so that the plant material reaches its saturated water content immediately before planting the crop, and then the rice was transplanted on the surface of the plant material layer by throwing seedlings. After planting, the water content of the plant material is maintained at from 70% of its saturated water content to having a water level not greater than 5 cm depth for 7 days, and the threshed oilseed rape pods are used to mulch the rice field after planting. The field is normally managed thereafter. The target plant grows normally and the weed control efficacy is ideal.

Example 10. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1 to 7 days after straw covering, 30-80 kg of compound fertilizer (N+P₂O₅+K₂O ≥ 45%) per 666.7 m² of farmland are applied, so that the plant material reaches its saturated water content immediately before planting the crop, and then maize seeds are planted in the plant material layer. The water content of the plant material is maintained at 30%-90% of its saturated water content for 7 days after planting, and then managed normally. The target plant grows normally and the weed control efficacy is ideal.

Example 11. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1 to 7 days after straw covering, 30-80 kg of compound fertilizer (N+P₂O₅+K₂O ≥ 45%) per 666.7 m² of farmland are applied, so that the plant material reaches its saturated water content immediately before planting the crop, and then soybean are planted in the plant material layer. The water content of the plant material is maintained at 30%-90% of its saturated water content for 5-15 days after planting, and then managed normally. The target plant grows normally and the weed control efficacy is ideal.

Example 12. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1 to 7 days after straw covering, 30-80 kg of compound fertilizer (N+P₂O₅+K₂O ≥ 45%) per 666.7 m² of farmland are applied, so that the plant material reaches its saturated water content immediately before planting the crop, and then chinese cabbage are then sown on the surface of the plant material layer. The water content of the plant material is maintained at 40%-100% of its saturated water content for 5-15 days after planting, and then managed normally. The target plant grows normally and the weed control efficacy is ideal.

Example 13. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1-7 days after straw covering, 30-80kg of compound fertilizer (N+P₂O₅+K₂O≥45%) per 666.7 m² of farmland are applied, so that the plant material reaches its saturated water content immediately before planting the target plant, and the grape seedlings are then planted in the plant material layer. The water content of the plant material is maintained at 30%-100% of its saturated water content for 5~15 days after planting, and then managed normally. The target plant grows normally and the weed control efficacy is ideal.

Example 14. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1-7 days after straw covering, 30-80 kg of compound fertilizer (N+P₂O₅+K₂O≥45%) per 666.7 m² of farmland are applied, so that the plant material reaches its saturated water content immediately before planting the target plant, and the orchid seedlings are then planted in the plant material layer. The water content of the plant material is maintained at 30%-100% of its saturated water content for 5-15 days after planting, and then managed normally. The target plant grows normally and the weed control efficacy is ideal.

Example 15. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1-7 days after straw covering, 30-80 kg of compound fertilizer (N+P₂O₅+K₂O≥45%) per 666.7 m² of farmland are applied, so that the plant material reaches its saturated water content immediately before planting the target plant, and the chinese traditional medicinal crops *Corydalis yanhusuo* seeds are then sown in the plant material layer. The water content of the plant material is maintained at 30%-90% of its saturated water content for 5-15 days after planting, and then managed normally. The target plant grows normally and the weed control efficacy is ideal.

Example 16. When the oilseed rape was harvested, the fresh oilseed rape straw and the weeds in the oilseed rape field were cut into pieces of 0.1-1 cm with a machine, with which the ground surface was evenly covered directly. Then irrigate and soak the straw. 1-7 days after straw covering, 30-80 kg of compound fertilizer (N+P₂O₅+K₂O≥45%) per 666.7 m² of farmland are applied, so that the plant material reaches its saturated water content immediately before planting the target plant, and then the turf *Zoysia matrella* seedlings were planted on the surface of the plant material layer. The water content of the plant material is maintained at 50%-100% of its saturated water content for 5-15 days after planting, and then managed normally.

Example 17. The maize straw was cut into pieces of 0.1-1 cm. Mixing the maize straw equivalent to 1.0 kg dry weight with 50~300 g of compound fertilizer (N+P₂O₅+K₂O≥45%) evenly, putting it into a container, and adding water to infiltrate the straw. The plant material is adjusted to reach its saturated water content immediately before planting the target plant, then jasmine seedlings are planted in the plant material layer, and the water content of the plant material is maintained at 30% to 90% of its saturated water content for 7 days after planting. It is normally managed thereafter. Target plants grow normally.

Example 18. Plant material maize straw was cut into pieces of 0.1-1 cm. Mix the maize straw equivalent to 10.0 kg dry weight with compound fertilizer (N+P₂O₅+K₂O≥45%) 0.50-3 kg evenly. First lay a layer of soil on the roof, then place straws, and add water to moisten the straws. The plant material is adjusted to reach its saturated water content immediately before planting the target plant, then plant turf grass on the surface of the plant material layer, and the water content of the plant material is maintained at 40% to 100% of its saturated water content for 7 days after planting. The field is normally managed thereafter. Target plants grow normally.

Example 19. After the wheat was harvested, basal fertilizer was applied according to the conventional method, and the weeds in the field were cut into fragments of 1-3 cm with a machine and broadcasted to the field. The fresh wheat straw is evenly covered on the surface of the original plot directly without shearing. The wheat straw is basically placed in parallel, and should not be placed in a criss-cross way. It is better to arrange it tightly. Then irrigate and soak the straw. 1 to 7 days after straw covering, the plant material was adjusted to reach its saturated water content immediately before planting the target plant, and then rice seeds were sown on the surface of the plant material layer. The plant material was maintained at from 70% of its saturated water content to that the plant material was infiltrated for 7 days after planting. Five days after rice planting, 10-20 kg of urea was applied per 666.7 m² of farmland, and then managed normally. The target plant grows normally and the weed control efficacy is ideal.

Example 20. After the rice was harvested, basal fertilizer was applied according to the conventional method, and the weeds in the field were cut into fragments of 1-3 cm with a machine and broadcasted to the field. The fresh rice straw is evenly covered on the surface of the original plot directly without shearing. The rice straw is basically placed in parallel, and should not be placed in a criss-cross way. It is better to arrange it tightly. Then irrigate and soak the straw. 5 to 15 days after straw covering, the plant material was adjusted to reach its saturated water content immediately before planting the target plant, and then rice seeds were sown on the surface of the plant material layer. The plant material was maintained at from 70% of its saturated water content to that the plant material was infiltrated for 7 days after planting. Five days after rice planting, 10-20 kg of urea was applied per 666.7 m² of farmland, and then managed normally. The target plant grows normally and the weed control efficacy is ideal.

Example 21. After the rice was harvested, basal fertilizer was applied according to the conventional method, and the weeds in the field were cut into fragments of 1-3 cm with a machine and broadcasted to the field. The fresh rice straw is directly and evenly covered on the surface of the original plot without shearing. The rice straw is basically placed in parallel, and should not be placed in a criss-cross way. It is better to arrange it tightly. Then irrigate and soak the straw. 5 to 15 days after straw covering, the plant material was adjusted to reach its saturated water content immediately before planting the target plant, and then oilseed rapes seeds were sown on the surface of the plant material layer. The water content of the plant material is maintained at 40%-100% of its saturated water content for 7 days after planting. Five days after oilseed rape planting, 10-20 kg of urea was applied per 666.7 m² of farmland, and then managed normally. The target plant grows normally and the weed control efficacy is ideal.

Example 22. After the maize is harvested, the weeds in the field are cut into fragments of 1-3 cm with a machine and broadcasted to the field, and the base fertilizer is applied according to the conventional method, and the fresh maize straw are evenly covered on the surface of the original plot directly without shearing. The maize straw is basically placed in parallel, and should not be placed in a criss-cross way. It is better to arrange them tightly. Then irrigate and soak the straw. 10 to 30 days after straw covering, the plant material was adjusted to reach its saturated water content immediately before planting the target plant, and then rice seeds were sown on the surface of the plant material layer. The plant material was maintained at from 70% of its saturated water content to that the plant material was infiltrated for 7 days after planting. Five days after rice planting, 10-20 kg of urea was applied per 666.7 m² of farmland, and then managed normally. The target plant grows normally and the weed control efficacy is ideal.

Example 23. The wheat straw was cut into pieces with the longest side of 0.1-4 cm. In the wet direct seeding rice field, the base fertilizer was applied according to the conventional method, after the conventional soil preparation the wheat straw with a thickness of 0.9 cm was evenly broadcasted on the same day of soil preparation. Then irrigate to soak the plant material. The plant material is adjusted to reach its saturated water content on the same day after the plant material covering, then rice seeds are sown on the surface of the plant material layer on the same day after the covering. After planting, the plant material was maintained at from 70% of its saturated water content to that the plant material was infiltrated for 7 days, and 10-20 kg of urea was applied per 666.7 m² of farmland at 5 days after rice planting, and then managed normally. The target plant grows normally and the weed control efficacy is ideal.

### Examples 24-38 and comparative examples 1-6

Table 1 shows the corresponding parameters after oilseed rape straw covering at different times in the rice filed of different cultivation methods, indicating the relationship between the thickness of the plant material layer of the present invention and the stem base point and initial stem-root differentiation point and weed control efficacy and survival rate and other parameters.

Indicators and detection
1) When the target plant is planted with a reproductive organ, before the plant material is completely decomposed, the initial stem-root differentiation point of the target plant is visible to the naked eye in the plant material layer or higher than the plant material layer; after the seedling of the target plant emerges, the stem base point is in or above the plant material layer.
2) When the target plant is planted by seedling placings, throwing seedlings, or transplanting seedlings, before the plant material is completely decomposed, the stem base point of the target plant is visible to the naked eye in the plant material layer or higher than the plant material layer.
3) When planting the target plant, the target plant is visible to the naked eye on the surface of the plant material layer or in the plant material layer, and the reproductive organs of the weeds are located under the plant material layer, forming a sandwich structure.
4) After planting the target plant, when weeds occur, before the plant material is completely decomposed, it is visible to the naked eye that the initial stem-root differentiation point of 95% of the weeds is located under the plant material layer.
5) After planting the target plant, when the covering thickness of the plant material reaches 0.9 cm, when weeds occur, it is visible to the naked eye that the initial stem-root differentiation point of 95% of the target plants is 0.5 cm or more higher than the initial stem-root differentiation point of the weeds, and/or within 25 days after the target plant is planted, the stem base point of 95% of the target plants is higher than the weed stem base point by 0.8cm or more.
6) When the covering thickness of the plant material reaches 0.9 cm, at the end of the uniform covering of the plant material, it is visible to the naked eye that 95% of the carrier area is covered by the plant material, and the carrier (such as soil) cannot be seen.

**Table 1: The difference between the Example of the present invention and the comparative example**

| | Plant material | | Rice | | | | | | | | | | | | | | Weed control efficacy |
|---|---|---|---|---|---|---|---|---|---|---|---|---|---|---|---|---|---|
| | Placing time | Thickness(mm) | Planting method | Plant material below reproductive organs(1 DAS) | Plant material under transplanted seedlings (1 DAS) | Plant material below the initial stem-root differentiati on point (5 DAS) | Plant material below the stem base point (25 DAS) | Height of initial stem-root differentiation point (mm, 5 DAS) | Stem base point height (mm, 25 DAS) | The stem base point is at what place of the plant material layer (25 DAS) | Plants with directly visible roots to the naked eye (1 DAS) | Plants with directly visible roots to the naked eye (25 DAS) | Plants with directly visible roots to the naked eye (before harvest) | Stem base point higher than weed stem base point (mm, 5 DAS) | Stem base point higher than weed stem base point (mm, 25 DAS) | Surviva l rate (%, 7 DAS) | Weed density reduction (%, 50 DAS) |
| Example 24 | 0 day before sowing | 3 | Direct seeded on the surface the plant material layer | Yes | / | Yes | Yes | 4±1 | 9±2 | Above | 95% or more | 95% or more | 95% or more | >7 | >8 | 98 | 91 |
| Example 25 | 0 day before sowing | 3 | Direct seeded in the plant material layer | Yes | / | Yes | Yes | 2.5±0.4 | 7±2 | Upper 1/3 layer and above | 95% or more | 95% or more | 95% or more | >7 | >8 | 99 | 90 |
| Example 26 | 0 day before transplanting | 3 | Transplanted on the surface of the plant material layer | Yes | Yes | Yes | Yes | 14±2 | 20±3 | Above | 95% or more | 95% or more | 95% or more | >7 | >8 | 98 | 91 |
| Example 27 | 0 day before transplanting | 3 | Transplanted in the plant material layer | Yes | Yes | Yes | Yes | 12±2 | 18±2 | Above | 95% or more | 95% or more | 95% or more | >7 | >8 | 99 | 92 |
| Example 28 | 0 day before | 3 | Seedlings | Yes | Yes | Yes | Yes | 5±2 | 11±2 | Above | 95% or | 95% or | 95% or | >7 | >8 | 97 | 91 |
| | throwing seedling | | were thrown on the surface layer of plant material | | | | | | | | more | more | more | | | | |
| Example 29 | 0 day before sowing | 9 | Direct seeded on the surface of the plant material layer | Yes | / | Yes | Yes | 9±2 | 15±2 | Above | 95% or more | 95% or more | 95% or more | >11 | >12 | 97 | 99 |
| Example 30 | 0 day before sowing | 9 | Direct seeded in the plant material layer | Yes | / | Yes | Yes | 7±2 | 12±2 | Upper 1/3 layer and above | 95% or more | 95% or more | 95% or more | >11 | >12 | 97 | 99 |
| Example 31 | 0 day before transplanting | 9 | Transplanted on the surface of the plant material layer | Yes | Yes | Yes | Yes | 19±2 | 26±3 | Above | 95% or more | 95% or more | 95% or more | | | 98 | 100 |
| Example 32 | 0 day before transplanting | 9 | Transplanted in the plant material layer | Yes | Yes | Yes | Yes | 16±2 | 23±3 | Above | 95% or more | 95% or more | 95% or more | | | 98 | 100 |
| Example 33 | 0 day before throwing seedling | 9 | Seedlings were thrown on the surface layer of plant material | Yes | Yes | Yes | Yes | 11±2 | 18±2 | Above | 95% or more | 95% or more | 95% or more | >11 | >12 | 98 | 99 |
| Example 34 | 0 day before sowing | 15 | Direct seeded on the surface of plant material layer | Yes | / | Yes | Yes | 15±2 | 21±2 | Above | 95% or more | 95% or more | 95% or more | | | 96 | 100 |
| Example 35 | 0 day before sowing | 15 | Direct seeded in the plant material layer | Yes | / | Yes | Yes | 11±3 | 17±2 | Above upper 1/3 layer | 95% or more | 95% or more | 95% or more | | | 96 | 100 |
| Example 36 | 0 day before transplanting | 15 | Transplanted on the surface of the plant material layer | Yes | Yes | Yes | Yes | 20±2 | 27±3 | Above | 95% or more | 95% or more | 95% or more | | | 96 | 100 |
| Example 37 | 0 day before transplanting | 15 | Transplanted in the plant material layer | Yes | Yes | Yes | Yes | 15±3 | 22±3 | Above | 95% or more | 95% or more | 95% or more | | | 96 | 100 |
| Example 38 | 0 day before throwing seedling | 15 | Seedlings were thrown on the surface layer of plant material | Yes | Yes | Yes | Yes | 16±3 | 23±3 | Above | 95% or more | 95% or more | 95% or more | | | 96 | 100 |
| Comparative example 1 | 4 days after sowing | 3 | Direct seeded on the surface of soil | No | No | No | Yes for 40% | 1±0.8 | 5±1 | Above for 73% | 5% or less | Less than 30% | 95% or more | <7 | <8 | 91 | 68 |
| Comparative example 2 | 4 days after transplanting | 3 | transplanted in soil | No | No | No | No | <0 | <0 | Below | 5% or less | 5% or less | 5% or less | <0 | <0 | 96 | 74 |
| Comparative example 3 | 4 days after sowing | 9 | Direct seeded on the surface of soil | No | No | No | Yes for 40% | 1±0.5 | 5±1 | Below the upper 1/3 layer | 5% or less | 5% or less | Less than 50% | <7 | <8 | 87 | 85 |
| Comparative example 4 | 4 days after transplanting | 9 | transplanted in soil | No | No | No | No | <0 | <0 | Below | 5% or less | 5% or less | 5% or less | <0 | <0 | 95 | 94 |
| Comparative example 5 | 4 days after sowing | 15 | Direct seeded on the surface of soil | No | No | No | Yes for 40% | 1±0.5 | 5±1 | Below the upper 1/3 layer | 5% or less | 5% or less | 5% or less | <7 | <8 | 77 | 92 |
| Comparative example 6 | 4 days after transplanting | 15 | transplanted in soil | No | No | No | No | <0 | <0 | Below | 5% or less | 5% or less | 5% or less | <0 | <0 | 94 | 95 |

| | | | | | | | | | | | | | | | | | |
|---|---|---|---|---|---|---|---|---|---|---|---|---|---|---|---|---|---|
| Note 1: The seven main weeds tested in the paddy fields include: barnyardgrass, chinese sprangletop, difformed galingale, rice galingale, eared redstem, climbing seedbox, yerbadetajo. Note 2: The pot experiment was carried out under natural light conditions in the greenhouse, the carrier was soil, the plant material was dry oilseed rape straw with an average length of 1 cm, and weed seeds were sprinkled on the soil surface. Example 24 to Example 38, rice is planted after placing the plant material, wherein for direct seeding, the water content of the plant material is maintained at 100% of its saturated water content to that the plant material was infiltrated after placing the plant material, and before planting, and after planting; for transplanting and throwing seedlings, maintaining the water content at from 100% of the saturated water content to having a water level not greater than 2 cm depth after placing the plant material, and before planting and after planting. Comparative example 1 to comparative example 6 refer to the conditions described in Chinese application CN106342612A, wherein rice is planted first, and then the plant material is broadcasted, and the water content of the plant material after the broadcasting is not controlled. For direct seeding, there was no water layer on the soil surface within 8 days after the direct seeding of rice. For transplanting, a water layer of about 2 cm is maintained after the rice is planted. DAS: Days after planting. The survival rate of the target plants and weed control efficacy were investigated 21 days after planting the target plants. | | | | | | | | | | | | | | | | | |

The difference between the present invention and the prior art is:
1. The plant material is not dried in the sun, and it is a necessary condition to control the high or higher water content in the plant material after placing the plant material, and it must be controlled before and after planting the target plant, which is different from the prior art wherein the plant material needs to be dried in the sun, and the plant material is placed without control, and the preparation process of the plant material must also contain a drying step, that is, the present invention provides technical teaching that is completely opposite to the prior art;
2. The method of placing the plant material is also different. In the present invention, the cover can be broadcasted in a concentrated manner by dumping, or broadcasted evenly, and there is no problem of overpowering the target plant (such as rice seedlings), and the dosage is preferably 0.1-12 cm, preferably 0.9-2 cm; in the prior art, a small amount of plant material is broadcasted every time and with many times, which cannot be dumped and covered in a concentrated manner. First, the mulch is broadcasted among the rows of rice seedlings, and then spread evenly in the paddy field to cover the soil surface; avoiding overwhelming the rice seedlings is needed;
3. the planting location is different. There must be a plant material layer below the reproductive organ of the target plant of the present invention, preferably, there is a plant material layer beside the reproductive organ, and more preferably, there is a plant material layer above the reproductive organ, and it is planted on the surface of the plant material layer or in the plant material layer; in the prior art, there is no plant material layer below the reproductive organ, and there should be a plant material layer above the reproductive organ, and the required dosage is 300-1100 g/m³, and the reproductive organ is planted under the plant material layer;
   The target plant of the present invention has a plant material layer below the initial stem-root differentiation point of the target plant, and there is plant material beside the initial stem-root differentiation point of the plant; however, in the prior art, there is no plant material layer below the initial stem-root differentiation point of the target plant, and there is plant material beside the initial stem-root differentiation point of the plant;
4. the relative time for placing the plant material is also different. The plant material is placed before the target plant is planted in the present invention, while the plant material is placed after the target plant is planted in the prior art.

### Test Example 1: Inhibitory efficacy of oilseed rape straw covering at different times on barnyardgrass

Experiments are carried out in a greenhouse. The culture medium peat soil, vermiculite, and perlite were mixed uniformly in a ratio of 3:1:1, and the oilseed rape straw were crushed with a machine until the longest side was 1 cm long. The plastic pots are 18 cm in diameter and have 3 small holes at the bottom. Each pot is filled with a substrate depth of 3 cm, placed in a large plastic square pot, and water is added to the square pot to make the water surface level with the surface of the substrate in the small pot. Each small pot was sown with 50 barnyardgrass seeds, and the straw thickness was 0.84 cm (700 g/m²) and 1.08 cm (900 g/m²) on the day, 1 d, and 2 d after sowing, respectively. There were 6 covering treatments in total. The non-covering control (CK) was not covered by straw, with four replicates per treatment. Water was sprinkled in the morning, noon and evening every day to keep the straw moist but without a water layer. The number of seedlings in each treatment was investigated 12 days after barnyardgrass sowing.

The results showed that the weed density reduction of oilseed rape straw covering on barnyardgrass was greatly affected by straw covering time, and the inhibition efficacy was the best if covering is performed on the day of sowing, and the inhibition rate was 92.47% or more when the covering thickness was 0.84 cm and 1.08 cm (Table 2). With the delay of covering time, the inhibitory efficacy was significantly reduced. The weed density reduction when the covering with a thickness of 1.08 cm is performed at 1 and 2 days after sowing (DAS) decreased by 19.18 and 31.37 percentage points, respectively, compared with the covering performed on the day after sowing. In addition, the difference in inhibition rate was small between the covering performed the day of sowing and 1 DAS with thickness of 0.84 and 1.08 cm, while the difference between the two with 2 DAS covering was larger, reaching 12.18 percentage points. The inhibitory efficacy on weeds is limited when the water content of plant material is as follows: the plant material (straw) is moist by sprinkling but not infiltrated, and there is no water layer.

**Table 2: Control efficacy of different covering time of oilseed rape straw on barnyardgrass**

| Covering time (DAS) | Weed density reduction (%) | |
|---|---|---|
| | Thickness 0.84 cm | Thickness 1.08 cm |
| 0 | 92.47 aA | 96.24 aA |
| 1 | 74.19 bB | 77.06 bB |
| 2 | 52.69 cC | 64.87 cC |

| | | |
|---|---|---|
| Note: the length of covered oilseed rape straw is 1 cm; DAS: days after barnyardgrass sowing; data in the same column marked with different lowercase letters indicate significant differences (p≤0.05), and those marked with different capital letters indicate extremely significant differences (p≤0.01). | | |

### Test Example 2: Inhibitory efficacy of different amounts of oilseed rape straw mixture covering on five weeds

Experiments are carried out in a greenhouse. The culture medium peat soil, vermiculite, and perlite are mixed uniformly in a ratio of 3:1:1, and oilseed rape straw and oilseed rape pod are both cut to 1 cm on the longest side by a machine and mixed uniformly in a ratio of 2.5:1 for use. The plastic pots are 18 cm in diameter and have 3 small holes at the bottom. Each pot is filled with a substrate depth of 3 cm, placed in a large plastic square pot, and water is added to the square pot to make the water surface level with the surface of the substrate in the pot. Straw covering tests were carried out on five weeds, barnyardgrass, chinese sprangletop, eared redstem, climbing seedbox, difformed galingale, and the covering treatment was conducted 1 day after weeds sowing. The specific experimental design is shown in Table 3, and each treatment was repeated four times. Weed seeds are mixed with fine sand and sown. After sowing, the oilseed rape straw mixture is evenly sprinkled at the corresponding time, and water is sprinkled to keep the straw moist but without water layer. The number of barnyardgrass was investigated 10 days after covering, the number of chinese sprangletop was investigated 20 days after covering, and the number of plants of eared redstem, climbing seedbox, and difformed galingale were investigated 30 days after covering.

**Table 3: The experimental plan of the control efficacy of different thicknesses of plant materials on five weeds**

| weed species | Seeding number (grains) | Straw thickness (cm) | | | | | |
|---|---|---|---|---|---|---|---|
| barnyardgrass | 50 | 0.84 | 0.96 | 1.08 | 1.20 | 1.32 | 1.44 |
| chinese sprangletop | 100 | 0.60 | 0.72 | 0.84 | 0.96 | 1.08 | |
| eared redstem | 80 | 0.72 | 0.84 | 0.96 | 1.08 | 1.20 | |
| climbing seedbox | 80 | 0.84 | 0.96 | 1.08 | 1.20 | 1.32 | |
| difformed galingale | 120 | 0.84 | 0.96 | 1.08 | 1.20 | 1.32 | |

The results show that: when the plant material (straw) is kept moist by sprinkling but not infiltrated and without a water layer, in order to achieve a weed control efficacy of 95% or more, the control of chinese sprangletop, eared redstem, difformed galingale, and climbing seedbox, should be covered with the mixture of oilseed rape straws and oilseed rape pods with a thickness of 0.72 cm, 0.84 cm, 0.96 cm, 1.08 cm, respectively (Figure 22). However, under the condition of this water content, the 1.44 cm thickness of the mixture has weed density reduction of 88.44% on barnyardgrass.

### Test Example 3: Weight change of oilseed rape straw and oilseed rape pod after water absorption

The test was carried out under laboratory conditions, during which the temperature was between 24°C and 28°C and the air humidity was between 50% and 85%. First, basic dry and spare plant materials, the oilseed rape straws and oilseed rape pods with an average size of no more than 1 cm were dried at 80°C for 8 h, and then 50 g of each were weighed and put into nylon mesh bags respectively, and weighed (W1); fully immerse the mesh bag in clean water, take out the mesh bag after different time intervals, weigh when the mesh bag does not drip (W2), and then put the mesh bag back into the water. The weights of oilseed rape straws and oilseed rape pods after soaking in water for different times were W=50+W2-W1.

The results showed that oilseed rape straw and oilseed rape pods absorbed water quickly, and they were basically saturated after 48 hours of water absorption; the weights of oilseed rape straw and oilseed rape pods were 5.95 and 5.12 times their dry weight after 54 hours of water absorption (Table 4).

**Table 4: Weight change of oilseed rape straw and oilseed rape pods after different water absorption time**

| Water absorption period (h) | Oilseed rape straw weight (g) | Oilseed rape pods weight (g) |
|---|---|---|
| 0 | 50 | 50 |
| 0.5 | 233.61 | 186.14 |
| 6 | 244.72 | 198.64 |
| 12 | 244.38 | 212.96 |
| 24 | 273.53 | 248.85 |
| 48 | 291.48 | 260.20 |
| 54 | 297.48 | 255.82 |

The following takes the direct seeding method of rice seeds as an example (Table 5) to illustrate the essential difference between the present invention and the prior art. Similarly, taking the rice seedling planting method as an example (Table 6), it is illustrated that the present invention is also substantially different from the prior art.

**Table 5: Partial differences between the present invention and the prior art (takeing direct seeding of rice seeds as an example)**

| Item | | Example 39 | Example 40 | Comparative example 7, conventional rice direct seeding technology | Comparative example 8, oilseed rape straw mulching method for controlling weeds in paddy fields (refer to chinese patent CN106342612A) | Comparative example 9, non-tillage direct seeding straw returning technology for rice |
|---|---|---|---|---|---|---|
| Test conditions | | The carrier was soil, and six kinds of weed seeds, including barnyardgrass, chinese sprangletop, eared redstem, climbing seedbox, and difformed galingale, were sown on the surface of the soil in a pot with a diameter of 42 cm. Greenhouse 25°C∼30°C, natural light | | | | |
| Plant materials | Species | oilseed rape straw | oilseed rape straw | | oilseed rape straw | wheat straw |
| | Average length (cm) | 1 | 1 | | 1 | 8-10 |
| | Covering thickness(cm) | 0.84 | 0.84 | | 0.84 | 0~2 |
| | Dryness | Not dried | Not dried | | Dried | Not dried |
| | Covering time (DAS) | 3 days before rice planting | 3 days before rice planting | | 5 days after rice planting | The day after rice planting |
| | Water content control during covering period | Flooded plant material | Flooded plant material | | | |
| | Plant material water content control immediately before planting the target plant | Saturated water content | Saturated water content | | | |
| | Moisture control of plant material after rice planting | 70%-100% of saturated water content | 70%-100% of saturated water content | | Routine not controlled | One-time wet |
| Plant nutrition | Urea, g/pot | 2.1 | 2.1 | | | |
| | Compound fertilizer, g/pot | 6.2 | 6.2 | 6.2 | 6.2 | 6.2 |
| | Apply | Apply to the surface of the plant material layer before planting rice | Apply to the surface of the plant material layer before planting rice | Apply to the surface of the soil before planting rice | Apply to the surface of the soil before planting rice | Apply to the surface of the soil before planting rice |
| Rice planting (40 grains/pot) | Time | 3 d after covering with plant material | 3 d after covering with plant material | The same day as Example 39. | The same day as Example 39. | The same day as Example 39. |
| | Position | The surface of the plant material layer | In the plant material layer | The surface of soil | The surface of soil | The surface of soil |
| Safety to rice | Rice survival rate 7 days after direct seeding | 92.5 | 91.7 | 93.3 | 90.0 | 85.8 |
| | Average plant height of rice 15 days after sowing (cm) | 27.7 | 27.2 | 27.1 | 27.3 | 25.9 |
| | Average tiller number of rice 30 days after sowing | 3.25 | 3.28 | 2.43 | 3.24 | 2.85 |
| | Average height of the initial stem-root differentiation point of rice 30 days after sowing (cm) | 1.3 | 0.53 | 0.16 | 0.15 | 0.13 |
| Weed control efficacy (30 days after rice sowing) | Weed density reduction (%) | 98.5 | 98.2 | 0 | 84.3 | 58.7 |
| | weed fresh biomass reduction (%) | 95.2 | 94.1 | 0 | 78.6 | 53.7 |

**Table 6: Partial differences between the present invention and the prior art (take the planting of rice seedlings as an example)**

| Item | | Example 41 | Example 42 | Comparative example 10, conventional rice transplanting technology | Comparative Example 11, oilseed rape straw mulching method for controlling weeds in paddy fields(refer to chinese patent CN106342612A) |
|---|---|---|---|---|---|
| Test conditions | | The carrier was soil, and six kinds of weed seeds, including barnyardgrass, chinese sprangletop, eared redstem, climbing seedbox, and difformed galingale, were sown on the surface of the soil in a pot with a diameter of 42 cm. Greenhouse 25°C~30°C, natural light | | | |
| Plant material | Species | oilseed rape straw | oilseed rape straw | | oilseed rape straw |
| | Average length (cm) | 1 | 1 | | 1 |
| | Covering thickness(cm) | 0.84 | 0.84 | | 0.84 |
| | Dryness | Not dried | Not dried | | Dried |
| | Covering time (DAS) | 3 days before rice planting | 3 days before rice planting | | 5 days after rice planting |
| | Water content control during covering period | Flooded plant material | Flooded plant material | | |
| | Plant material water content control immediately before planting rice | Saturated water content | Saturated water content | | |
| | Water content control of plant material after rice planting | 1~2 cm depth of water level | 1~2 cm depth of water level | | 1~2 cm depth of water level |
| Plant nutrition | Urea, g/pot | 2.1 | 2.1 | | |
| | Compound fertilizer, g/pot | 6.2 | 6.2 | 6.2 | 6.2 |
| | Apply | Apply to the surface of the plant material layer before planting rice | Apply to the surface of the plant material layer before planting rice | Apply to the surface of the soil before planting rice | Apply to the surface of the soil before planting rice |
| Rice planting, clump/pot (3 plants/ clump) | Time | 3 d after plant material covering | 3 d after plant material covering | The same day as Example 41. | The same day as Example 41. |
| | Position, planting method | Surface of plant material layer, seedling placing | In the plant material layer, throwing planting | transplanting in soil | transplanting in soil |
| Rice safety | Rice survival rate 10 days after planting, % | 100 | 100 | 100 | 100 |
| | Average plant height of rice 20 days after planting (cm) | 35.2 | 35.5 | 34.4 | 34.8 |
| | Average tiller number of rice 30 days after planting | 9.61 | 9.65 | 7.53 | 9.64 |
| | Average height of the initial stem-root differentiation point of rice 30 days after planting (cm) | 2.31 | 2.01 | <0 | <0 |
| Weed control efficacy (30 days after rice planting) | Weed density reduction 30 days after planting, % | 99.1 | 98.6 | 0 | 89.4 |
| | weed fresh biomass reduction (%) | 96.2 | 94.3 | 0 | 84.7 |

### Experiment 1. Field plot experiment of rice cultivation with plant material

Field trials were carried out in direct seeding rice fields in Hangzhou, Zhejiang Province. The oilseed rape straws were sun-dried and cut into stem segments with a length of 0.1-1 cm. The paddy field was drained after soil preparation, and four doses of oilseed rape straw covering were carried out on the day of soil preparation: 3.6 cm (300 g/m²), 6.0 cm (500 g/m²), 8.4 cm (700 g/m²), and 1.08 cm (900 g/m²). Then irrigate to moisten the straw. On the third day after straw covering, 10 kg of urea and 40 kg of compound fertilizer (including N+P₂O₅+K₂O) were applied per 666.7 m² paddy field, and then the germinated rice seeds were sown. No herbicides are used. Otherwise the paddy fields are managed according to conventional methods. The area of each treatment plot was 12 m², and the following 5 treatments were set up, each repeated 3 times. The rice variety is Xiushui 134, and the main control objects are barnyardgrass, chinese sprangletop, climbing seedbox, sheathed monochoria, pygmy arrowhead, eared redstem, manyflower ammannia, difformed galingale, miliumlike fimbristylis, indian rotala, procumbent falsepimperne, yerbadetajo and etc.
Treatment 1. Sow rice 3 days after oilseed rape straw (300 g/m²) covering.
Treatment 2. Sow rice 3 days after oilseed rape straw (500 g/m²) covering.
Treatment 3. Sow rice 3 days after oilseed rape straw (700 g/m²) covering.
Treatment 4. Sow rice 3 days after oilseed rape straw (900 g/m²) covering.
CK. Blank Control.
20 days after rice sowing, 3 points on the diagonal line of each plot were selected to investigate the number of rice plants, and the area of each point was 0.25 m² (50*50 cm).
40 days after sowing of rice, 3 points on the diagonal line of each plot were selected, with the area of each point 0.25 m² (50*50 cm), to investigate the number of surviving weeds and the fresh weight of the shoots, and calculate the weed density reduction and weed fresh biomass reduction.

The specific results are shown in Table 7 and Table 8.

From the results in Table 7, it can be seen by the investigation on 20 days after rice sowing that the oilseed rape straw covering of 300, 500, 700 and 900 g/m² before rice seeding has little effect on the emergence of rice, and the survival rate of rice is equivalent to 94.1% or more of the control. And different amounts of oilseed rape straw covering had no obvious adverse effects on the plant height and tillering of rice seedlings. This shows that it is feasible to cover with oilseed rape straw (300~900 g/m²) before sowing, which is safe for the emergence of rice and the growth of seedlings.

The results are shown in Table 8. For oilseed rape straw covering of 300, 500, 700 and 900 g/m² before rice seeding, the control efficacy on weeds in paddy field, investigated 40 days after rice sowing, is increased with the increase of the amount of oilseed rape straw. The control efficacy of oilseed rape straw covering of 300, 500, 700 and 900 g/m² was ideal, and the weed density reduction was 80.9%, 90.3%, 97.3 and 98.1%, respectively, and the weed fresh biomass reduction was 84.7%, 91.0%, 98.4% and 98.9%, respectively. This shows that oilseed rape straw covering before rice seeding can effectively control the harmful effects of weeds in paddy fields.

**Table 7: Effects of sowing after covering with different amounts of oilseed rape straw on the emergence of direct seeding rice (20 days after sowing)**

| Test group | Number of rice plants (plant/0.25 m²) | Percentage compared with that of CK (%) |
|---|---|---|
| Treatment 1 | 33.3 | 99.0 |
| Treatment 2 | 33.0 | 98.0 |
| Treatment 3 | 32.0 | 95.0 |
| Treatment 4 | 31.7 | 94.1 |
| CK | 33.7 | 100.0 |

**Table 8: Control efficacy of sowing after covering with different oilseed rape straw on weeds in direct seeding paddy field (40 days after sowing of rice)**

| Test group | Number of weeds (plant/0.25 m²) | Weed density reduction (%) | Fresh weight of weeds (g/0.25 m²) | Weed fresh biomass reduction (%) |
|---|---|---|---|---|
| Treatment 1 | 47.3 | 80.9 | 48.4 | 84.7 |
| Treatment 2 | 24.0 | 90.3 | 28.4 | 91.0 |
| Treatment 3 | 6.7 | 97.3 | 5.2 | 98.4 |
| Treatment 4 | 4.7 | 98.1 | 3.4 | 98.9 |
| CK | 248.3 | | 317.0 | |

In order to illustrate that the present invention can be applied to the above-mentioned target plants and control the above-mentioned weeds, the comparison of the planting for 26 species of target plants and weed control efficacy carried out by the method of the present invention is shown in Table 9:

**Table 9: Comparison of planting for 26 species of target plants and weed control efficacy**

| Planting target plant species | | Target plant survival rate (%) | | | | | | | | | |
|---|---|---|---|---|---|---|---|---|---|---|---|
| | | Soy plant material | Oil plant material | Cereals plant material | | | Painful plant material | Stolon plant material | Erect stem plant material | Green manure plant material | Comparative example |
| | | Soybean straw | oilseed rape straw | Maize straw | Wheat straw | Rice straw | Sweet Potato Vine | Peanut above ground | Potato stems and leaves | Chinese milk vetch stem and leaf flower | Soil |
| Grain and Oil Crops | Rice | 81.7 | 93.2 | 82.5 | 93.7 | 80.4 | 83.6 | 84.1 | 82.5 | 85.7 | 95.2 |
| | Wheat | 87.5 | 96.8 | 90.1 | 91.4 | 90.5 | 86.7 | 86.2 | 84.7 | 89.9 | 96.7 |
| | Barley | 85.4 | 96.5 | 92.6 | 92.1 | 90.4 | 89.4 | 88.7 | 86.6 | 89.4 | 96.3 |
| | Maize | 85.1 | 84.6 | 81.3 | 84.1 | 82.4 | 80.1 | 84.6 | 79.3 | 78.4 | 97.3 |
| | Soybean | 70.4 | 70.8 | 72.6 | 73.8 | 76.9 | 69.4 | 68.4 | 70.1 | 71.2 | 91.8 |
| | Green bean | 85.1 | 89.6 | 82.5 | 88.7 | 89.4 | 86.7 | 88.8 | 85.4 | 83.2 | 92.5 |
| | oilseed rape | 90.4 | 95.6 | 94.5 | 94.1 | 93.4 | 92.1 | 90.1 | 91.2 | 90.4 | 95.2 |
| | Peanut | 73.2 | 76.1 | 76.4 | 78.5 | 79.4 | 69.4 | 68.5 | 66.9 | 70.5 | 89.7 |
| Vegetable crops | Chinese cabbage | 94.8 | 95.3 | 92.7 | 93.4 | 91.5 | 90.8 | 93.4 | 93.8 | 92.7 | 94.3 |
| | Kale | 92.8 | 90.4 | 91.5 | 92.1 | 90.8 | 91.1. | 92.2 | 90.8 | 90.3 | 92.5 |
| | Mustard | 92.1 | 91.8 | 93.7 | 92.5 | 92.6 | 93.4 | 92.9 | 93.0 | 91.8 | 93.4 |
| | Lettuce | 93.1 | 94.2 | 94.4 | 93.1 | 94.1 | 90.3 | 92.1 | 93.4 | 92.2 | 94.5 |
| | Radish | 92.4 | 95.1 | 93.1 | 93.1 | 89.7 | 92.5 | 91.7 | 93.2 | 95.2 | 96.8 |
| | Tomato | 92.5 | 91.8 | 93.0 | 91.6 | 92.3 | 92.4 | 90.1 | 90.8 | 89.2 | 93.1 |
| | Eggplant | 90.1 | 89.5 | 93.1 | 90.3 | 91.5 | 89.4 | 88.5 | 89.4 | 85.7 | 93.0 |
| | Pumpkin | 75.2 | 79.4 | 85.4 | 80.5 | 89.3 | 81.4 | 80.2 | 79.2 | 81.2 | 92.2 |
| | Cucumber | 79.6 | 85.4 | 81.9 | 82.3 | 81.8 | 80.5 | 78.6 | 75.4 | 77.9 | 91.9 |
| Fruit | Watermelon | 82.1 | 83.1 | 80.1 | 81.4 | 85.9 | 88.4 | 80.1 | 79.2 | 74.6 | 93.5 |
| | Orange | 69.1 | 67.8 | 76.4 | 66.2 | 70.5 | 56.4 | 58.2 | 29.4 | 31.2 | 84.2 |
| | Sugar cane | 85.1 | 80.2 | 85.1 | 79.3 | 76.2 | 75.1 | 70.4 | 76.3 | 77.1 | 90.2 |
| Lawn | Manila | 75.2 | 71.5 | 79.4 | 70.3 | 69.5 | 68.4 | 65.1 | 76.3 | 71.5 | 80.4 |
| Chinese traditional medicinal crops | Corydalis yanhusuo | 80.3 | 79.5 | 83.1 | 83.1 | 86.1 | 80.8 | 78.4 | 76.1 | 79.0 | 89.4 |
| nursery stock | Camphor | 79.3 | 72.0 | 80.4 | 69.3 | 60.2 | 53.1 | 49.3 | 53.8 | 44.8 | 82.1 |
| Flowers | Chrysanthemum | 85.1 | 79.3 | 87.1 | 76.1 | 72.4 | 73.6 | 71.5 | 69.3 | 67.5 | 87.5 |
| Fiber plant | Cotton | 85.7 | 88.9 | 88.2 | 80.2 | 85.4 | 86.5 | 79.3 | 78.8 | 80.0 | 90.4 |
| Forage plants | Ryegrass | 95.2 | 93.4 | 98.4 | 90.2 | 92.1 | 88.7 | 85.1 | 89.9 | 86.7 | 98.7 |
| Weed density reduction of 21 weeds in total (%)* | | 95.2 | 96.3 | 98.7 | 98.9 | 97.5 | 95.6 | 95.8 | 96.7 | 95.3 | 0 |

| | | | | | | | | | | | |
|---|---|---|---|---|---|---|---|---|---|---|---|
| Note 1*: The 21 weeds tested included: crab grass, green foxtail, goosegrass, barnyardgrass, chinese sprangletop, difformed galingale, rice galingale, miliumlike fimbristylis, flatstalk bulrush, rush-like bulrush, eared redstem, climbing seedbox, yerbadetajo, redroot amaranth, lambsquarters, small goosefoot, indian rotala, japanese mazus, common day flower, sheathed monochoria, canada goldenrod. Note 2: All experiments in Table 9 were pot experiments under natural lighting conditions in greenhouses, the carrier was soil, and 21 kinds of weed seeds such as barnyardgrass, chinese sprangletop, eared redstem, climbing seedbox, difformed galingale were broadcasted on soil. The plant materials for covering were 9 kinds of plant materials such as un-dried oilseed rape straw with the average length of plant material of 1 cm. For each plant material, the survival rate of 26 target plants and weed control efficacy for 21 weeds was tested. The covering thickness of plant material is 0.6 cm, and the plant material layer was kept soaked in water for 3 days. Then, the water content of the plant material layer was kept to 100% of its saturated water content, and 26 target plants seeds such as rice were direct seeded on the surface of the plant material layer. After rice was planted, the water content of the plant material layer was maintained to 100% of its saturated water content. After the dryland plants are planted, the plant material is maintained at 40%~100% of its saturated water content, after the target plant root system penetrates down the plant material layer, the water content of the plant material is maintained at 10%-80% of its saturated water content. The survival rate of the target plants and weed control efficacy were investigated 21 days after planting the target plants. | | | | | | | | | | | |

The survival rate of 26 target plants in soil was tested in comparative examples.

In the process of planting the target plant in the present invention, a substance that can provide the nutrients required for the growth of the target plant is applied, which is referred to as "plant nutrition" for short. The methods of applying plant nutrition include but are not limited to applying below the plant material layer, in the middle of the plant material layer or mixing with the plant material layer, applying on the plant material layer, or mixing with the reproductive organs or roots of the target plant.

Further, the dosage of applying the plant nutrition as described above is mainly considered in combination with two factors. On one hand, the carbon-nitrogen ratio of the plant material is considered. A carbon-nitrogen ratio (C/N) of the plant material of 25:1 is more favorable for the microorganisms to decompose the plant material. If the carbon-nitrogen ratio of the plant material layer is too high, it is unfavorable for microorganisms to decompose the plant material, and the microorganisms will utilize nitrogen in the soil, thereby affecting the growth of target plants. In view of the fact that the carbon-nitrogen ratio of most of the plant materials is too high, when the covering thickness of the plant material layer is 0.5 cm, nitrogen should be supplemented for every 666.7 m², which is equivalent to 10-20 kg of urea, when the covering thickness of the plant material layer increases, the nitrogen that needs to be supplemented increases correspondingly.

On the other hand, the nutrients required for the early growth of the target plants is considered. The plant nutrients need to be supplemented before and/or after the target plants are planted, and 20-80 kg of compound fertilizer (N+P₂O₅+K₂O≥45%) should be applied per 666.7 m² area.

The above field test results show that the oilseed rape straw covering before direct seeding of rice in the present invention is safe for the emergence of rice and the growth of seedlings (the survival rate of seedlings is high), and can effectively control the harm of weeds in rice fields, which is an ideal new method for controlling weeds in paddy fields.

In order to compare the comprehensive efficacy of the present invention and the prior art, a large-scale test of 666.7 m² field was carried out. A comprehensive comparison between the present invention and the prior art is listed below, see Table 10.

**Table 10: Comparison of comprehensive effects between the present invention and the prior art**

| | | |
|---|---|---|
| | Example 43 | Comparative Example 12: |
| | The target plant is planted on the surface of the plant material layer | Method for controlling weeds in paddy field by mulching oilseed rape straw (refer to chinese patent CN106342612A) |
| Dosage of plant material | The oilseed rape straw fragments with the longest side of about 1 cm are used for the covering thickness of about 7.5 mm. Do not have to be dried. | The oilseed rape straw fragments with the longest side of about 1 cm are used for the mulching thickness of about 7.5 mm. Must be dried. |
| Preliminary preparation and plant material broadcasting | After the oilseed rape is harvested, the straw and weeds are directly crushed and broadcasted on the field on-site. Use mechanical methods to remove existing weeds in the field, and then irrigate to keep the straw moist. | After the oilseed rape is harvested, mechanical methods are used to remove the weeds already in the field. The straw is removed from the field, transported to other places, dried for several days, crushed and bagged, and stored for 5 to 12 days. 4∼7 days after the rice is planted, the straw will be artificially broadcasted to the paddy field. |
| Rice cultivation | No-tillage, direct seeding on the surface of the plant material layer 3 days after plant material covering | No-tillage, direct seeding on soil surface |
| Rice survival rate (%, 7 days after sowing) | 94.1 | 92.4 |
| Weed density reduction (%, 50 DAS) | 95.6 | 78.6 |
| Rice yield (kg/666.7 m²) | 632 | 576 |
| Labor cost (yuan/666.7 m²) | 1079 | 1619 (Straw bundling and handling, drying for several days, bagging after crushing, storage, and transporting back to the paddy field are about 3 more labors than the present invention. Calculated at 180 yuan per labor, the total increased cost is 540 yuan.) |
| Overall comparison | It is safe for rice, has ideal weeding efficacy, is easy to operate, saves farming time and labor, increases production and income, and has good benefits. The harvester can be used to complete the straw crushing and broadcasting in one step, and the efficiency is further greatly improved, representing the future development direction of the deep integration of green planting technology and mechanization. | It is somewhat safe for rice, and has somewhat ideal weeding efficacy, but the operation is cumbersome, and the straw crushing and broadcasting cannot be completed in one step by a harvester, which requires a lot of labor, high labor costs, and unsatisfactory comprehensive benefits. |

### The test results of the present invention to the survival rate of the target plant and the weed control efficacy are as follows:

| Item | Example | Example 44 | Example 45 | Example 46 | Example 47 | Example 48 | Example 49 |
|---|---|---|---|---|---|---|---|
| Plant material | Plant material | oilseed rape | oilseed rape | oilseed rape | oilseed rape | maize | soybean |
| | Average size of plant material (cm) | 3 | 2 | 2 | 1 | 1 | 3 |
| | Covering thickness(cm) | 0.3 | 12 | 3 | 9 | 0.6 | 0.8 |
| | covering period | 30 days | 30 days | 20 days | 20 days | 10 days | 10 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | lotus root | lotus root | lotus root | lotus root | Rice | Rice |
| | Planting method | direct seeding | direct seeding | direct seeding | direct seeding | direct seeding | direct seeding |
| | Planting location | on the surface of the material layer | on the surface of the material layer | in the material layer | in the material layer | on the surface of the material layer | on the surface of the material layer |
| | Water content after planting | 70% | infiltrated | 40% | 100% | 100% | 100% |
| | Time to maintain water content after planting | 5 days | 15 days | 5 days | 15 days | 5 days | 10 days |
| Survival state (10 days after the target plant is planted) | Survival rate (%) | 93 | 24 | 70 | 45 | 91 | 93 |
| Weed control efficacy (30 days after the target plant is planted) | Weed density reduction (%) | 89 | 100 | 100 | 100 | 95 | 96 |

| Item | Example | Example 50 | Example 51 | Example 52 | Example 53 | Example 54 | Example 55 |
|---|---|---|---|---|---|---|---|
| Plant material | Plant material | Rice | Wheat | Maize | Soybean | Rice | Wheat |
| | Average size of plant material (cm) | 2 | 1 | 2.5 | 1.5 | 0.5 | 0.2 |
| | Covering thickness(cm) | 1.2 | 1 | 2.5 | 2.8 | 1.2 | 2.4 |
| | covering period | 8 days | 8 days | 10 days | 10 days | 8 days | 8 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | Rice | Manchuri an wild rice (water bamboo) | Manchuri an wild rice (water bamboo) | Manchuri an wild rice (water bamboo) | Manchuri an wild rice (water bamboo) | Manchuri an wild rice (water bamboo) |
| | Planting method | direct seeding | direct seeding | direct seeding | direct seeding | direct seeding | direct seeding |
| | Planting location | on the surface of the material layer | on the surface of the material layer | In the material layer | In the material layer | In the material layer | In the material layer |
| | Water content after planting | infiltrated | infiltrated | 80% | 80% | 100% | 100% |
| | Time to maintain water content after planting | 5 days | 10 days | 5 days | 10 days | 5 days | 10 days |
| Survival state(10 days after the target plant is planted) | Survival rate (%) | 91 | 92 | 76 | 75 | 93 | 75 |
| Weed control efficacy (30 days after the target plant is planted) | Weed density reduction (%) | 100 | 100 | 100 | 100 | 100 | 100 |

| Item | Example | Example 56 | Example 57 | Example 58 | Example 59 | Example 60 | Example 61 |
|---|---|---|---|---|---|---|---|
| Plant material | Plant material | oilseed rape | oilseed rape | oilseed rape | oilseed rape | rice | wheat |
| | Average size of plant material (cm) | 3 | 2 | 2 | 1 | 3 | 2 |
| | Covering thickness(cm) | 0.3 | 12 | 3 | 9 | 0.6 | 2.5 |
| | Water content during covering period | soak | soak | soak | soak | soak | soak |
| | Way of covering | cover once | cover once | cover once | cover once | cover once | cover once |
| | covering period | 30 days | 30 days | 20 days | 20 days | 15 days | 15 days |
| | Water content immediately before planting the crop | infiltrated | infiltrated | infiltrated | infiltrated | infiltrated | infiltrated |
| | Target plant | Maize | Maize | Soybean | Soybean | Wheat | Wheat |
| | Planting method | direct seeding | direct seeding | direct seeding | direct seeding | direct seeding | direct seeding |
| | Planting location | on the surface of the material layer | on the surface of the material layer | In the material layer | In the material layer | on the surface of the material layer | on the surface of the material layer |
| | Water content after planting | 40% | 100% | 30% | 90% | 70% | 100% |
| | Water content after penetrating the material layer | 10% | 80% | 10% | 70% | 30% | 80% |
| | Time to maintain water content after planting | 5 days | 15 days | 9 days | 8 days | 5 days | 15 days |
| Survival state (10 days after the target plant is planted) | Survival rate (%) | 90 | 23 | 75 | 18 | 85 | 75 |
| Weed control efficacy (30 days after the target plant is planted) | Weed density reduction (%) | 90 | 100 | 100 | 100 | 97 | 100 |

| Item | Example | Example 62 | Example 63 | Example 64 | Example 65 | Example 66 | Example 67 |
|---|---|---|---|---|---|---|---|
| Plant material | Plant material | Maize | Soybean | Rice | Wheat | Maize | Soybean |
| | Average size of plant material (cm) | 1 | 3 | 2 | 1 | 2.2 | 2.8 |
| | Covering thickness (cm) | 2 | 1.8 | 1.2 | 1 | 1.2 | 0.8 |
| | covering period | 10 days | 10 days | 8 days | 8 days | 7 days | 7 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | oilseed rape | oilseed rape | Chinese cabbage | Chinese cabbage | watermel on | orchid |
| | Planting method | direct seeding | direct seeding | direct seeding | direct seeding | direct seeding | direct seeding |
| | Planting location | in the material layer | in the material layer | on the surface of the material layer | on the surface of the material layer | in the material layer | in the material layer |
| | Water content after planting | 30% | 90% | 70% | 100% | 30% | 90% |
| | Water content after penetrating the material layer | 20% | 70% | 30% | 80% | 20% | 70% |
| | Time to maintain water content after planting | 10 days | 8 days | 5 days | 15 days | 9 days | 12 days |
| Survival state (10 days after the target plant is planted) | Survival rate (%) | 76 | 77 | 83 | 86 | 86 | 82 |
| Weed control efficacy (30 days after the target plant is planted) | Weed density reduction (%) | 100 | 100 | 98 | 97 | 99 | 96 |

| Item | Example | Example 68 | Example 69 | Example 70 | Example 71 | Example 72 | Example 73 |
|---|---|---|---|---|---|---|---|
| Plant material | Plant material | oilseed rape | oilseed rape | sweet potato | oilseed rape | oilseed rape | oilseed rape |
| | Average size of plant material (cm) | 3 | 2 | 1 | 3 | 2 | 1 |
| | Covering thickness (cm) | 0.3 | 12 | 8 | 7 | 0.6 | 2.5 |
| | covering period | 30 days | 30 days | 25 days | 25 days | 20 days | 20 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrate d | infiltrate d |
| | Target plant | rice | rice | Manchuria n wild rice (water bamboo) | Manchuri an wild rice (water bamboo) | Manchu rian wild rice (water bamboo) | Manchu rian wild rice (water bamboo) |
| | Planting method | transplanti ng | transplanti ng | transplantin g | transplant ing | seedling placing | throwin g seedling |
| | Planting location | on the surface of the material layer | on the surface of the material layer | in the material layer | in the material layer | on the surface of the material layer | on the surface of the material layer |
| | Water content after planting | 70% | 4~5 cm depth of water level | 50% | 4~5 cm depth of water level | 1-2 cm depth of water level | 3-4 cm depth of water level |
| | Water content after 4 days | 30% | 7-8cm depth of water level | 20% | 5-6 cm depth of water level | 2~3 cm depth of water level | 4~5 cm depth of water level |
| Survival state(10 days after the target plant is planted) | Survival rate (%) | 96 | 21 | 56 | 62 | 95 | 87 |
| Weed control efficacy (30 days after the target plant is planted) | Weed density reduction (%) | 86 | 100 | 100 | 100 | 96 | 100 |

| Item | Example | Example 74 | Example 75 | Example 76 | Example 77 | Example 78 | Example 79 |
|---|---|---|---|---|---|---|---|
| Plant material | Plant material | rice | wheat | maize | soybean | rice | wheat |
| | Average size of plant material (cm) | 2.2 | 2.8 | 1.8 | 1.6 | 1.2 | 0.8 |
| | Covering thickness (cm) | 1.8 | 2 | 1.2 | 0.8 | 1.2 | 0.8 |
| | covering period | 15 days | 15 days | 10 days | 10 days | 8 days | 8 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | rice | rice | Manchuri an wild rice (water bamboo) | Manchuri an wild rice (water bamboo) | Manchuri an wild rice (water bamboo) | Manchuri an wild rice (water bamboo) |
| | Planting method | transplant ing | transplant ing | transplant ing | transplant ing | seedling placing | throwing seedling |
| | Planting location | in the material layer | in the material layer | on the surface of the material layer | on the surface of the material layer | in the material layer | in the material layer |
| | Water content after planting | 1-2 cm depth of water level | 3-4 cm depth of water level | 1-2 cm depth of water level | 3-4 cm depth of water level | 1-2 cm depth of water level | 1-3 cm depth of water level |
| | Water content after 5 days | 2∼3 cm depth of water level | 4∼5 cm depth of water level | 2∼3 cm depth of water level | 4∼5 cm depth of water level | 2∼3 cm depth of water level | 4∼5 cm depth of water level |
| Survival state (10 days after the target plant is planted) | Survival rate (%) | 84 | 86 | 92 | 92 | 91 | 92 |
| Weed control efficacy (30 days after the target plant is planted) | Weed density reduction (%) | 100 | 100 | 100 | 98 | 100 | 96 |

| Item | Example | Example 80 | Example 81 | Example 82 | Example 83 | Example 84 | Example 85 |
|---|---|---|---|---|---|---|---|
| Plant material | Plant material | oilseed rape | oilseed rape | oilseed rape | Peanut | oilseed rape | oilseed rape |
| | Average size of plant material (cm) | 3 | 2 | 1 | 3 | 2 | 1 |
| | Covering thickness (cm) | 0.3 | 12 | 8 | 7 | 0.6 | 2.5 |
| | covering period | 30 days | 30 days | 25 days | 25 days | 20 days | 20 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | maize | maize | soybean | soybean | wheat | wheat |
| | Planting method | transplant ing | transplant ing | transplant ing | transplant ing | seedling placing | throwing seedling |
| | Planting location | on the surface of the material layer | on the surface of the material layer | in the material layer | in the material layer | on the surface of the material layer | on the surface of the material layer |
| | Water content after planting | 100% | 1∼2 cm depth of water level | 50% | 100% | 100% | 1∼2 cm depth of water level |
| | Water content after 8 days | 30% | 90% | 30% | 80% | 30% | 90% |
| Survival state (10 days after the target plant is planted) | Survival rate (%) | 96 | 34 | 43 | 56 | 94 | 78 |
| Weed control efficacy (30 days after the target plant is planted) | Weed density reduction (%) | 88 | 100 | 100 | 100 | 96 | 100 |

| Item | Example | Example 86 | Example 87 | Example 88 | Example 89 | Example 90 | Example 91 |
|---|---|---|---|---|---|---|---|
| Plant material | Plant material | rice | wheat | maize | soybean | rice | wheat |
| | Average size of plant material (cm) | 2.2 | 2.8 | 1.8 | 1.6 | 1.2 | 0.8 |
| | Covering thickness (cm) | 1.8 | 2 | 1.2 | 0.8 | 1.2 | 0.8 |
| | covering period | 15 days | 15 days | 10 days | 10 days | 8 days | 8 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | oilseed rape | oilseed rape | chinese cabbage | chinese cabbage | watermel on | orchid |
| | Planting method | transplant ing | transplant ing | transplant ing | transplant ing | seedling placing | throwing seedling |
| | Planting location | in the material layer | in the material layer | on the surface of the material layer | on the surface of the material layer | in the material layer | in the material layer |
| | Water content after planting | 50% | 100% | 100% | 1-2 cm depth of water level | 50% | 100% |
| | Water content after 8 days | 30% | 80% | 30% | 90% | 30% | 80% |
| Survival state (10 days after the target plant is planted) | Survival rate (%) | 79 | 82 | 90 | 92 | 91 | 90 |
| Weed control efficacy (30 days after the target plant is planted) | Weed density reduction (%) | 100 | 100 | 100 | 98 | 100 | 95 |

| Item | Example | Example 92 | Example 93 | Example 94 | Example 95 | Example 96 | Example 97 |
|---|---|---|---|---|---|---|---|
| Plant material | Plant material | oilseed rape | oilseed rape | oilseed rape | oilseed rape | potato | oilseed rape |
| | Average size of plant material (cm) | 3 | 2 | 1 | 3 | 2 | 1 |
| | Covering thickness (cm) | 0.3 | 12 | 8 | 7 | 0.6 | 2.5 |
| | covering period | 30 days | 30 days | 25 days | 25 days | 20 days | 20 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | rice | rice | rice | rice | rice | rice |
| | Planting method | direct seeding | direct seeding | direct seeding | direct seeding | direct seeding | direct seeding |
| | Planting location | on the surface of the material layer | on the surface of the material layer | in the material layer | in the material layer | on the surface of the material layer | on the surface of the material layer |
| | Water content after planting | 100% | infiltrated | 70% | 100% | 100% | infiltrated |
| | Time to maintain water content after planting | 5 | 8 | 5 | 8 | 5 | 8 |
| Survival state (10 days after the target plant is planted) | Survival rate (%) | 92 | 21 | 26 | 30 | 92 | 78 |
| Weed control efficacy (30 days after the target plant is planted) | Weed density reduction (%) | 89 | 100 | 100 | 100 | 95 | 100 |

| Item | Example | Example 98 | Example 99 | Example 100 | Example 101 | Example 102 | Example 103 |
|---|---|---|---|---|---|---|---|
| Plant material | Plant material | rice | wheat | maize | soybean | rice | wheat |
| | Average size of plant material (cm) | 2.2 | 2.8 | 1.8 | 1.6 | 1.2 | 0.8 |
| | Covering thickness (cm) | 0.6 | 2.5 | 1.2 | 0.8 | 1.2 | 0.8 |
| | covering period | 15 days | 15 days | 10 days | 10 days | 8 days | 8 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | rice | rice | rice | rice | rice | rice |
| | Planting method | direct seeding | direct seeding | direct seeding | direct seeding | direct seeding | direct seeding |
| | Planting location | in the material layer | in the material layer | on the surface of the material layer | on the surface of the material layer | on the surface of the material layer | on the surface of the material layer |
| | Water content after planting | 80% | 100% | 100% | infiltrated | 80% | 100% |
| | Time to maintain water content after planting | 5 days | 8 days | 5 days | 8 days | 5 days | 8 days |
| Survival state (10 days after the target plant is planted) | Survival rate (%) | 91 | 79 | 91 | 92 | 90 | 92 |
| Weed control efficacy (30 days after the target plant is planted) | Weed density reduction (%) | 95 | 100 | 100 | 96 | 100 | 91 |

| Item | Example | Example 104 | Example 105 | Example 106 | Example 107 | Example 108 | Example 109 |
|---|---|---|---|---|---|---|---|
| Plant material | Plant material | oilseed rape | oilseed rape | oilseed rape | oilseed rape | oilseed rape | oilseed rape |
| | Average size of plant material (cm) | 3 | 2 | 1 | 3 | 2 | 1 |
| | Covering thickness (cm) | 0.3 | 12 | 8 | 7 | 0.6 | 2.5 |
| | covering period | 30 days | 30 days | 25 days | 25 days | 20 days | 20 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | rice | rice | rice | rice | rice | rice |
| | Planting method | transplant ing | transplant ing | transplant ing | transplant ing | seedling placing | throwing seedling |
| | Planting location | on the surface of the material layer | on the surface of the material layer | in the material layer | in the material layer | on the surface of the material layer | on the surface of the material layer |
| | Water content after planting | 70% | 4-5 cm depth of water level | 50% | 4-5 cm depth of water level | 1-2 cm depth of water level | 2-3 cm depth of water level |
| | Water content after 6 days of planting | 30% | 7-8 cm depth of water level | 20% | 5-6 cm depth of water level | 2-3 cm depth of water level | 4-5 cm depth of water level |
| Survival state (10 days after the target plant is planted) | Survival rate (%) | 89 | 21 | 24 | 28 | 90 | 78 |
| Weed control efficacy (30 days after the target plant is planted) | Weed density reduction (%) | 88 | 100 | 100 | 100 | 95 | 100 |

| Item | Example | Example 110 | Example 111 | Example 112 | Example 113 | Example 114 | Example 115 |
|---|---|---|---|---|---|---|---|
| Plant material | Plant material | rice | wheat | maize | soybean | rice | wheat |
| | Average size of plant material (cm) | 2.2 | 2.8 | 1.8 | 1.6 | 1.2 | 0.8 |
| | Covering thickness(cm) | 0.6 | 2.5 | 1.2 | 0.8 | 1.2 | 0.8 |
| | covering period | 15 days | 15 days | 10 days | 10 days | 8 days | 8 days |
| | Water content during covering period | soak | soak | soak | soak | soak | soak |
| | Way of covering | cover once | cover once | cover once | cover once | cover once | cover once |
| | Water content immediately before planting the crop | infiltrated | infiltrated | infiltrated | infiltrated | infiltrated | infiltrated |
| | Target plant | rice | rice | rice | rice | rice | rice |
| | Planting method | transplant ing | transplant ing | transplant ing | transplant ing | seedling placing | throwing seedling |
| | Planting location | in the material layer | in the material layer | on the surface of the material layer | on the surface of the material layer | on the surface of the material layer | on the surface of the material layer |
| | Water content after planting | 1-2 cm depth of water level | 3-4 cm depth of water level | 1-2 cm depth of water level | 3-4 cm depth of water level | 1-2 cm depth of water level | 2-3 cm depth of water level |
| | Water content after 5 days | 2-3 cm depth of water level | 4-5 cm depth of water level | 2-3 cm depth of water level | 4-5 cm depth of water level | 2-3 cm depth of water level | 4-5 cm depth of water level |
| Survival state (10 days after the target plant is planted) | Survival rate (%) | 92 | 82 | 91 | 93 | 92 | 91 |
| Weed control efficacy (30 days after the target plant is planted) | Weed density reduction (%) | 95 | 100 | 100 | 98 | 100 | 96 |

| Item | Example | Example 116 | Example 117 | Example 118 | Example 119 | Example 120 | Example 121 |
|---|---|---|---|---|---|---|---|
| Plant material | Plant material | oilseed rape | oilseed rape | oilseed rape | rice | wheat | maize |
| | Average size of plant material (cm) | 3 | 2 | 1 | 3 | 2 | 1 |
| | Covering thickness (cm) | 0.3 | 0.3 | 12 | 12 | 12 | 0.6 |
| | The first coverage as a percentage of the total mass | 80% | 90% | 30% | 50% | 70% | 80% |
| | covering period | 30 days | 30 days | 25 days | 25 days | 20 days | 20 days |
| | Water content during covering period | soak | soak | soak | soak | soak | soak |
| | Way of covering | cover twice | cover twice | cover twice | cover twice | cover twice | cover twice |
| | Water content immediately before planting the crop | infiltrated | infiltrated | infiltrated | infiltrated | infiltrated | infiltrated |
| | Target plant | rice | rice | rice | rice | rice | rice |
| | Planting method | direct seeding | direct seeding | direct seeding | direct seeding | direct seeding | direct seeding |
| | Planting location | on the surface of the material layer | on the surface of the material layer | in the material layer | in the material layer | on the surface of the material layer | on the surface of the material layer |
| | Water content after planting | 70% | 4∼5 cm depth of water level | 50% | 4∼5 cm depth of water level | 1∼2 cm depth of water level | 3∼4 cm depth of water level |
| | Water content after 8 days of planting | 30% | 7∼8 cm depth of water level | 20% | 5∼6 cm depth of water level | 2∼3 cm depth of water level | 4∼5 cm depth of water level |
| Survival state (10 days after the target plant is planted) | Survival rate (%) | 93 | 94 | 23 | 26 | 29 | 90 |
| Weed control efficacy (30 days after the target plant is planted) | Weed density reduction (%) | 88 | 87 | 100 | 100 | 100 | 96 |

| Item | Example | Example 122 | Example 123 | Example 124 | Example 125 | Example 126 | Example 127 |
|---|---|---|---|---|---|---|---|
| Plant material | Plant material | oilseed rape | oilseed rape | oilseed rape | soybean | rice | wheat |
| | Average size of plant material (cm) | 2.2 | 2.8 | 1.8 | 1.6 | 1.2 | 0.8 |
| | Covering thickness (cm) | 0.6 | 2.5 | 2.5 | 2.5 | 1.2 | 1.2 |
| | The first coverage as a percentage of the total mass | 90% | 30% | 50% | 70% | 40% | 95% |
| | covering period | 30 days | 30 days | 25 days | 25 days | 20 days | 20 days |
| | Water content during covering period | soak | soak | soak | soak | soak | soak |
| | Way of covering | cover twice | cover twice | cover twice | cover twice | cover twice | cover twice |
| | Water content immediately before planting the crop | infiltrated | infiltrated | infiltrated | infiltrated | infiltrated | infiltrated |
| | Target plant | rice | rice | rice | rice | rice | rice |
| | Planting method | transplant ing | transplant ing | transplant ing | transplant ing | seedling placing | throwing seedling |
| | Planting location | in the material layer | in the material layer | on the surface of the material layer | on the surface of the material layer | on the surface of the material layer | on the surface of the material layer |
| | Water content after planting | 1∼2 cm depth of water level | 3∼4 cm depth of water level | 1∼2 cm depth of water level | 3∼4 cm depth of water level | 1∼2 cm depth of water level | 2∼3 cm depth of water level |
| | Water content after 8 days of planting | 2∼3 cm depth of water level | 4∼5 cm depth of water level | 2∼3 cm depth of water level | 4∼5 cm depth of water level | 1∼2 cm depth of water level | 4∼5 cm depth of water level |
| Survival state (10 days after the target plant is planted) | Survival rate (%) | 92 | 86 | 82 | 78 | 91 | 90 |
| Weed control efficacy (30 days after the target plant is planted) | Weed density reduction (%) | 95 | 100 | 100 | 100 | 100 | 100 |

| Item | Example | Example 128 | Example 129 | Example 130 | Example 131 | Example 132 | Example 133 |
|---|---|---|---|---|---|---|---|
| Plant material | Plant material | oilseed rape | oilseed rape | oilseed rape | rice | wheat | maize |
| | Average size of plant material (cm) | 2.8 | 2.4 | 1.9 | 1.6 | 1.1 | 0.5 |
| | Covering thickness (cm) | 0.3 | 12 | 0.7 | 0.9 | 0.6 | 2.5 |
| | covering period | 10 days | 8 days | 8 days | 6 days | 15 days | 15 days |
| | Water content during covering period | 40% | 80% | soak | 60% | soak | 20% |
| | Way of covering | cover once | cover once | cover once | cover once | cover once | cover once |
| | Water content immediately before planting the crop | infiltrated | infiltrated | 30% | 70% | 100% | 100% |
| | Target plant | rice | maize | rice | soybean | rice | Chinese cabbage |
| | Planting method | direct seeding | direct seeding | direct seeding | transplant ing | throwing seedling | transplant ing |
| | Planting location | on the surface of the material layer | on the surface of the material layer | in the material layer | in the material layer | on the surface of the material layer | on the surface of the material layer |
| | Water content after planting | 70% | 100% | 50% | 60% | 80% | 80% |
| | Plant nutrition (g/m²) | urea 20 | urea 200 | urea 30 | urea 40 | urea 25 | urea 90 |
| | Applying timing of plant nutrients | 1 days after planting the target plant | 15 days after planting the target plant | 3 days after planting the target plant | 10 days after planting the target plant | 7 days after planting the target plant | 5 days after planting the target plant |
| Survival state (10 days after the target plant is planted) | Survival rate (%) | 37 | 78 | 79 | 92 | 93 | 82 |
| Weed control efficacy (30 days after the target plant is planted) | Weed density reduction (%) | 89 | 100 | 97 | 98 | 95 | 100 |

| Item | Example | Example 134 | Example 135 | Example 136 | Example 137 | Example 138 | Example 139 |
|---|---|---|---|---|---|---|---|
| Plant material | Plant material | oilseed rape | oilseed rape | oilseed rape | rice | wheat | maize |
| | Average size of plant material (cm) | 2.8 | 2.4 | 1.9 | 1.6 | 1.1 | 0.5 |
| | Covering thickness(cm) | 0.3 | 12 | 0.7 | 0.9 | 0.6 | 2.5 |
| | covering period | 10 days | 8 days | 8 days | 6 days | 15 days | 15 days |
| | Water content during covering period | 10% | 50% | 100% | 70% | infiltrated | 30% |
| | Way of covering | cover once | cover once | cover once | cover once | cover once | cover once |
| | Water content immediately before planting the crop | 50% | 70% | 100% | infiltrated | soak | 80% |
| | Target plant | rice | maize | rice | white gourd | rice | Cucumbe r |
| | Planting method | direct seeding | direct seeding | direct seeding | transplant ing | transplant ing | transplant ing |
| | Planting location | on the surface of the material layer | on the surface of the material layer | in the material layer | in the material layer | on the surface of the material layer | on the surface of the material layer |
| | Water content after planting | 70% | 100% | 50% | 0-1 cm depth of water level | 0-1 cm depth of water level | 90% |
| | Plant nutrition | - | - | urea 30 | - | - | urea 90 |
| | Application timing of plant nutrients | - | - | 5 days after planting the target plant | - | - | 8 days after planting the target plant |
| Survival state (10 days after the target plant is planted) | Survival rate (%) | 78 | 23 | 91 | 92 | 92 | 76 |
| Weed control efficacy (30 days after the target plant is planted) | Weed density reduction (%) | 88 | 100 | 97 | 97 | 97 | 100 |

| Item | Comparative example | Comparat ive Example 13 | Comparati ve Example 14 | Comparati ve Example 15 | Comparati ve Example 16 | Comparati ve Example 17 | Exampl e 18 |
|---|---|---|---|---|---|---|---|
| Plant material | Plant material | oilseed rape | oilseed rape | oilseed rape | oilseed rape | oilseed rape | oilseed rape |
| | Average size of plant material (cm) | 3 | 3 | 3 | 3 | 3 | 3 |
| | Covering thickness (cm) | 20 | 0.3 | 0.3 | 0.3 | 0.3 | 0.3 |
| | covering period | 30 days | 30 days | 30 days | 30 days | 30 days | 30 days |
| | Water content during covering period | soak | soak | soak | 10% | soak | soak |
| | Way of covering | cover once | cover once | cover once | cover once | cover once | cover once |
| | Water content immediately before planting the crop | infiltrated | infiltrated | 10% | infiltrated | infiltrated | infiltrat ed |
| | Target plant | rice | rice | rice | rice | rice | rice |
| | Planting method | direct seeding | direct seeding | direct seeding | direct seeding | direct seeding | direct seeding |
| | Planting location | on the surface of the material layer | on the surface of the material layer | on the surface of the material layer | on the surface of the material layer | on the surface of the material layer | on the surface of the material layer |
| | Water content after planting | 70% | 10% | 70% | 70% | 70% | 70% |
| | Time to maintain water content after planting | 5 days | 5 days | 5 days | 5 days | 2 days | 5 days |
| Survival state (10 days after the target plant is planted) | Survival rate (%) | 0 | 5 | 9 | 18 | 8 | 87 |
| Weed control efficacy (30 days after the target plant is planted) | Weed density reduction (%) | 100 | 25 | 50 | 45 | 65 | 43 |

| | | | | | | | |
|---|---|---|---|---|---|---|---|
| Note 1: The tested seven main weeds in the paddy fields include: barnyardgrass, chinese sprangletop, difformed galingale, rice galingale, eared redstem, climbing seedbox, yerbadetajo. Note 2: The pot experiment was carried out under natural light conditions in the greenhouse, the carrier was soil, the plant material was dry oilseed rape straw with an average length of 1 cm, and weed seeds were sprinkled on the soil surface. | | | | | | | |

Example 44 to Example 139 and Comparative Example 13 to Comparative Example 17: first place the plant material and then plant the target plant;

Comparative example 18 refers to the conditions of Chinese Patent CN106342612A, which firstly plants rice, and then broadcasts the plant material, and do not control the water content of the plant material after the broadcasting.

For the target plants planted in Examples 44∼139, the height of the initial stem-root differentiation point of the plant is greater than 2 mm.

Finally, it should also be noted that the above enumeration is only a specific Example of the present invention. Obviously, the present invention is not limited to the above Examples, and many modifications are possible. All deformations that those of ordinary skill in the art can directly derive or associate from the disclosure of the present invention shall be considered as the protection scope of the present invention.

The above are only preferred Examples of the present invention, and are not intended to limit the present invention in any other form, and any modifications or equivalent changes made according to the technical essence of the present invention still fall within the scope of protection of the present invention.

## Claims

1. A method for simultaneously controlling weeds and planting target plants by utilizing plant materials, comprising the following steps:
a. covering the carrier with the plant material with a thickness of 0.1-12 cm to form a plant material layer; preferably, the carrier is covered with plant material with a thickness of 0.3-8 cm; preferably, the covering thickness is 0.3-5 cm; preferably, the covering thickness is 0.6-3 cm; preferably, the covering thickness is 0.6-1.2 cm; preferably, the covering thickness is 0.6-1 cm; preferably, uniformly covering on the carrier with the plant material with a thickness of 0.1-12 cm;
controlling the water content of the plant material during covering period, immediately before planting, and after planting:
b. during the covering period, which is from covering the plant material layer to planting the target plant, the water content of the plant material is controlled to 1% or more of its saturated water content; preferably, the water content of the plant material is controlled to 50% of its saturated water content; preferably, the water content of the plant material is controlled to reach 100% of its saturated water content; preferably, the plant material is infiltrated; more preferably, the plant material is soaked in water;
c. planting the target plant on the surface of the plant material layer and/or in the plant material layer;
controlling water immediately before planting, which is the period within 1 day before planting the target plant, during which, the water content of the plant material is adjusted to 30% or more of its saturated water content; preferably the water content of the plant material is adjusted to 100% or more of its saturated water content; more preferably, the water content of the plant material is adjusted to achieve plant material infiltration; more preferably, the plant material is adjusted to having a water level not greater than 5 cm depth;
d. control water after planting:
1) when the target plant is an aquatic plant and the planting method is direct seeding, if the target plant is planted on the surface of the plant material layer, the water content of the plant material after planting is maintained at 70% of its saturated water content to that the plant material is infiltrated; if the target plant is planted in the plant material layer, the water content of the plant material after planting is maintained to 40% to 100% of its saturated water content;
2) when the target plant is a dryland plant and the planting method is direct seeding, if the target plant is planted on the surface of the plant material layer, the plant material after planting is maintained at 40% to 100% of its saturated water content; if the target plant is planted in the plant material layer, the water content of the plant material after planting is maintained to 30% to 90% of its saturated water content;
3) when the target plant is an aquatic plant and the planting method is migration-planting, if the target plant is planted on the surface of the plant material layer, the water content of the plant material after planting is maintained to 70% of its saturated water content to having a water level not greater than 5 cm depth; if the target plant is planted in the plant material layer, the water content of the plant material is maintained to from 50% of its saturated water content to having a water level not greater than 5 cm depth;
4) when the target plant is a dryland plant and the planting method is migration-planting, if the target plant is planted on the surface of the plant material layer, the water content of the plant material is maintained at 50% of its saturated water content to having a water level not greater than 2 cm depth; if the target plant is planted in the plant material layer, the water content of the plant material after planting is maintained to from 60% of its saturated water content to having a water level not greater than 2 cm depth;
preferably, in the plant material layer refers to the upper half of the plant material layer; more preferably, in the plant material layer refers to the upper 1/3 layer of the plant material;
preferably, the control of weeds refers to the control of the harmful effects of weeds to the growth of target plants according to the following standard: 10 days after taking measures to control weeds, and 15 days after the target plant is planted to before harvest, the weed density is less than 200 plants/m², the weed density reduction is ≥50% and less than 80%, or the weed fresh biomass reduction is ≥ 50% and less than 80%; more preferably, the control of weeds achieves effective weed control, and the effective weed control means that the harmful effects of weeds is effectively controlled, so that the normal growth of the target plant is not substantially affected or the harmful effects is relatively light according to the following standard: 10 days after taking measures to control weeds, and 15 days after the target plant is planted to before harvesting, the weed density is less than 100 plants/m², or the weed density reduction is ≥80% and less than 95%, or the weed fresh biomass reduction is ≥ 80% and less than 95%; more preferably, the control of weeds achieves complete weed control, which means that the harmful effects of weeds is completely controlled, so that the harmful effects to the target plant is very small according to the following standard: 10 days after taking measures to control weeds, and 15 days after the target plant is planted to before harvest, the weed density is less than 25 plants/m², or the weed density reduction is ≥95%, or the weed fresh biomass reduction is ≥ 95%.
preferably, the survival rate of the planted target plants is ≥10% and less than 50%; more preferably, the survival rate of the planted target plants is ≥50% and less than 75%; more preferably, the survival rate of the planted target plants is ≥75%;
preferably, when the target plant is planted with a reproductive organ, before the plant material is completely decomposed, the initial stem-root differentiation point of the target plant is visible to the naked eye in the plant material layer or higher than the plant material layer; after the seedling of the target plant emerges, the stem base point is in or above the plant material layer;
preferably, when the target plant is planted by seedling placings, throwing seedlings, or transplanting seedlings, before the plant material is completely decomposed, the stem base point of the target plant is visible to the naked eye in the plant material layer or higher than the plant material layer;
preferably, when planting the target plant, the target plant is visible to the naked eye on the surface of the plant material layer or in the plant material layer, and the reproductive organs of the weeds are located under the plant material layer;
preferably, after planting the target plant, if there are weeds, before the plant material is completely decomposed, it is visible to the naked eye that the initial stem-root differentiation point of 95% of the weeds is located under the plant material layer;
preferably, after planting the target plant, when the covering thickness of the plant material reaches 0.9 cm, when weeds emerge, it is visible to the naked eye that the initial stem-root differentiation point of 95% of the target plants is 0.5 cm or more higher than the initial stem-root differentiation point of the weeds, and/or within 25 days after the target plant is planted, the stem base point of 95% of the target plants is higher than the stem base point of weeds by 0.8 cm or more;
preferably, when the covering thickness of the plant material reaches 0.9 cm, and when the uniform covering of the plant material is completed, it is visible to the naked eye that, 95% of the carrier area is covered by the plant material, and the carrier (such as soil) cannot be seen.

2. The method according to claim 1, wherein in the process of planting the target plant, the step of applying plant nutrition is also included, the mode of applying is at least one selected from the group consisting of: applying under the plant material layer, applying in the middle of the plant layer, mixing with the plant material layer, applying on the top of the plant material layer, mixing with the reproductive organs of the target plant, mixing with the root system of the reproductive organs of the target plant.

3. The method according to claim 1 or claim 2, wherein the plant nutrient is applied 1~15 days after planting the target plant; preferably, 1~10 days after planting the target plant; preferably, 3-7 days after planting the target plant; preferably, the types of plant nutrients include but are not limited to urea, P₂O₅, K₂O, compound fertilizer, organic fertilizer, human excrement, manure, various composts, plant ash, and mixed fertilizer.

4. The method according to any one of claims 1~3, wherein, the plant material is derived from any plant, preferably any at least one of the following plants:
rice (*Oryza sativa* L.), wheat (*Triticum aestivum* L.), barley (*Hordeum vulgare* L.), maize (*Zea mays* L.), soybean (*Glycine max* (L.) Merr.), sweet potato (*Dioscorea esculenta* (Lour.) Burkill), potato (*Solanum tuberosum* L.), cotton (*Gossypium hirsutum* L.), flax (*Linum usitatissimum* L.), oilseed rape (*Brassica napus* L.), peanut (*Solanum melongena* L.), chili (*Capsicum annuum* L.), pumpkin (*Cucurbita moschata* (Duch. exLam.) Duch. ex Poiret), winter melon (*Benincasa hispida* (Thunb.) Cogn.), sugar cane (*Saccharum officinarum* L.), chinese milk vetch (*Astragalus sinicus* L.), sunflower (*Helianthus annuus* L.), green manure crop (hairy vetch).

5. The method according to any one of claims 1~3, wherein the plant material is turned into pieces and covered on the carrier, the size of the plant material is not greater than 300 cm; preferably, the size of the plant material is not greater than 200 cm; preferably, the size of the plant material is not greater than 10 cm; more preferably, the size of the plant material is not greater than 3 cm.

6. The method according to any one of claims 1~4, wherein the plant material is turned into pieces and covered on the carrier, the average size of the plant material is not greater than 300 cm; preferably, the average size of the plant material is not greater than 200 cm; preferably, the average size of the plant material is not greater than 10 cm; more preferably, the average size of the plant material is not greater than 3 cm.

7. The method according to any one of claims 1~5, wherein the covering period is 0 to 12 months; preferably, the covering period is 0-6 months; preferably, the covering period is 0~3 months; preferably, the covering period is 0 to 30 days; more preferably, the covering period is 0~10 days.

8. The method according to any one of claims 1~6, wherein the method of controlling water after planting is as follows:
1) when the target plant is an aquatic plant and the planting method is direct seeding, if the target plant is planted on the surface of the plant material layer, the time maintaining the water content of the plant material at from 70% of its saturated water content to that the plant material is infiltrated after planting is 5 to 15 days; if the target plant is planted in the plant material layer, the time for maintaining the water content of the plant material to at 40% to 100% of its saturated water content is 5 to 15 days after planting;
2) when the target plant is a dryland plant and the planting method is direct seeding, if the target plant is planted on the surface of the plant material layer, the water content of the plant material is maintained at 40% to 100% of its saturated water content after planting, after the target plant root penetrates down the plant material layer, maintaining the water content of the plant material at 10% to 80% of its saturated water content, preferably for 5 to 15 days; if the target plant is planted in the plant material layer, the water content of the plant material is maintained at 30% to 90% of its saturated water content after planting, after the target plant root system penetrates down the plant material layer, maintaining the water content of the plant material at 10% to 70% of its saturated water content;
3) when the target plant is an aquatic plant and the planting method is migration-planting, if the target plant is planted on the surface of the plant material layer, maintaining the water content of the plant material after planting to from 70% of its saturated water content to having a water level not greater than 5 cm depth, after 4 to 8 days, maintaining the water content of the plant material at from 30% of its saturated water content to having a water level not greater than 8 cm depth; if the target plant is planted in the plant material layer, maintaining the water content of the plant material at from 50% of its saturated water content to having a water level not greater than 5 cm depth, after 4 to 8 days, maintaining the water content of the plant material at from 20% of its saturated water content to having a water level not greater than 6 cm depth;
4) when the target plant is a dryland plant and the planting method is migration-planting, if the target plant is planted on the surface of the plant material layer, the water content of the plant material is maintained at from 50% of its saturated water content to having a water level not greater than 2 cm depth, after 4 to 8 days, maintaining the water content of the plant material at 10% to 90% of its saturated water content; if the target plant is planted in the plant material layer, maintaining the water content of the plant material at from 60% of its saturated water content to having a water level not greater than 2 cm depth, after 4-8 days, the water content of the plant material is maintained at 10%~80% of its saturated water content.

9. The method according to any one of claims 1~7, wherein if the plant material is derived from any at least one of maize, soybean, sweet potato, potato, cotton, flax, oilseed rape, peanut, chili, pumpkin, winter melon, sugar cane, and sunflower, the plant material is turned into pieces and cover the carrier, and the size of the plant material is not greater than 2 cm; preferably, the size of the plant material is not greater than 1 cm.

10. The method according to any one of claims 1~7, wherein if the plant material is derived from any at least one of maize, soybean, sweet potato, potato, cotton, flax, oilseed rape, peanut, chili, pumpkin, winter melon, sugar cane, and sunflower, the plant material is turned into pieces and covers the carrier, and the average size of the plant material is not greater than 2 cm; preferably, the average size of the plant material is not greater than 1 cm.

11. The method according to any one of claims 1~6, wherein if the plant material is derived from any at least one of rice, wheat, barley, chinese milk vetch, and green manure crop, the carrier is covered with the plant material that has been turned into pieces, and the size of the plant material is not greater than 10 cm; preferably, the size of the plant material is not greater than 5 cm; more preferably, the size of the plant material is not greater than 2 cm.

12. The method according to any one of claims 1~7, wherein if the plant material is derived from any at least one of rice, wheat, barley, chinese milk vetch, and green manure crop, covering the carrier with the plant material that has been turned into pieces, and the average size of the plant material is not greater than 10 cm; preferably, the average size of the plant material is not greater than 5 cm; more preferably, the average size of the plant material is not greater than 2 cm.

13. The method according to any one of claims 1~7, wherein if the plant material is derived from any at least one of maize, soybean, sweet potato, potato, cotton, flax, oilseed rape, peanut, chili, pumpkin, winter melon, sugar cane, and sunflower, the covering thickness is 0.2-8 cm; preferably, the covering thickness is 0.4-4 cm; preferably, the covering thickness is 0.5-3 cm; preferably, the covering thickness is 0.6-2 cm; preferably, the covering thickness is 0.6-1.5 cm; preferably, the covering thickness is 0.6-0.9 cm.

14. The method according to any one of claims 1∼7, wherein if the plant material is derived from any at least one of rice, wheat, barley, chinese milk vetch, and green manure crop, the covering thickness is 0.2-8 cm; preferably, the covering thickness is 0.3-4 cm; preferably, the covering thickness is 0.6-3 cm; preferably, the covering thickness is 0.8-2 cm; preferably, the covering thickness is 0.8-1.5 cm.

15. The method according to any one of claims 1∼6, wherein if the plant material is derived from any at least one of rice, wheat, barley, chinese milk vetch, and green manure crop, and the average size of the plant material is not greater than 1 cm, the covering thickness is 0.2-8 cm; preferably, the covering thickness is 0.3-4 cm; preferably, the covering thickness is 0.5-3 cm; preferably, the covering thickness is 0.6-2 cm; preferably, the covering thickness is 0.6-1.0 cm.

16. The method according to any one of claims 1∼7, wherein when the target plant is an aquatic plant and the planting method is direct seeding, the carrier is evenly covered with plant material with a thickness of 0.3-12 cm, the plant material is derived from at least one of oilseed rape, rice, wheat, maize, and soybean, and the average size of the plant material is not greater than 3 cm; during the covering period, the plant material is soaked in water, immediately before planting the target plant, the water content of the plant material is adjusted to achieve plant material infiltration; if the target plant is planted on the surface of the plant material layer, after planting, the time for maintaining the plant material at from 70% of its saturated water content to that the plant material is infiltrated is 5-15 days; if the target plant is planted in the plant material layer, the time for maintaining the water content of the plant material at 40%-100% of its saturated water content is 5-15 days after planting;
preferably, the covering thickness of the plant material is 0.6-2.5 cm, if the target plant is planted on the surface of the plant material layer, after planting, the time for maintaining the plant material at from 100% of its saturated water content to that the plant material is infiltrated is 5~10 days; if the target plant is planted in the plant material layer, after planting, the time for maintaining the water content of the plant material at 80%~100% of its saturated water content is 5~10 days, and the method can achieve complete weed control and the survival rate of the target plants is ≥75%;
preferably, the covering thickness of the plant material is 0.6-1.2 cm, and if the target plant is planted on the surface of the plant material layer, after planting, the time for maintaining the plant material at 100% of its saturated water content to that the plant material is infiltrated is 5~10 days; if the target plant is planted in the plant material layer, after planting, the time for maintaining the water content of the plant material at 80% to 100% of its saturated water content is 5~10 days, and the method can achieve complete weed control and the survival rate of the target plants is ≥80%.

17. The method according to any one of claims 1~7, wherein when the target plant is a dryland plant and the planting method is direct seeding, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material after planting is maintained at 40% to 100% of its saturated water content, after the target plant root penetrates down the plant material layer, maintaining the water content of the plant material at 10%~80% of its saturated water content, preferably for 5-15 days; if the target plant is planted in the plant material layer, the water content of the plant material after planting is maintained at 30%-90% of its saturated water content after planting, after the target plant root system penetrates down the plant material layer, maintaining the water content of the plant material at 10%~70% of its saturated water content;
preferably, the covering thickness of the plant material is 0.6-2.5 cm, if the target plant is planted on the surface of the plant material layer, the water content of the plant material after planting is maintained at 70%-100% of its saturated water content; after the target plant root penetrates down the plant material layer, maintaining the water content of the plant material at 30%~80% of its saturated water content, preferably for 5-15 days; if the target plant is planted in the plant material layer, the water content of the plant material after planting is maintained at 30%~90% of its saturated water content after planting, after the target plant root system penetrates down the plant material layer, the water content of the plant material is maintained at 20%~70% of its saturated water content, and the method can achieve complete weed control and the survival rate of the planted target plants is ≥75%;
preferably, the covering thickness of the plant material is 0.6-1.2 cm, if the target plant is planted on the surface of the plant material layer, the water content of the plant material after planting is maintained at 70%-100% of its saturated water content, after the target plant root penetrates down the plant material layer, maintaining the water content of the plant material at 30%~80% of its saturated water content, preferably for 5-15 days; if the target plant is planted in the plant material layer, the water content of the plant material after planting is maintained at 30%~90% of its saturated water content, after the target plant root system penetrates down the plant material layer, the water content of the plant material is maintained at 20%-70% of its saturated water content, and the method can achieve complete weed control and the survival rate of the planted target plants is ≥80%.

18. The method according to any one of claims 1~7, wherein when the target plant is aquatic plant and the planting method is migration-planting, the plant material is derived from at least one of oilseed rape, rice, wheat, maize, and soybean, and the average size of the plant material is not greater than 3 cm, uniformly covering the carrier by plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material after planting maintains at from 70% of its saturated water content to having a water level not greater than 5 cm depth, after 4-8 days, maintaining the water content of the plant material at 30% of its saturated water content to having a water level not greater than 8 cm depth; if the target plant is planted in the plant material layer, maintaining the water content of the plant material at 50% of its saturated water content to having a water level not greater than 5 cm depth, and after 4-8 days, maintaining the water content of the plant material at 20% of its saturated water content to having a water level not greater than 6 cm depth;
preferably, the covering thickness of the plant material is 0.6-2.5 cm, if the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level of 1-4 cm depth, after 4-8 days, the water content of the plant material is maintained at having a water level of 2-5 cm depth; the method can achieve complete weed control and the survival rate of the planted target plants is ≥75%;
preferably, the covering thickness of the plant material is 0.6-1.2 cm, if the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level not greater than 1-3 cm depth, after 4-8 days, the water content of the plant material is maintained at having a water level of 2-5 cm depth; the method can achieve complete weed control and the survival rate of the planted target plants is ≥80%.

19. The method according to any one of claims 1∼7, wherein when the target plant is a dryland plant and the planting method is migration-planting, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material is maintained at from 100% of its saturated water content to having a water level not greater than 2 cm depth, after 4-8 days, maintaining the water content of the plant material at 30%-90% of its saturated water content; if the target plant is planted in the plant material layer, maintaining the water content of the plant material at 50%~100% of its saturated water content, after 4-8 days, maintaining the water content of the plant material at 30%~80% of its saturated water content;
preferably, the covering thickness of the plant material is 0.6-2.5 cm, if the target plant is planted on the surface of the plant material layer, the water content of the plant material is maintained at from 100% of its saturated water content to having a water level not greater than 2 cm depth, after 4 to 8 days, maintaining the water content of the plant material to maintain 30% to 90% of its saturated water content; if the target plant is planted in the plant material layer, maintaining the water content of the plant material at 50% to 100% of its saturated water content, after 4 to 8 days, the water content of the plant material is maintained at 30% to 80% of its saturated water content, and the method can achieve complete weed control and the survival rate of the planted target plants is ≥75%;
preferably, the covering thickness of the plant material is 0.6-1.2 cm, if the target plant is planted on the surface of the plant material layer, the water content of the plant material is maintained at from 100% of its saturated water content to having a water level not greater than 2 cm depth, after 4 to 8 days, maintaining the water content of the plant material at 30% to 90% of its saturated water content; if the target plant is planted in the plant material layer, maintaining the water content of the plant material at 50% to 100% of its saturated water content, after 4 to 8 days, the water content of the plant material is maintained at 30% to 80% of its saturated water content, and the method can achieve complete weed control and the survival rate of the planted target plants is ≥80%.

20. The method according to any one of claims 1∼7, wherein when the target plant is rice and the planting method is direct seeding, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the time for maintaining the water content of the plant material after planting at from 100% of its saturated water content to that the plant material is infiltrated is 5-8 days; if the target plant is planted in the plant material layer, the time for maintaining the water content of the plant material after planting at 70%~100% of its saturated water content is 5-8 days;
preferably, the covering thickness of the plant material is 0.6-2.5 cm, and if the target plant is planted on the surface of the plant material layer, the time for maintaining the water content of the plant material at 100% of its saturated water content to that the plant material is infiltrated is 5-8 days; if the target plant is planted in the plant material layer, the time for maintaining the water content of the plant material after planting at 80% to 100% of its saturated water content is 5-8 days, and the method can achieve complete weed control and the survival rate of planted target plants is ≥75%;
preferably, the covering thickness of the plant material is 0.6-1.2 cm, and if the target plant is planted on the surface of the plant material layer, the time for maintaining the water content of the plant material after planting at 100% of its saturated water content to that the plant material is infiltrated is 5-8 days; if the target plant is planted in the plant material layer, the time for maintaining the water content of the plant material after planting at 80% to 100% of its saturated water content is 5-8 days, and the method can achieve complete weed control and the survival rate of planted target plants is ≥90%.

21. The method according to any one of claims 1∼7, wherein when the target plant is rice and the planting method is migration-planting, the plant material is derived from at least one of oilseed rape, rice, wheat, maize, and soybean, and the average size of the plant material is not greater than 3 cm, and the carrier is evenly covered with plant material with a thickness of 0.3-12 cm; during the covering period, the plant material is soaked in water, immediately before planting the target plant, the water content of the plant material is adjusted to achieve plant material infiltration; if the target plant is planted on the surface of the plant material layer, the water content of the plant material after planting maintains at from 70% of its saturated water content to having a water level not greater than 5 cm depth, after 4-8 days, maintaining the water content of the plant material at from 30% of its saturated water content to having a water level not greater than 8 cm depth; if the target plant is planted in the plant material layer, maintain the water content of the plant material at from 50% of its saturated water content to having a water level not greater than 5 cm depth, after 4-8 days, maintaining the water content of the plant material at from 20% of its saturated water content to having a water level not greater than 6 cm depth;
preferably, the covering thickness of the plant material is 0.6-2.5 cm, if the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level of 1-4 cm depth, after 4-8 days, the water content of the plant material is maintained at having a water level of 2-5 cm depth; the method can achieve complete weed control and the survival rate of the planted target plants is ≥75%;
preferably, the covering thickness of the plant material is 0.6-1.2 cm, if the target plant is planted on the surface of the plant material layer, the water content of the plant material after planting is having a water level of 1-4 cm depth, after 4-8 days, the water content of the plant material is maintained at having a water level of 2-5 cm depth; if the target plant is planted in the plant material layer, the water content of the plant material is maintained at having a water level not greater than 1-3 cm depth, after 4-8 days, the water content of the plant material is maintained at having a water level of 2-5 cm depth; the method can achieve complete weed control and the survival rate of the planted target plants is ≥90%.

22. The method according to any one of claims 1∼21, wherein: if the target plant is planted in the plant material layer, the carrier is covered with the plant material twice, and in the first time the carrier is covered with 30% or more of the total amount of the plant material; preferably, in the first time the carrier is covered with 50% or more of the total amount of plant material; preferably, in the first time the carrier is covered with 70% or more of the total amount of plant material; preferably, in the first time the carrier is covered with 80% or more of the total amount of plant material; preferably, in the first time the carrier is covered with 90% or more of the total amount of plant material.

23. The method according to any one of claims 1∼22, wherein the target plant is selected from at least one of: crops, fruit trees, commercial crops, flowers, nursery stocks, forest trees, lawns, and chinese traditional medicinal crops; it is preferably one or any two or more of: rice (*Oryza sativa* L.), wheat (*Triticum aestivum* L.), barley (*Hordeum vulgare* L.), maize (*Zea mays* L.), soybean (*Glycine max* (L.) Merr.), sweet potato (*Dioscorea esculenta* (Lour.) Burkill), cotton (*Gossypium* L.), flax (*Linum usitatissimum* L.), oilseed rape (*Brassica rapa* var. *oleifera* de Candolle), peanut (*Arachis hypogaea* L.), green vegetables (*Brassica rapa* var. *chinensis* (Linnaeus) Kitamura), radish (*Raphanus sativus* L.), mustard (*Brassica juncea* var. *tumida* Tsen & Lee), kale (*Brassica oleracea* var. *capitata* Linnaeus), broccoli (*Brassica oleracea* var. *botrytis* Linnaeus), tomato (*Lycopersicon esculentum* Miller), eggplant (*Solanum melongena* L.), chili (*Capsicum annuum* L.), pumpkin (*Cucurbita moschata* (Duch. Ex Lam.) Duch. ex Poiret), winter melon (*Benincasa hispida* (Thunb.) Cogn.), grape (*Vitis vinifera* L.), pear (*Pyrus* L.), tangerine (*Citrus reticulata* Blanco), apple (*Malus pumila* Mill.), peach (*Amygdalus persica* L.), rose (*Rosa rugosa* Thunb.), butterfly orchid (*Phalaenopsis aphrodite* H.G. Reichenbach), orchid (*Cymbidium* Sw.), osmanthus (*Osmanthus fragrans* (Thunb.) Loureiro), camphor (*Cinnamomum camphora* (L.) Presl), pine (*Pinus* L.), cedar (*Cunninghamia lanceolat*a (Lamb.) Hook.), Manila lawn (*Zoysia matrella* (L.) Merr.), honeysuckle (*Lonicera japonica* Thunb.), rhizoma Corydalis (*Corydalis yanhusuo* W. T. Wang), unibract fritillary bulb (*Fritillaria cirrhosa* D. Don).

24. The method according to any one of claims 1∼23, wherein the weeds are selected from at least one of Gramineae weeds, Cyperaceae weeds and broadleaf weeds; preferably, the Gramineae weeds include crab grass (*Digitaria sanguinalis* (L.) Scop.), green foxtail (*Setaria viridis* (L.) Beauv.), goosegrass (*Eleusine indica* (L.) Gaertn.), chinese sprangletop (*Leptochloa chinensis* (L.) Nees), barnyardgrass (*Echinochloa crus-galli* (L.) P. Beauv.), beardless barnyardgrass (*Echinochloa crus-galli* var. *mitis* (Pursh) Petermann), alkali barnyardgrass (*Echinochloa crus-galli* var. *zelayensis* (Kunth) Hitchcock), longawn barnyardgrass (*Echinochloa caudata* Roshev.), junglerice (*Echinochloa colona* (Linnaeus) Link), water barnyardgrass (*Echinochloa otyzoides* (Ard.) Flritsch.), japanese barnyardgrass (*Echinochloa crus-galli* var. *austrojaponensis* Ohwi);
preferably, the Cyperaceae weeds are selected from any one or more of the group consisting of: Nut-grass (*Cyperus rotundus* L.), difformed galingale (*Cyperus difformis* L.), miliumlike fimbristylis (*Fimbristylis littoralis* Grandich), Rice galingale (*Cyperus iria* L.), common bulrush (*Schoenoplectus triqueter* (Linnaeus) Palla), flatstalk bulrush (*Bolboschoenus planiculmis* (F. Schmidt) T. V. Egorova), Rush-like Bulrush (*Schoenoplectus tabernaemontani* (C. C. Gmelin) Palla), cow's hair-felt spikesedge (*Eleocharis yokoscensis* (Franchet & Savatier) Tang & F. T. Wang) , wallich bulrush (*Schoenoplectus wallichi i* (Nees) T. Koyama);
preferably, the broadleaf weeds are selected from any one or more of the group consisting of: copperleaf (*Acalypha australis* L.), redroot amaranth (*Amaranthus retroflexus* L.), lambsquarters (*Chenopodium album* L.), common day flower (*Commelina communis* L.), eared redstem (*Ammannia auriculata* Willdenow), manyflower ammannia (*Ammannia multiflora* Roxb.), valley redstem (*Ammannia coccinea* Rottboll), common ammannia (*Ammannia baccifera* L.), climbing seedbox (*Ludwigia prostrata* Roxb.), creeping waterprimrose (*Ludwigia adscendens* (L.) Hara), indian rotala (*Rotala indica* (Willd.) Koehne), roundleaf rotala (*Rotala rotundifolia* (Buch.-Ham. ex Roxb.) Koehne), procumbent false-pimperne (*Lindernia procumbens* (Krock.) Borbas), sheathed monochoria (*Monochoria vaginalis* (Burm. F.) Presl ex Kunth), pygmy arrowhead (*Sagittaria pygmaea* Miq.), yerbadetajo (*Eclipta prostrata* (L.) L.), korsakow monochoria (*Monochoria korsakowii* Regel et Maack), japanese mazus (*Mazus pumilus* (N. L. Burman) Steenis), triquetrous murdannia (*Murdannia triquetra* (Wall. ex C. B. Clarke) Bruckn.), distinct pondweed (*Potamogeton distinctus* A. Bennett), pepperwort (*Marsilea quadrifolia* L. Sp.), oldworld arrowhead (*Sagittaria trifolia* L.).

25. The method according to any one of claims 1~24, wherein the planting place of the target plant is any one or more of the places selected from a group consisting of: farmland, woodland, park, greenbelt, non-arable land, airport, wharf, bus station, train station, residential area, stadium, farm, on building, container, water body, and aerial place.
